(19) Europäisches Patentamt / European Patent Office / Office européen des brevets

(11) **EP 3 863 286 A1**

(12) **EUROPEAN PATENT APPLICATION**
published in accordance with Art. 153(4) EPC

(43) Date of publication:
    **11.08.2021 Bulletin 2021/32**

(21) Application number: **19869007.5**

(22) Date of filing: **18.09.2019**

(51) Int Cl.:
    **H04N 19/119** (2014.01)     **H04N 19/157** (2014.01)
    **H04N 19/186** (2014.01)     **H04N 19/70** (2014.01)

(86) International application number:
    **PCT/JP2019/036467**

(87) International publication number:
    **WO 2020/071113 (09.04.2020 Gazette 2020/15)**

(84) Designated Contracting States:
    **AL AT BE BG CH CY CZ DE DK EE ES FI FR GB GR HR HU IE IS IT LI LT LU LV MC MK MT NL NO PL PT RO RS SE SI SK SM TR**
    Designated Extension States:
    **BA ME**
    Designated Validation States:
    **KH MA MD TN**

(30) Priority: **02.10.2018 JP 2018187803**

(71) Applicant: **Sony Group Corporation**
    **Tokyo 108-0075 (JP)**

(72) Inventor: **KONDO Kenji**
    **Tokyo 108-0075 (JP)**

(74) Representative: **D Young & Co LLP**
    **120 Holborn**
    **London EC1N 2DY (GB)**

(54) **IMAGE PROCESSING DEVICE, METHOD, AND PROGRAM**

(57)    The present disclosure relates to an image processing apparatus, a method, and a program that can reduce delay that may possibly occur in intra prediction.
    An encoding apparatus excludes, when a CU split structure for luminance and a CU split structure for chroma are to be determined, for the CU split structure for chroma, a CU split structure that indicates a minimum size in at least one of a vertical direction or a horizontal direction to determine a CU split structure for the chroma, and encodes an image with the CU split structure for luminance and the CU split structure for chroma to generate an encoded stream. The present disclosure can be applied, for example, to an image processing apparatus.

FIG.5

## Description

[Technical Field]

The present disclosure relates to an image processing apparatus, a method, and a program, and particularly to an image processing apparatus, a method, and a program that can reduce delay that may possibly occur in intra prediction.

[Background Art]

In HEVC (High Efficiency Video Coding), a CU (Coding Unit) of chroma (Cb/Cr) is split into $4 \times 4$ (pixels). In WC (Versatile Video Coding), it is permitted to split a CU into a size of $4 \times 4$ for luminance (Y) and into a size of $2 \times 2$ for Cb/Cr (NPL 1).

[Citation List]

[Non Patent Literature]

[NPL 1]

Benjamin Bross, Jianle Chen, Shan Liu, "Versatile Video Coding (Draft 2)", JVET-K1001-v5, joint Video Experts Team (JVET) of ITU-T SG16 WP3 and ISO/IEC JTC1/SC29/WG11 11th Meeting: Ljubljana, SI, 10-18 July 2018

[Summary]

[Technical Problem]

Since splitting a CU into a size of $2 \times 2$ becomes possible a CU for Cb/Cr, the throughput of the CU having a size of $2 \times 2$ for Cb/Cr in intra prediction becomes bottleneck.

The present disclosure has been made in view of such a situation as described above and makes it possible to reduce delay that may possibly occur in intra prediction.

[Solution to Problem]

An image processing apparatus according to one aspect of the present disclosure includes a control section configured to exclude, when a CU split structure for luminance and a CU split structure for chroma are to be determined, for the chroma, a CU split structure that is a minimum size in at least one of a vertical direction or a horizontal direction to determine a CU split structure for the chroma, and an encoding section configured to encode an image with the CU split structure for luminance and the CU split structure for chroma to generate an encoded stream.

In the one aspect of the present disclosure, when a CU split structure for luminance and a CU split structure for chroma are to be determined, for the chroma, a CU split structure that is a minimum size in at least one of a vertical direction or a horizontal direction is excluded, and a CU split structure for the chroma is determined. Then, an image is encoded with the CU split structure for luminance and the CU split structure for chroma, and an encoded stream is generated.

An image processing apparatus of another aspect of the present disclosure includes a control section configured to exclude, when a CU split structure for luminance and a CU split structure for chroma are to be determined, for the chroma, a CU split structure that is a minimum size in at least one of a vertical direction or a horizontal direction to determine a CU split structure for the chroma and determine a CU split structure for the luminance and a CU split structure for the chroma on the basis of an encoded stream generated by encoding an image with the CU split structure for luminance and the CU split structure for chroma, and a decoding section configured to decode the encoded stream to generate the image on the basis of the CU split structure for luminance and the CU split structure for chroma.

In the another aspect of the present disclosure, when a CU split structure for luminance and a CU split structure for chroma are to be determined, for the chroma, a CU split structure that is a minimum size in at least one of a vertical direction or a horizontal direction is excluded, and a CU split structure for the chroma is determined. Further, a CU split structure for the luminance and a CU split structure for the chroma are determined on the basis of an encoded stream generated by encoding an image with the CU split structure for luminance and the CU split structure for chroma. Then, on the basis of the CU split structure for luminance and the CU split structure for chroma, the encoded stream is decoded, and the image is generated.

[Brief Description of Drawings]

[FIG. 1]

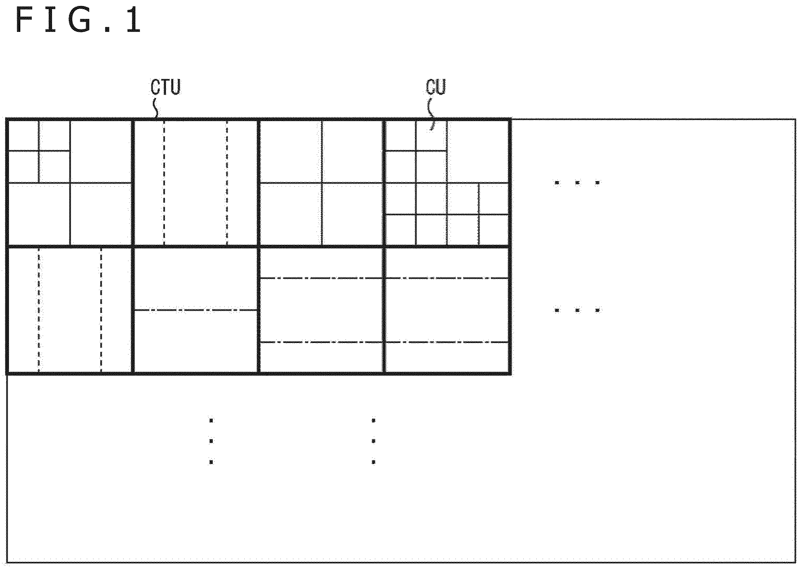

FIG. 1 is a view depicting an example of split of a CU that is an encoding unit.
[FIG. 2]

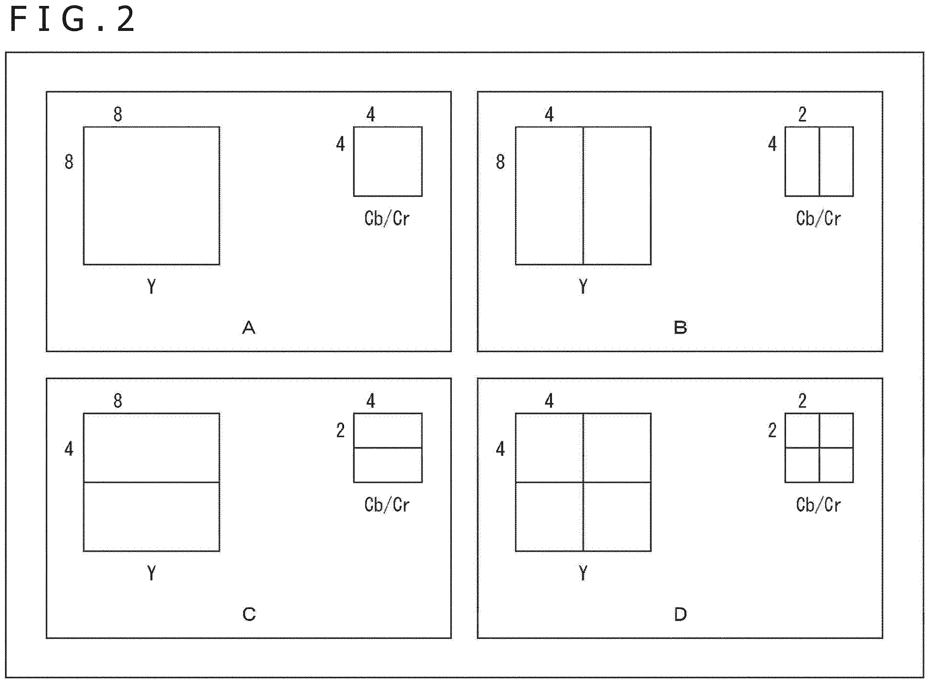

FIG. 2 depicts views depicting a split method of a CU.
[FIG. 3]

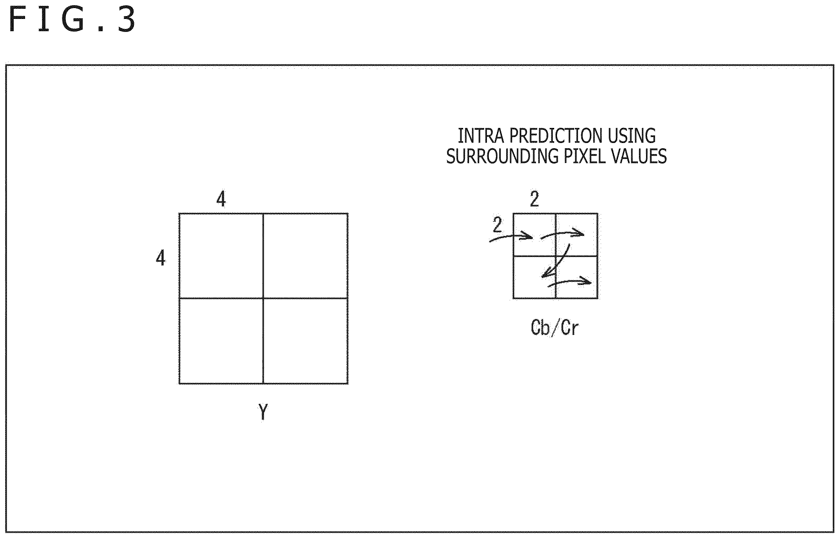

FIG. 3 is a view depicting an order of intra prediction in a case where a CU for Y has a size of $4 \times 4$ and a CU for Cb/Cr has a size of $2 \times 2$.
[FIG. 4]

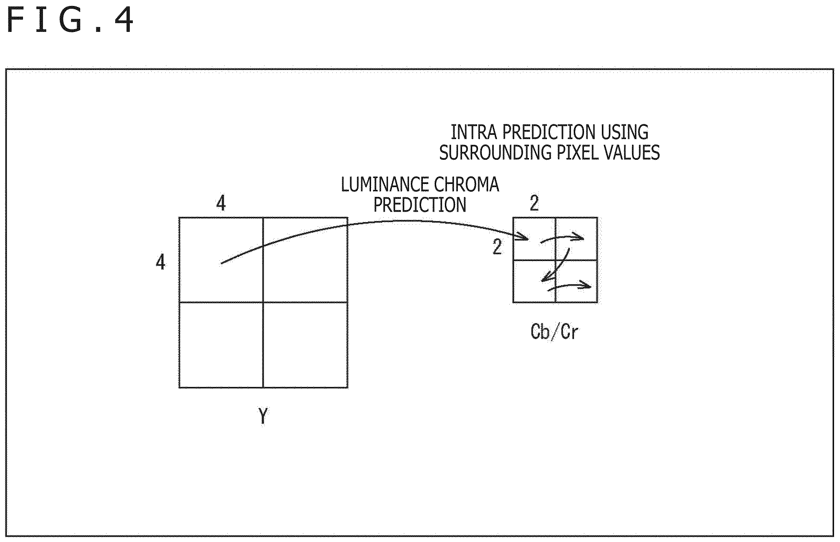

FIG. 4 is a view depicting an order of intra prediction in a case where luminance chroma prediction is performed for Y to Cb/Cr.
[FIG. 5]

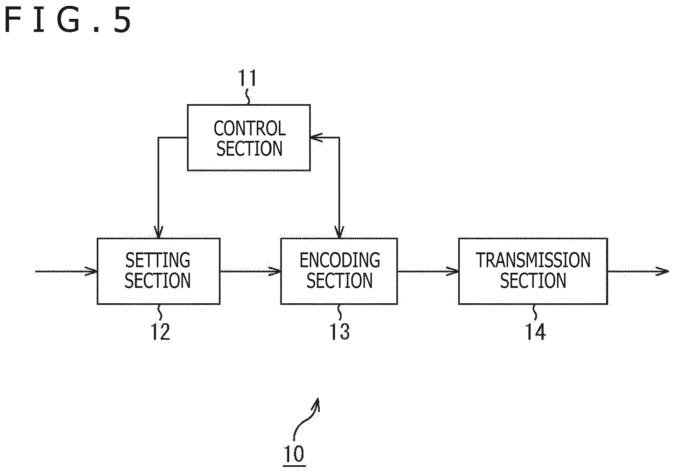

FIG. 5 is a block diagram depicting an example of a configuration of an embodiment of an encoding apparatus to which the present disclosure is applied.

[FIG. 6]

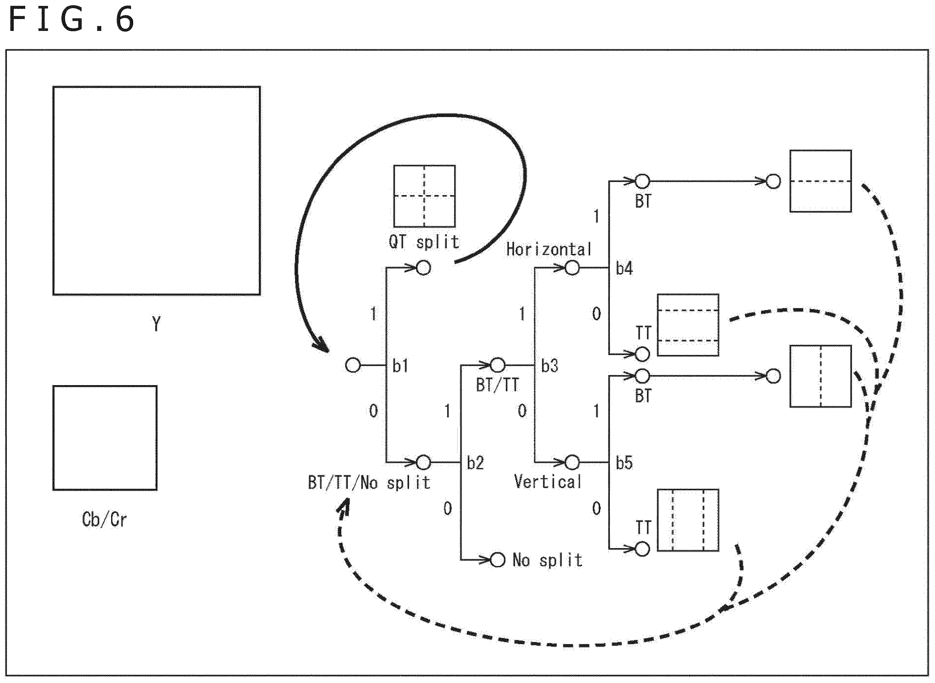

FIG. 6 is a view depicting an example of a tree for determining a split structure of a CU.
[FIG. 7]

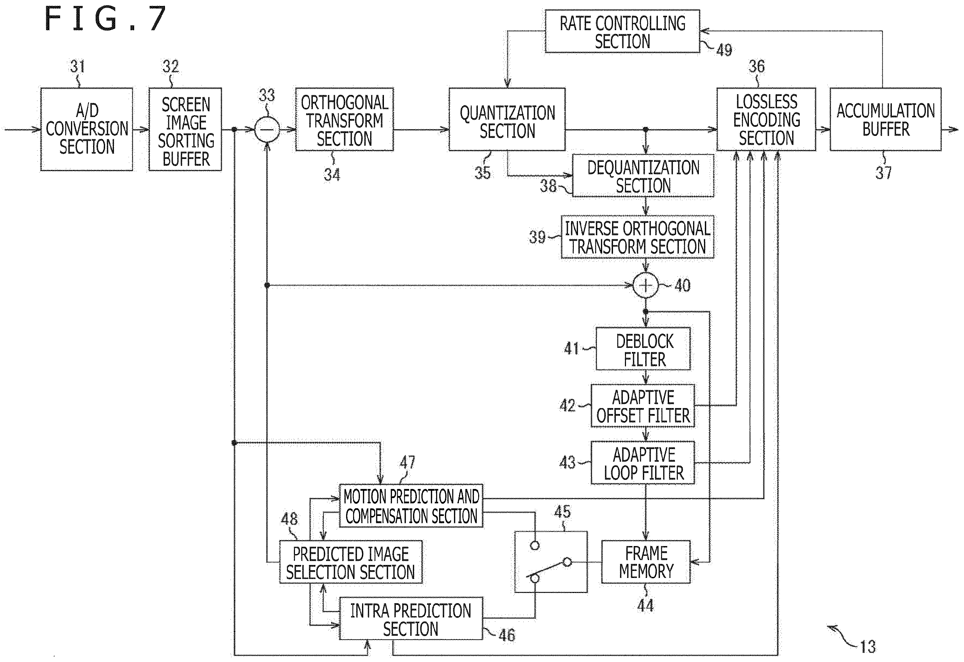

FIG. 7 is a block diagram depicting an example of a configuration of an encoding section of FIG. 5.
[FIG. 8]

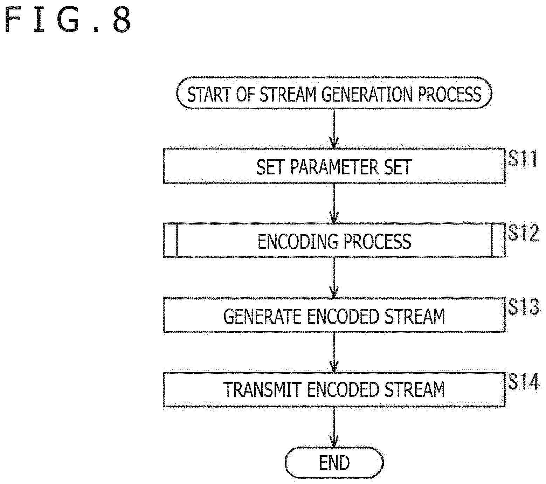

FIG. 8 is a flow chart illustrating a stream generation process of the encoding apparatus of FIG. 5.
[FIG. 9]

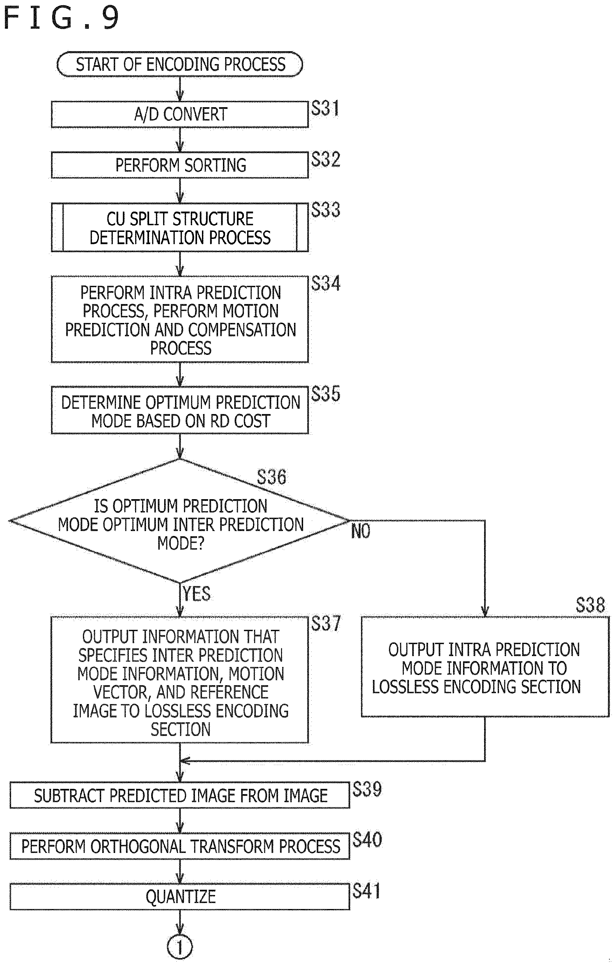

FIG. 9 is a flow chart illustrating details of an encoding process in step S12 of FIG. 8.
[FIG. 10]

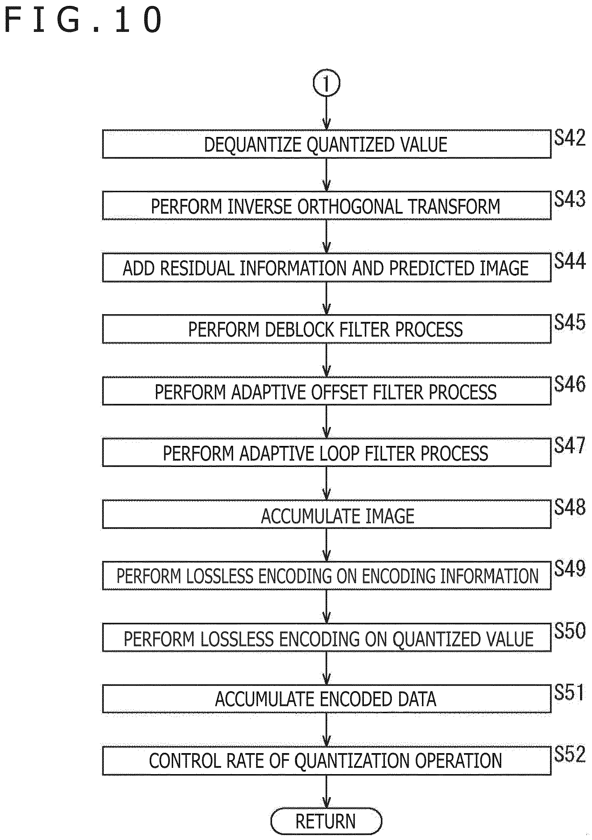

FIG. 10 is a flow chart illustrating details of the encoding process in step S12 of FIG. 8, continued from FIG. 9.
[FIG. 11]

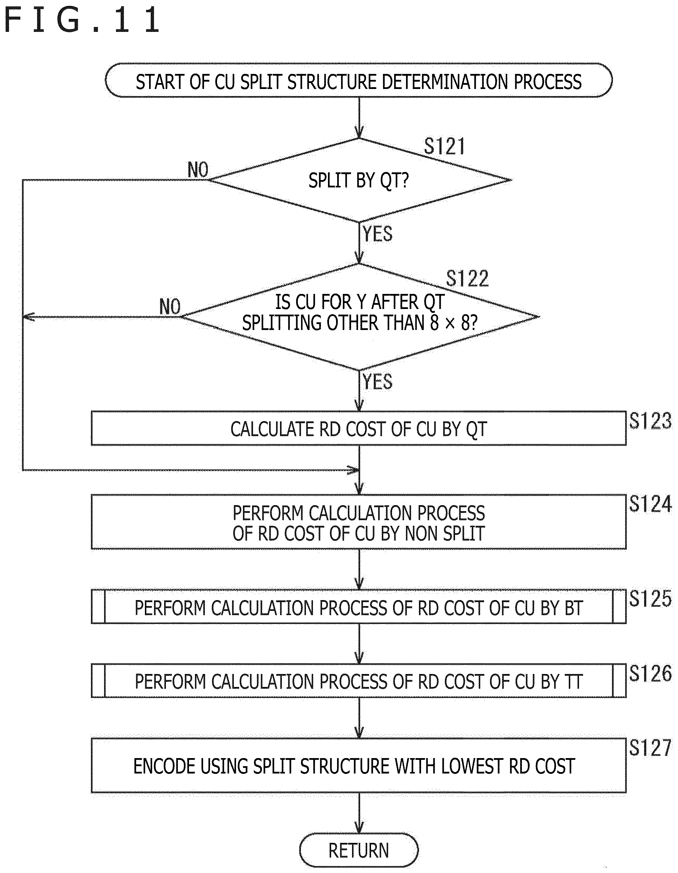

FIG. 11 is a flow chart illustrating details of a CU split structure determination process in step S33 of FIG. 9.
[FIG. 12]

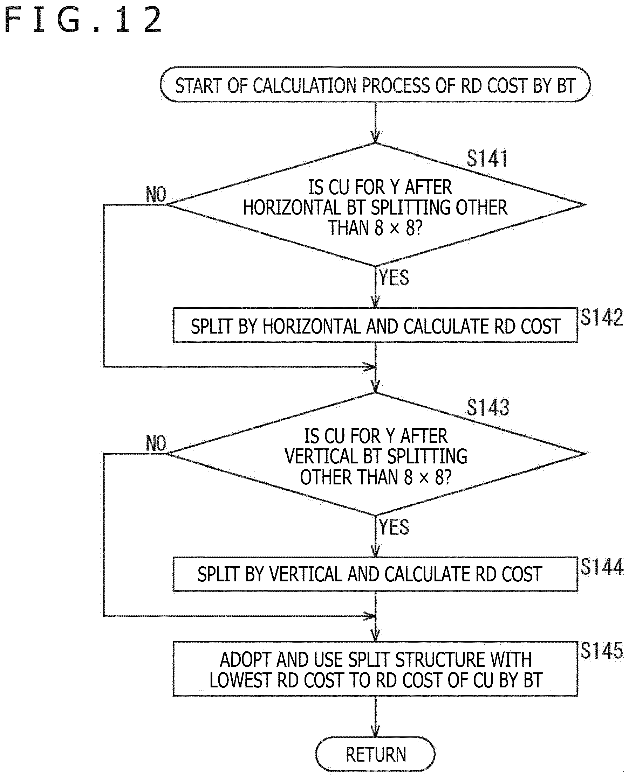

FIG. 12 is a flow chart illustrating details of a calculation process of an RD cost of a BT in step S125 of FIG. 11.
[FIG. 13]

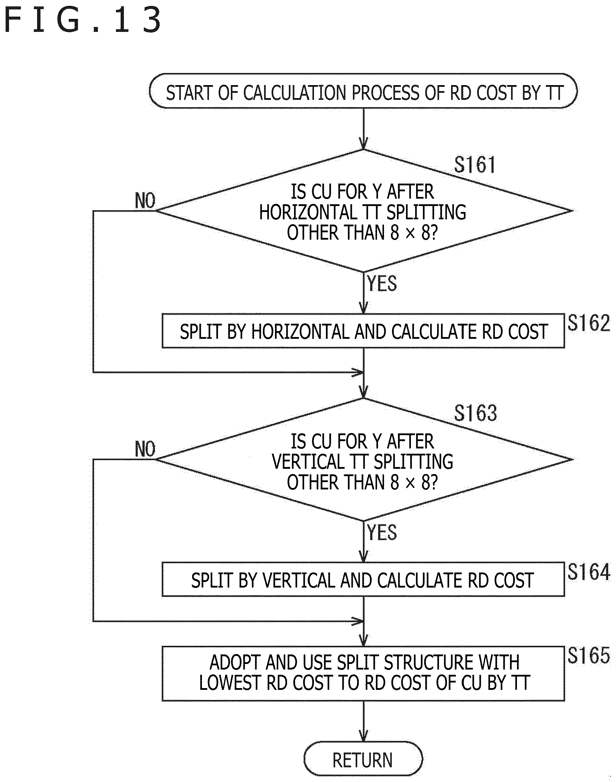

FIG. 13 is a flow chart illustrating details of a calculation process of an RD cost of a TT in step S126 of FIG. 11.
[FIG. 14]

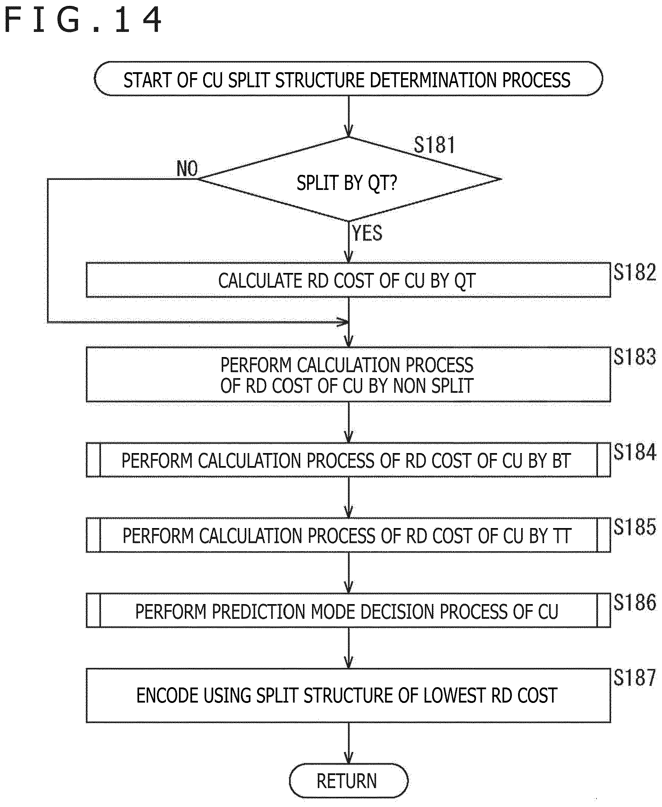

FIG. 14 is a flow chart illustrating another example of a CU split structure determination process in step S33 of FIG. 9.
[FIG. 15]

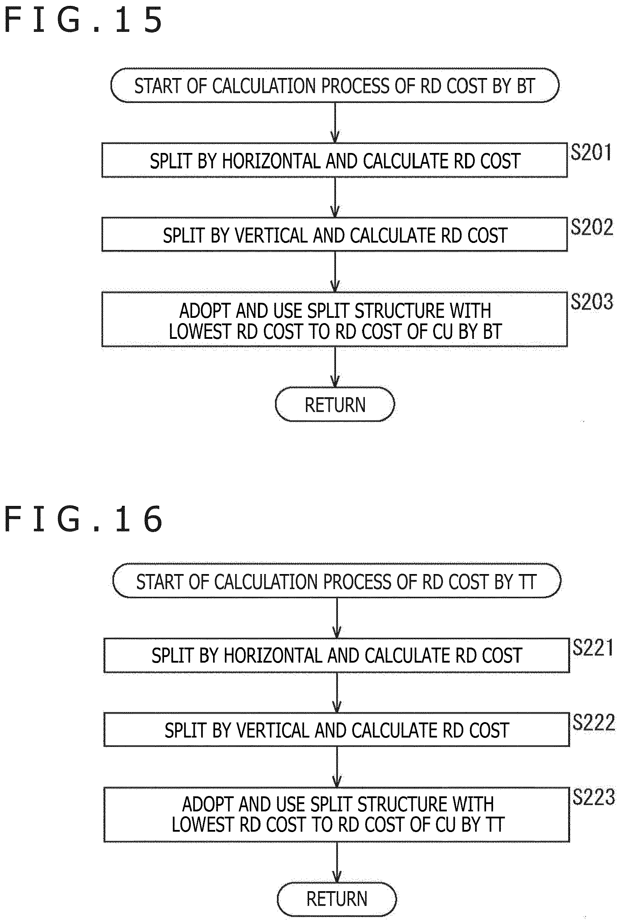

FIG. 15 is a flow chart illustrating details of a calculation process of an RD cost of a BT in step S184 of FIG. 14.
[FIG. 16]
FIG. 16 is a flow chart illustrating details of a calculation process of an RD cost of a TT in step S185 of FIG. 14.
[FIG. 17]

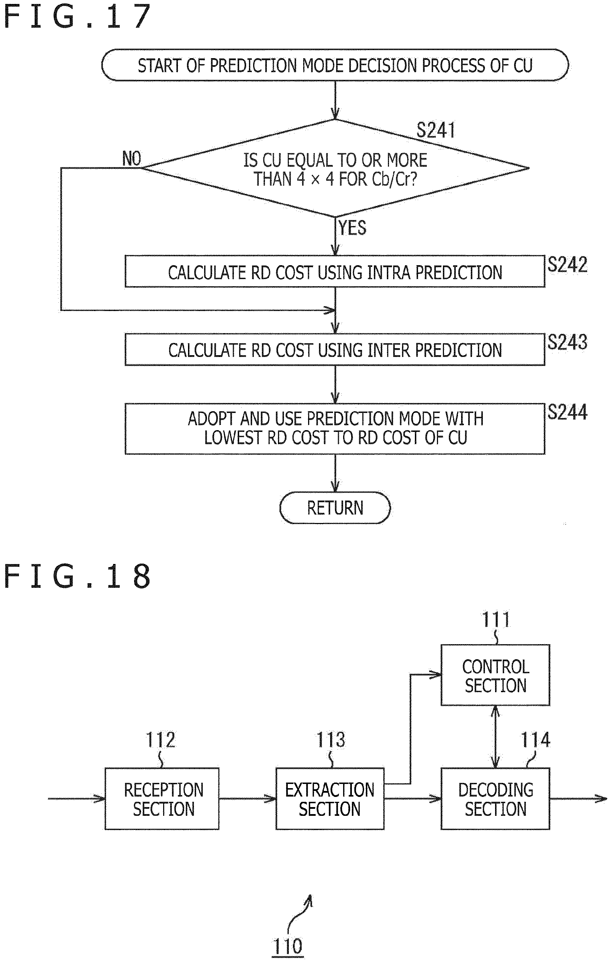

FIG. 17 is a flow chart illustrating details of a prediction mode decision process of a CU in step S186 of FIG. 14.
[FIG. 18]
FIG. 18 is a block diagram depicting an example of a configuration of an embodiment of a decoding apparatus to which the present disclosure is applied.
[FIG. 19]

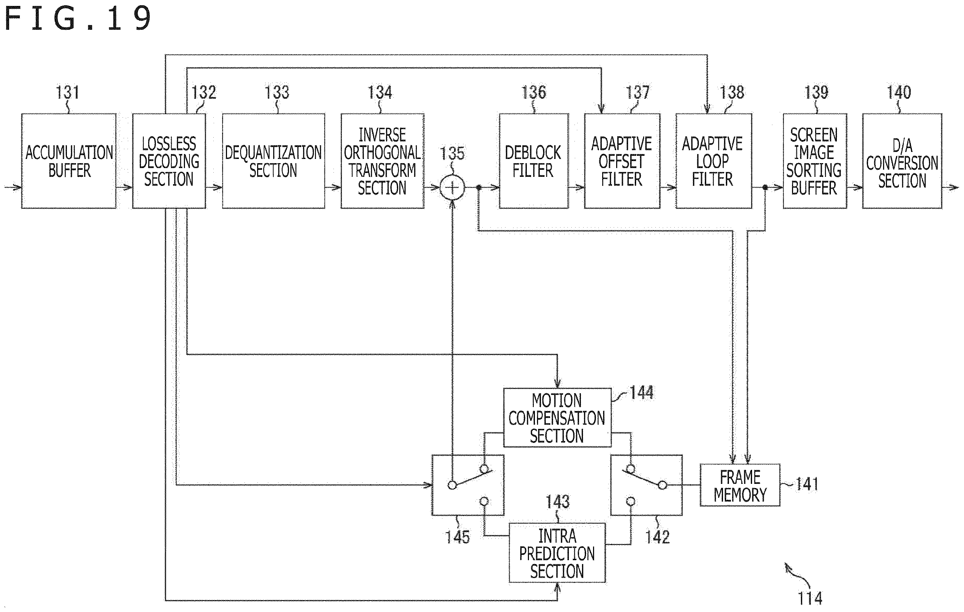

FIG. 19 is a block depicting an example of a configuration of a decoding section of FIG. 18.
[FIG. 20]

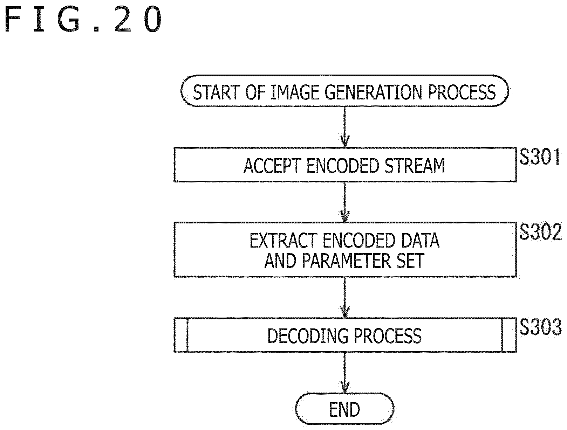

FIG. 20 is a flow chart illustrating an image generation process of the decoding apparatus of FIG. 18.
[FIG. 21]

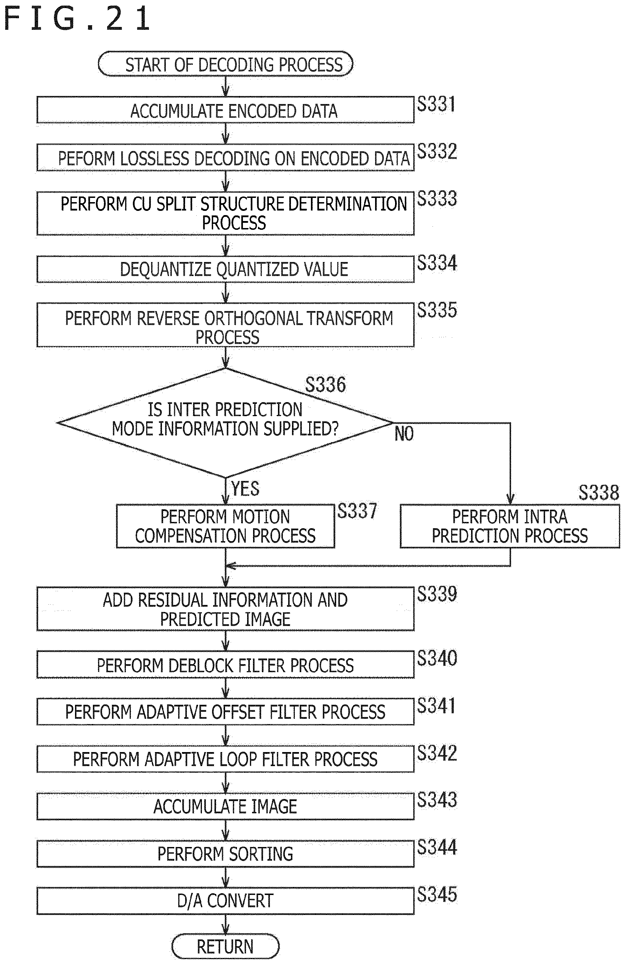

FIG. 21 is a flow chart illustrating details of a decoding process in step S303 of FIG. 20.
[FIG. 22]

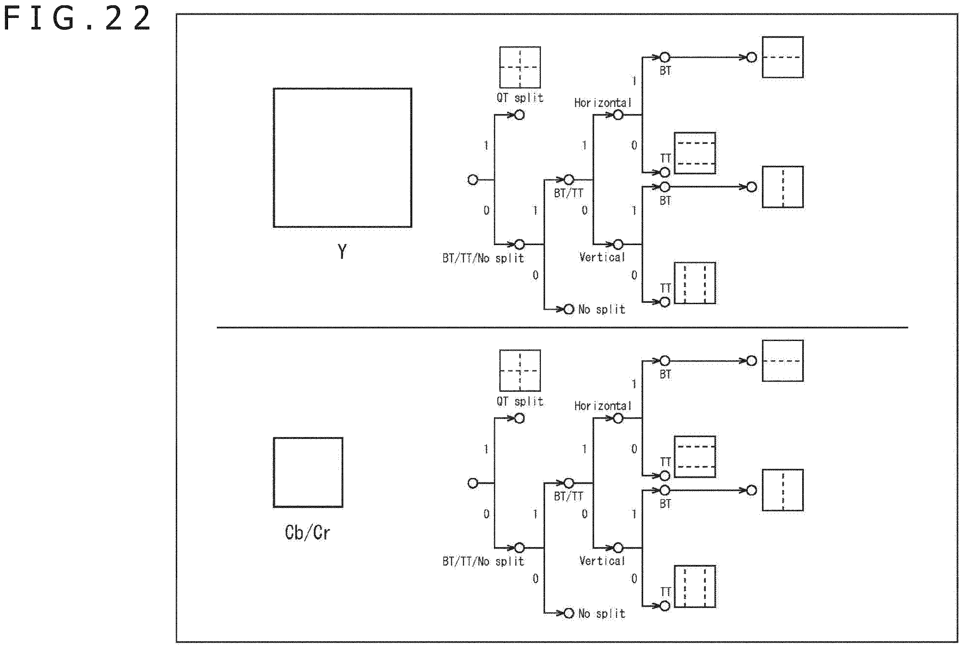

FIG. 22 is a view depicting an example of a separate tree.
[FIG. 23]

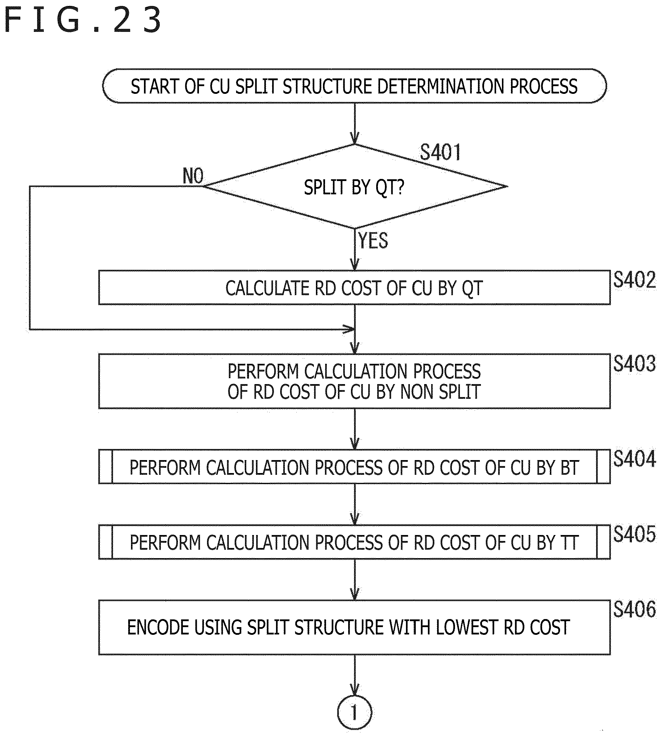

FIG. 23 is a flow chart illustrating another example of the CU split structure determination process in step S33 of FIG. 9.
[FIG. 24]

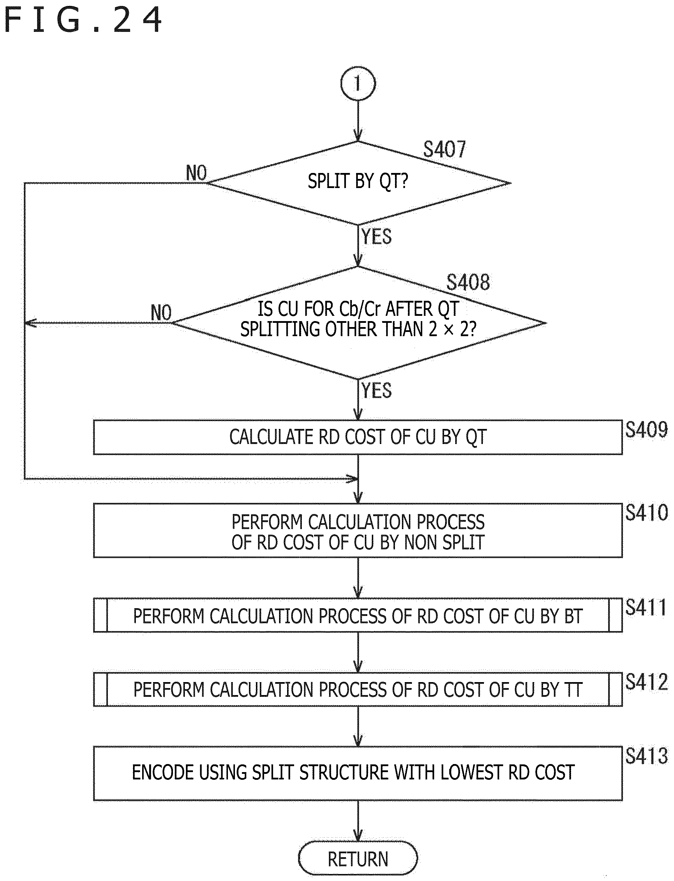

FIG. 24 is a flow chart illustrating the different example of the CU split structure determination process in step S33 of FIG. 9, continued from FIG. 23.
[FIG. 25]

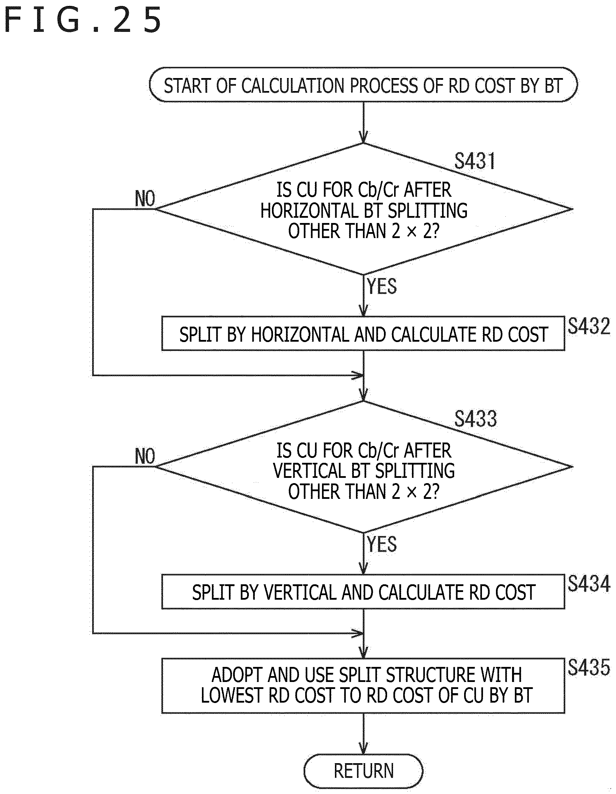

FIG. 25 is a flow chart illustrating details of a calculation process of an RD cost of a BT in step S411 of FIG. 24.
[FIG. 26]

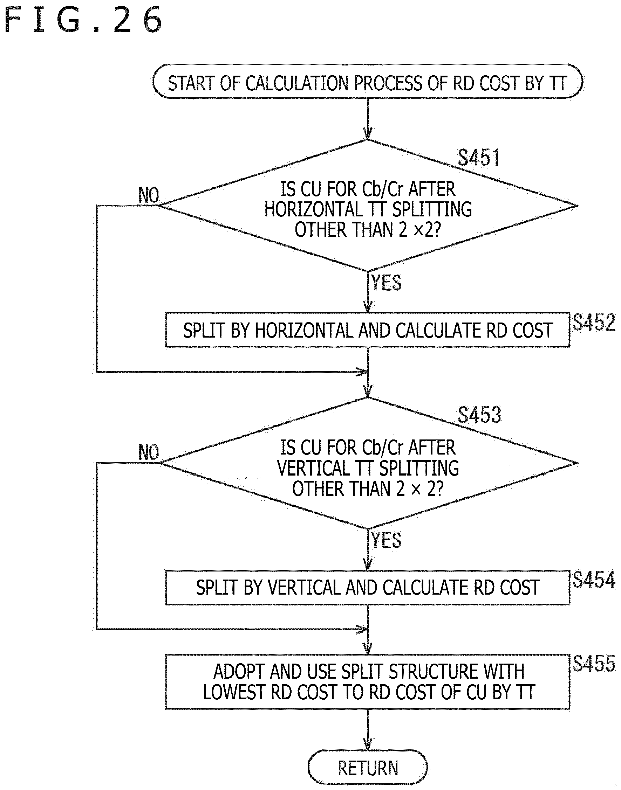

FIG. 26 is a flow chart illustrating details of a calculation process of an RD cost of a TT in step S412 of FIG. 24.
[FIG. 27]

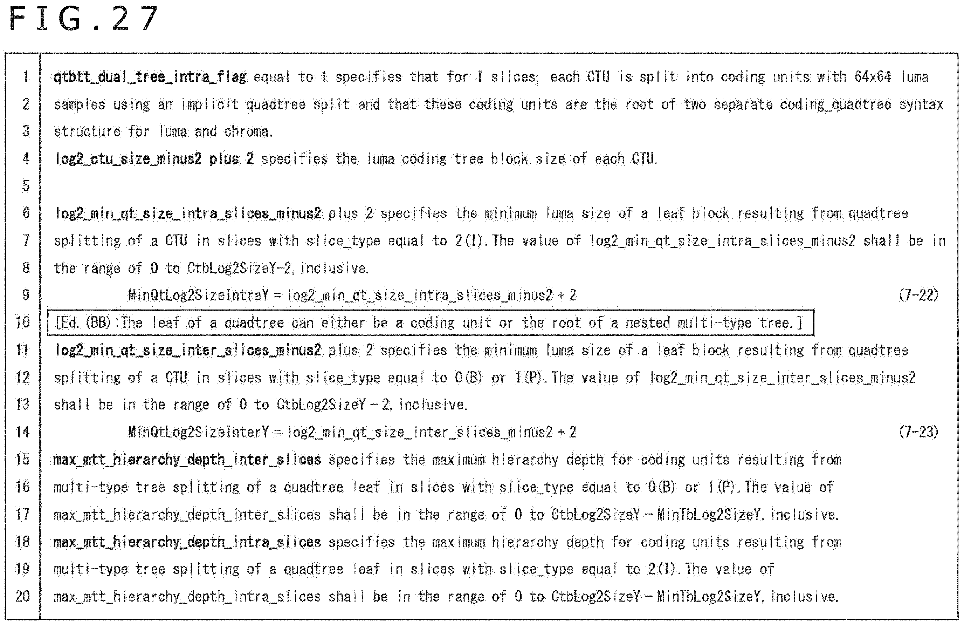

FIG. 27 is a view depicting an example of semantics regarding the separate tree.
[FIG. 28]

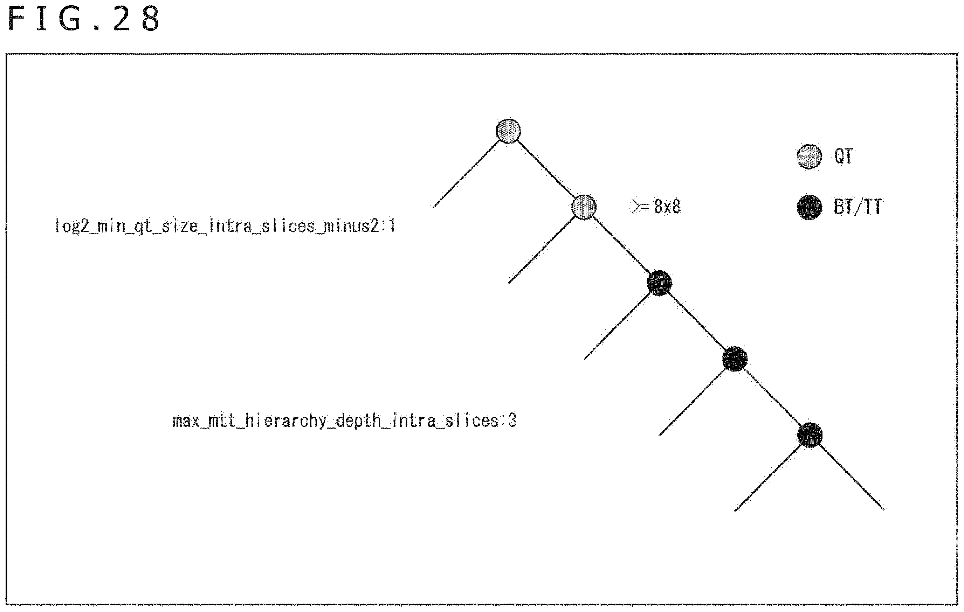

FIG. 28 is a view depicting an example of a split structure of a CU capable of being controlled using the information regarding FIG. 27.
[FIG. 29]

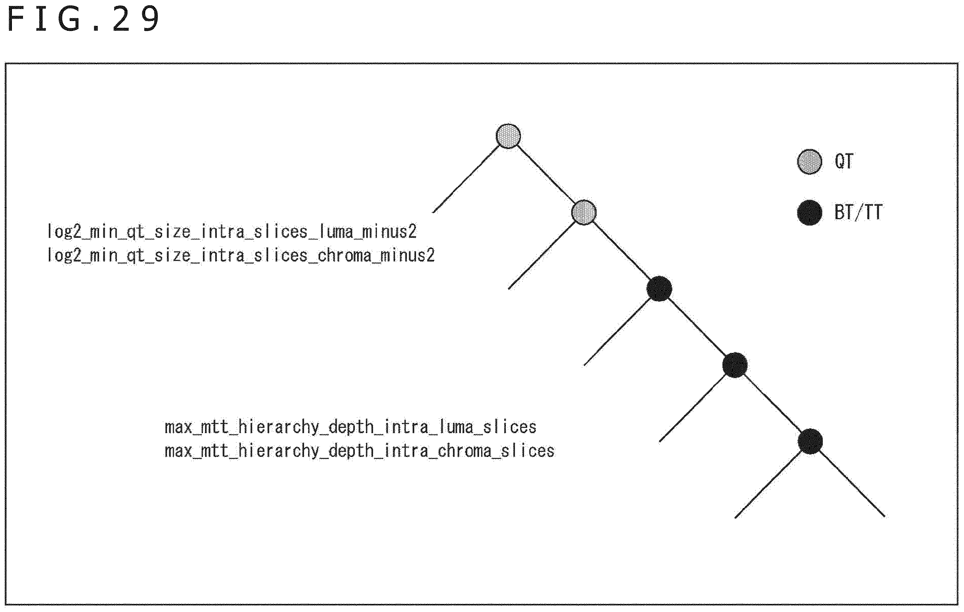

FIG. 29 is a view depicting an example in which only a CU for Cb/Cr has a minimum size of $4 \times 4$, using the information regarding FIG. 27.
[FIG. 30]

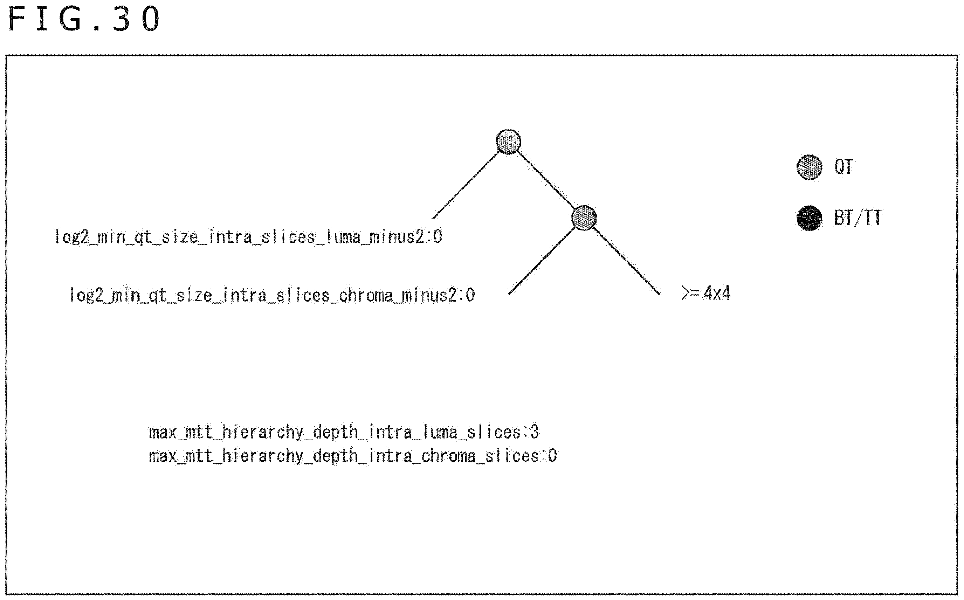

FIG. 30 is a view depicting an example in which the minimum size of QT splitting of Cb/Cr is 0.
[FIG. 31]

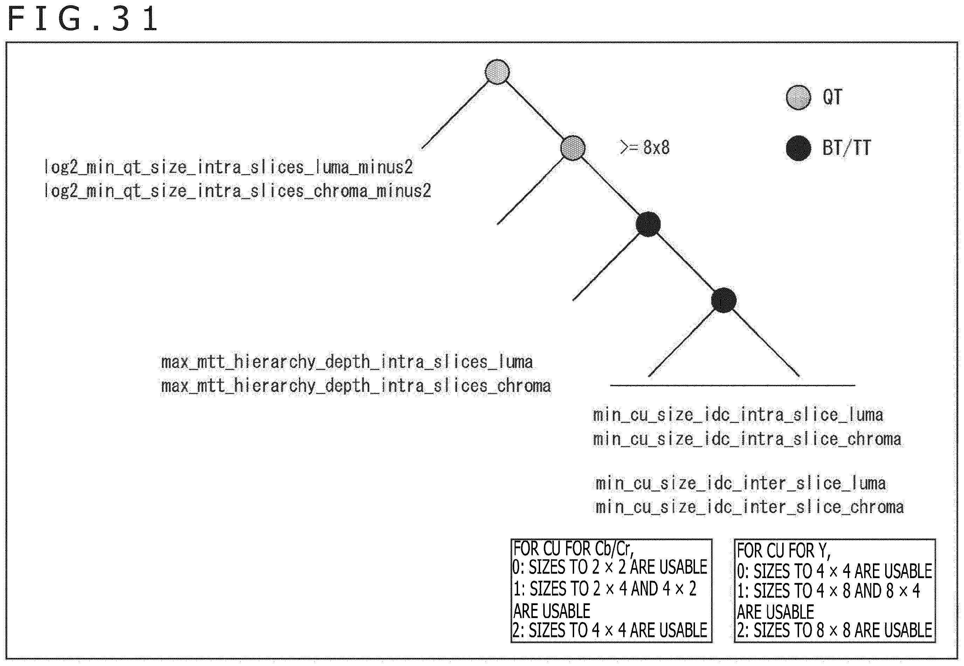

FIG. 31 is a view depicting an example of a split structure of a CU for Cb/Cr set with new information.
[FIG. 32]

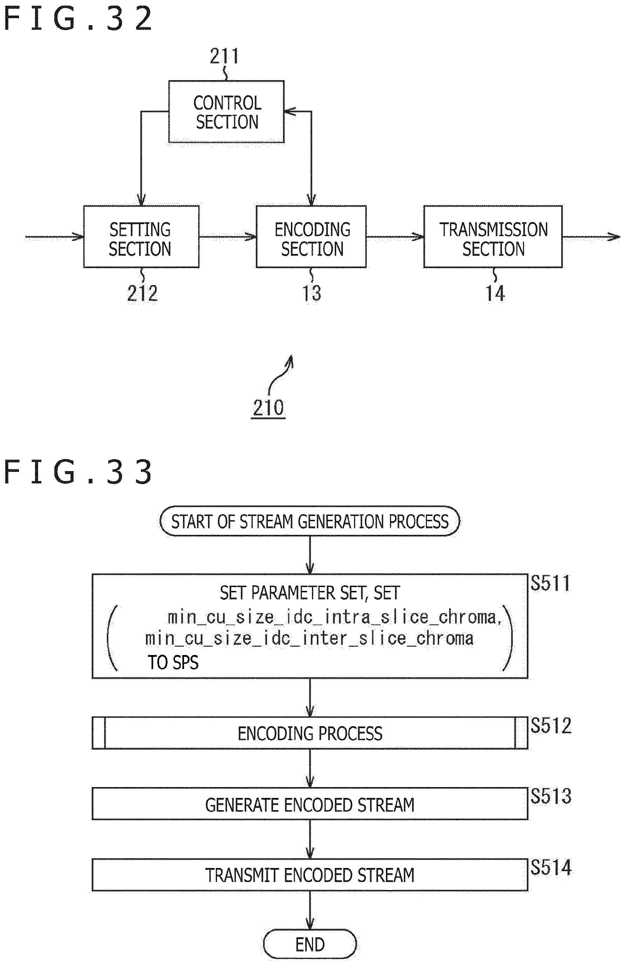

FIG. 32 is a block diagram depicting an example of a configuration of an embodiment of the encoding apparatus to which the present disclosure is applied.
[FIG. 33]
FIG. 33 is a flow chart illustrating a stream generation process of the encoding apparatus of FIG. 32.
[FIG. 34]

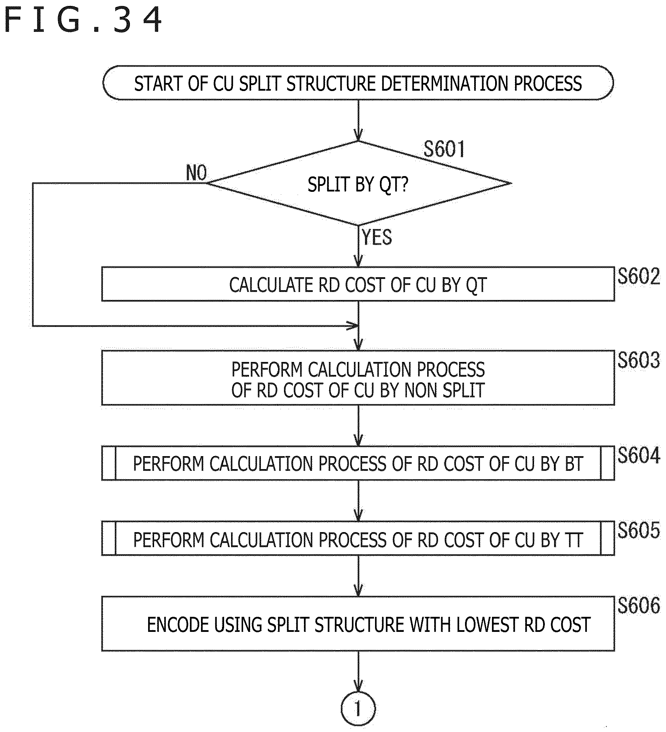

FIG. 34 is a flow chart illustrating another example of a CU split structure determination process in step S33 of FIG. 9.
[FIG. 35]

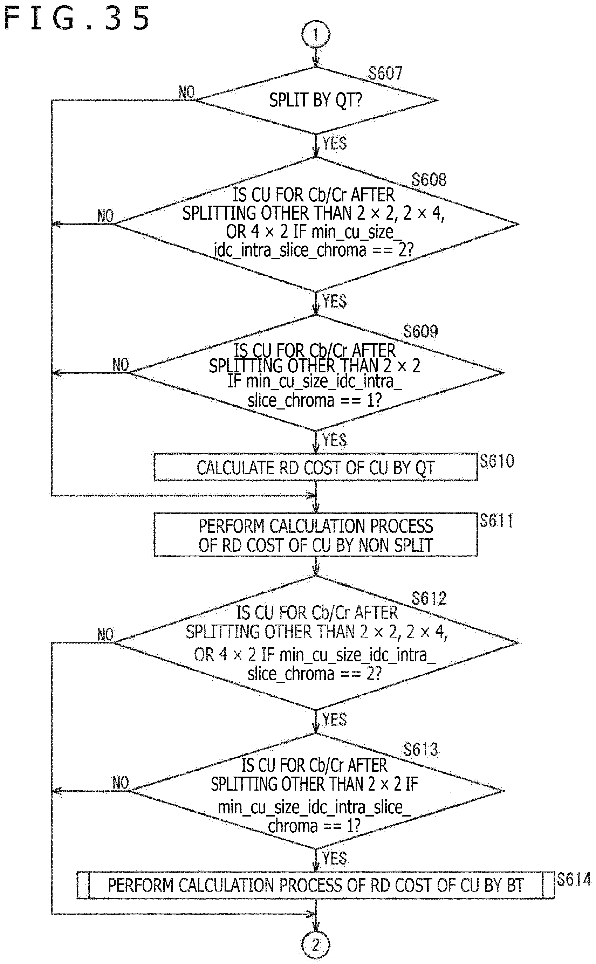

FIG. 35 is a flow chart illustrating the above-mentioned another example of the CU split structure determination process in step S33 of FIG. 9, continued from FIG. 34.
[FIG. 36]

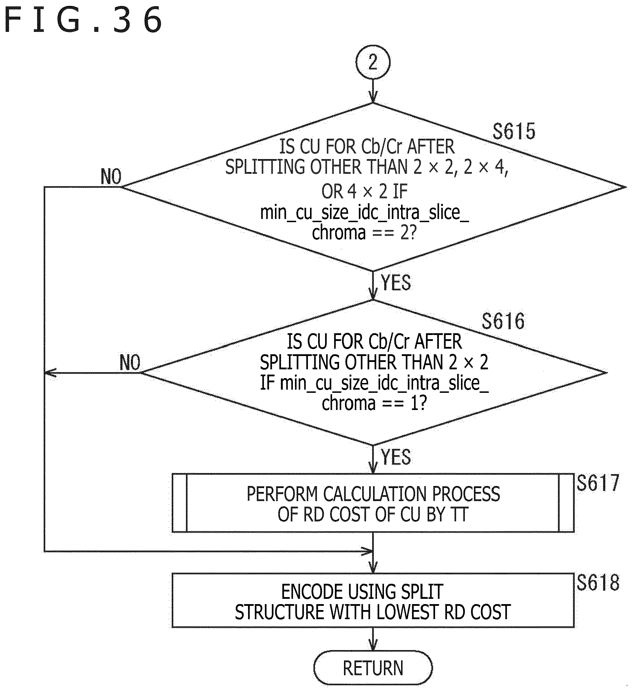

FIG. 36 is a flow chart illustrating the above-mentioned another example of the CU split structure determination process in step S33 of FIG. 9, continued from FIG. 35.
[FIG. 37]

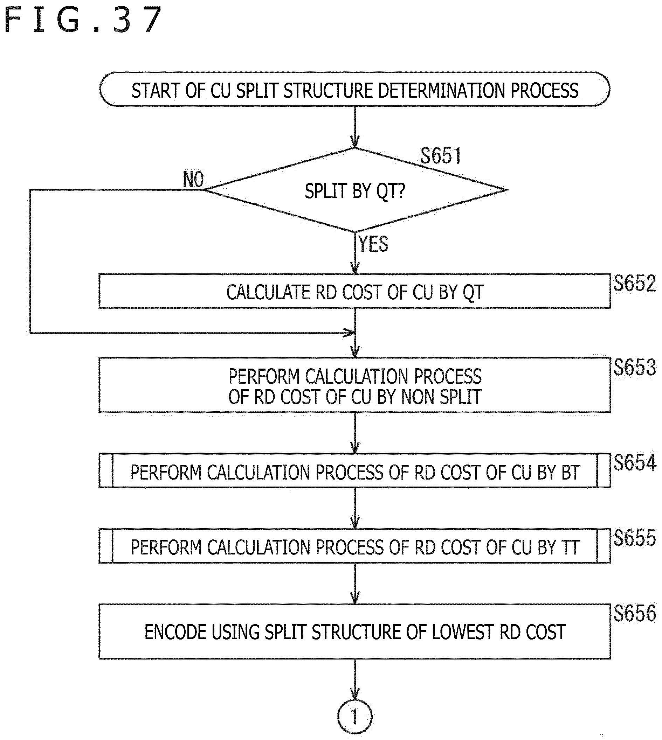

FIG. 37 is a flow chart illustrating a further example of the CU split structure determination process in step S33 of FIG. 9.

[FIG. 38]

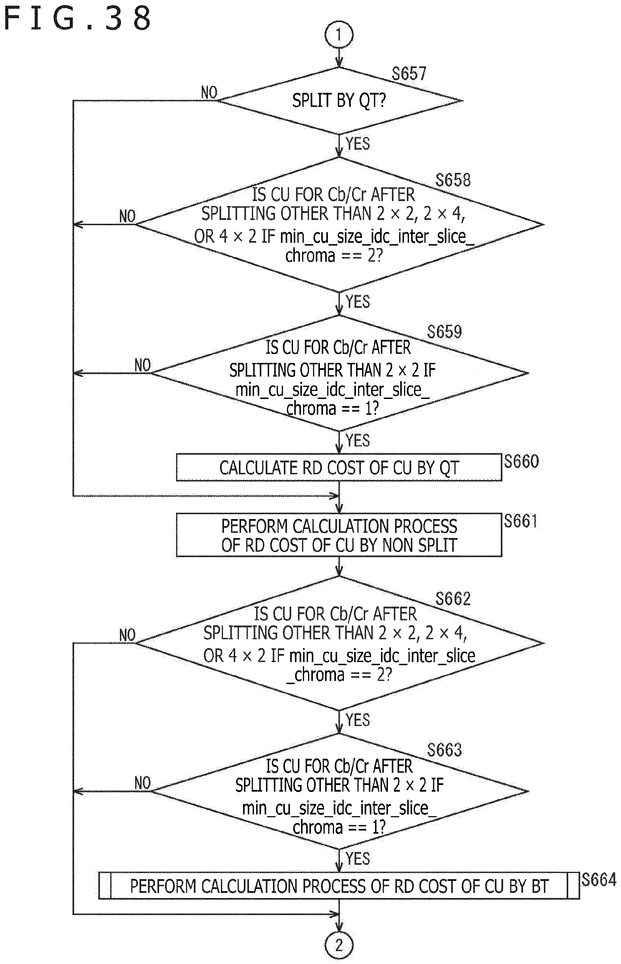

FIG. 38 is a flow chart illustrating the further example of the CU split structure determination process in step S33 of FIG. 9, continued from FIG. 37.

[FIG. 39]

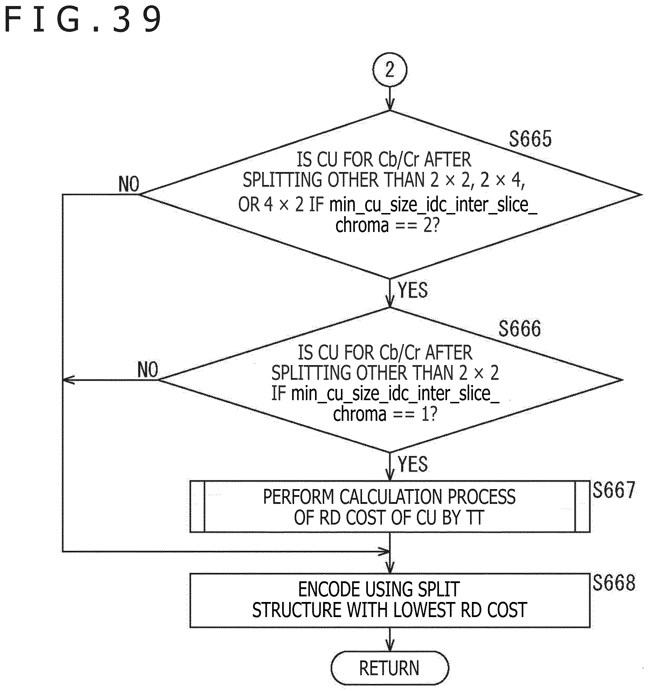

FIG. 39 is a flow chart illustrating the further example of the CU split structure determination process in step S33 of FIG. 9, continued from FIG. 38.

[FIG. 40]

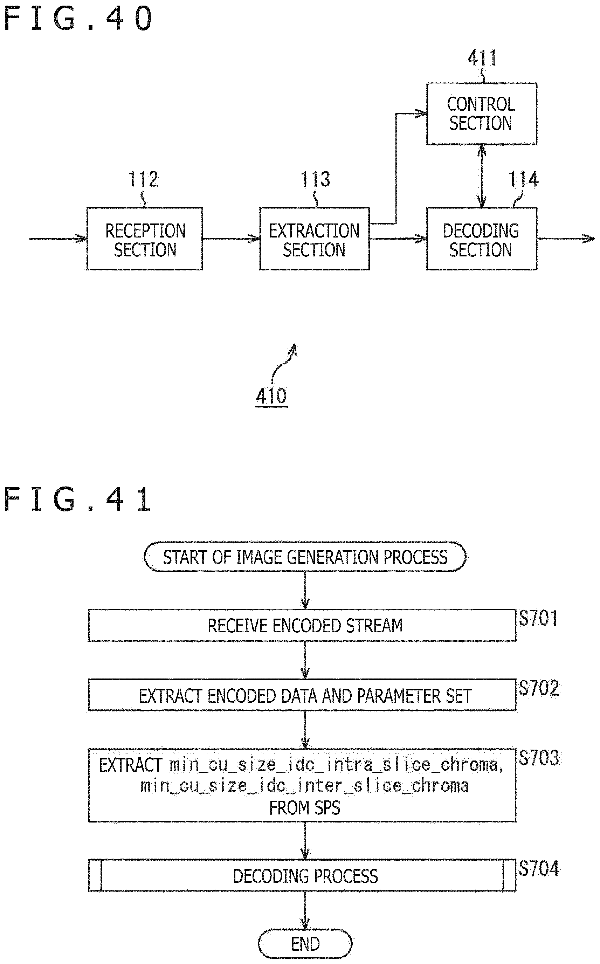

FIG. 40 is a block diagram depicting an example of a configuration of an embodiment of a decoding apparatus to which the present disclosure is applied.

[FIG. 41]

FIG. 41 is a flow chart illustrating an image generation process of the decoding apparatus of FIG. 40.

[FIG. 42]

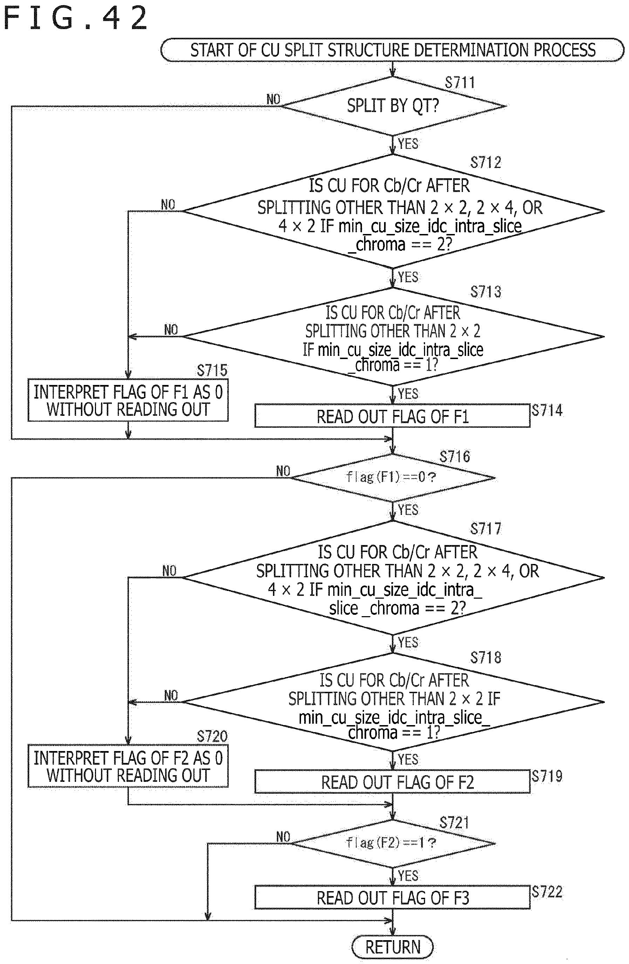

FIG. 42 is a flow chart illustrating an example of a CU split structure determination process in step S333 of FIG. 21.

[FIG. 43]

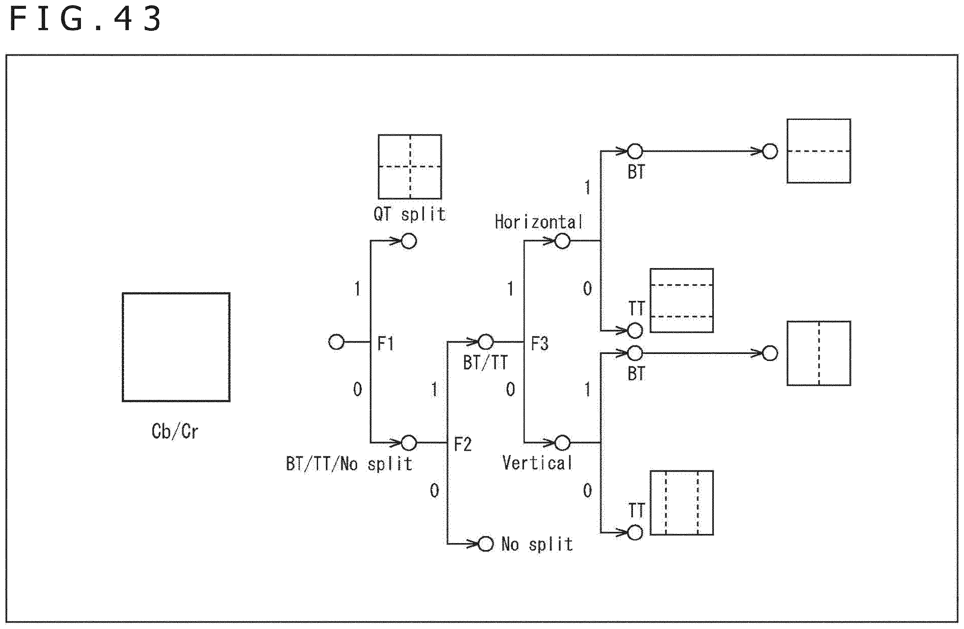

FIG. 43 is a view depicting an example of a tree to be used for the CU split structure determination process.

[FIG. 44]

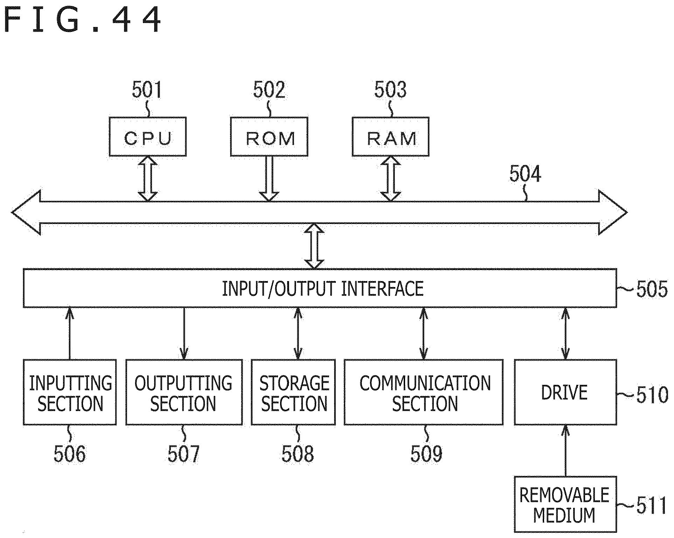

FIG. 44 is a block diagram depicting an example of a configuration of hardware of a computer.

[Description of Embodiments]

In the following, modes for carrying out the present disclosure (hereinafter referred to as embodiments) are described. It is to be noted that a description is given in the following order.

0. Overview

1. First Embodiment (Limitation of 2 × 2 of CU for Cb/Cr)
2. Second Embodiment (Separate Tree)
3. Third Embodiment (Addition of Minimum CU to Syntax)
4. Fourth Embodiment (Determination of Minimum CU by Standard)
5. Fifth Embodiment

<0. Overview>

(Encoding Method)

In the following, the present technology is described, taking a case in which it is applied to image encoding and decoding of a VVC (Versatile Video Coding) method as an example.

(Description of Encoding Unit)

FIG. 1 is a view depicting an example of splitting of a CU (Coding UNIT) that is a unit for encoding.

A screen image of a color image is configured from pixels according to a resolution. The pixels have information regarding luminance (Y) indicating a brightness, and chroma (Cb/Cr).

In a format called 4:2:0 chroma format, the resolution of Cb/Cr is one half both vertically and horizontally with respect to the luminance as depicted in FIG. 2. In a case where the resolution of Y is 1920 × 1080, the resolution of Cb/Cr is 960 × 540.

In the screen image of FIG. 1, CTUs (Coding Tree Units) are arranged in a raster order. The CTU is a predetermined unit and is split into encoding units called CUs. It is to be noted that it is also possible to use the CTU as it is as a CU without splitting the CTU. A CTU having a size of 128 × 128 is frequently used for Y.

In FIG. 1, a thick line indicates a boundary between CTUs, and a solid line, a broken line, and a dashed line indicate a boundary of a CU.

FIG. 2 is a view depicting a splitting method of a CU.

In A of FIG. 2, a CU having a size of 8 × 8 for Y and a CU having a size of 4 × 4 for Cb/Cr are depicted. In B of FIG. 2, CUs obtained by being split into two in the horizontal direction are depicted. CUs having a size of 8 × 4 for Y and CUs having a size of 4 × 2 for Cb/Cr are depicted.

In C of FIG. 2, CUs obtained by being split into two in the vertical direction are depicted. CUs having a size of 4 × 8 for Y and CUs having a size of 2 × 4 for Cb/Cr are depicted. In D of FIG. 2, an example in which a CU is split into four is depicted.

In HEVC (High Efficiency Video Coding), a CU is configured so as to have a size of 8 × 8 for Y and a size of 4 × 4 for Cb/Cr.

In WC, a CU can be split into a size of 4 × 4 for Y and a size of 2 × 2 for Cb/Cr.

Here, if an image is inputted to an apparatus on the encoding side, the difference taken from a prediction signal, orthogonal transform, quantization, dequantization, inverse orthogonal transform, reconstruction with the prediction signal added, and intra prediction in a unit of a CU by use of a signal after the reconstruction are performed. In the intra prediction, surrounding pixel values may be used in some cases. Therefore, if a loop from the difference taken to the reconstruction is not completed, the succeeding intra prediction of a CU cannot be performed. Accordingly, as the CU size for chroma decreases, the delay increases, and the processing time increases.

FIG. 3 is a view depicting an order of intra prediction in a case where the size of a CU for Y is 4 × 4 and the size of a CU for Cb/Cr is 2 × 2.

In the example of FIG. 3, arrow marks indicate the order of intra prediction of a CU for Cb/Cr.

As indicated by the arrow marks, intra prediction of the CU is performed in the order of upper left, upper right, lower left, and lower right. For the upper right CU, processing cannot be started if the processing for the upper left CU is not completed. For the lower left CU, processing cannot be started if the processing for the upper right CU is not completed. For the lower right CU, processing cannot be started if the processing for the lower left CU is not completed.

In a case where all CUs have a size of $4 \times 4$ for Y and a size of $2 \times 2$ for Cb/Cr which are obtained by being split to a minimum size in such a manner as described above, the delay is maximized.

Meanwhile, in VVC, it is intended to adopt a technology called luminance chroma prediction of predicting Cb/Cr from Y.

FIG. 4 is a view depicting an order of intra prediction in a case where luminance chroma prediction is performed for Y to Cb/Cr.

In the example of FIG. 4, arrow marks indicate an order of intra prediction of CUs for Y and CUs for Cr/Cr.

Since, for intra prediction for an upper left CU for Cb/Cr, a pixel value of the upper left CU for Y is used, it is necessary that the above-described loop from the difference taken from a prediction signal of Y to the reconstruction has been completed.

In the case of a moving image, an image according to a frame rate is inputted for one second to the apparatus on the encoding side. Accordingly, in real-time processing, processing for encoding must be completed in a certain unit, for example, in one second or in one frame; however, there is a risk that the processing may not be performed in time due to some delay.

Since an apparatus on the decoding side also adds a signal after inverse orthogonal transform and a signal of intra prediction to reconstruct a signal and intra prediction is performed by use of the signal after the reconstruction, the apparatus on the decoding side is also affected by delay, similarly to the encoding apparatus.

Therefore, in a first embodiment, CUs of $2 \times 2$ in size for Cb/Cr are excluded from decision of a split structure by the apparatus on the decoding side.

<1. First Embodiment (Limitation of $2 \times 2$ of Cb/Cr>

(Example of Configuration of First Embodiment of Encoding Apparatus)

FIG. 5 is a block diagram depicting an example of a configuration of an embodiment of the encoding apparatus to which the present disclosure is applied.

The encoding apparatus 10 of FIG. 5 includes a control section 11, a setting section 12, an encoding section 13, and a transmission section 14 and encodes an image by a method conforming to the VVC method.

In particular, the control section 11 of the encoding apparatus 10 includes, for example, a CPU (Central Processing Unit), a microprocessor, and so forth. The control section 11 executes a predetermined program by the CPU to perform various kinds of computing processes, operation control of the associated blocks, and so forth and operates as a central processing device in the encoding apparatus 10.

For example, the control section 11 controls the encoding section 13 to calculate RD costs and performs a CU split structure determination process for determining a split structure of a CU on the basis of the RD costs supplied from the encoding section 13. At this time, the control section 11 determines a split structure of a CU except a case in which a size of each of CUs for Y after splitting is equal to or less than $4 \times 4$. In particular, except a case in which a size of each of CUs for Cr/Cb is $2 \times 2$.

Moreover, the control section 11 determines a prediction mode on the basis of the RD costs. The control section 11 controls the setting section 12 to set a parameter set on the basis of the determined CU split structure and prediction mode and controls the encoding section 13 to perform an encoding process.

The setting section 12 sets an SPS (Sequence Parameter Set), a PPS (Picture Parameter Set), VUI (Video Usability Information), SEI (Supplemental Enhancement Information), and so forth, according to an instruction of the control section 11. The setting section 12 outputs the set parameter sets such as the SPS, PPS, VUI, and SEI to the encoding section 13.

To the encoding section 13, an image of a unit of a frame is inputted. The encoding section 13 encodes an inputted image according to an instruction of the control section 11. The encoding section 13 generates an encoded stream from encoded data obtained as a result of encoding and the parameter sets and outputs the encoded stream to the transmission section 14.

The transmission section 14 transmits the encoded stream supplied from the encoding section 13 to a decoding apparatus 110 described later.

FIG. 6 is a view depicting an example of a tree for determining a split structure for a CU.

In the example of FIG. 6, an example is depicted in which Y, Cb, and Cr have a same CU split structure. The tree has branches. 0 and 1 indicated on the left and right of each branch indicate values of flags. The value of the flag is placed, after a split structure is determined, as a split flag into and sent together with a bit stream, which is decoded on the decoding side. Consequently, the decoding side can find the CU split structure determined by the apparatus on the decoding side.

At the branch b1, whether the CTU is to be split by QT splitting (1) or by split (0) other than the QT splitting. The split other than the QT split includes BT (Binary Tree) split, TT (Ternary Tree) split, or No split (without split) (No split).

In a case where the QT splitting (1) is selected, the CTU is split into QTs. In a case where the CTU is split into QTs, the processing returns as indicated by a thick line arrow mark, and each CT is split recursively.

In a case where the split (0) other than the QT splitting is selected, the processing advances to a branch b2. At the branch b2, BT/TT splitting (1) or No split (0) is selected.

In a case where the no split (0) is selected, No split is determined, and the processing ends.

In a case where the BT/TT splitting (1) is selected, the processing advances to the branch b3. At the branch b3, horizontal (1) or vertical (0) is selected.

In a case where the horizontal (1) is selected, the processing advances to the branch b4. At the branch b4, the BT (1) or the TT (0) is selected.

In a case where BT (1) is selected, the CTU is split into BTs. In a case where the TT (1) is selected, the CTU is split into TTs. Not only in the case where the CTU is split into BTs but also in the case where the CTU is split into TTs, the processing returns as indicated by broken line arrow marks, and splitting is performed recursively.

In a case where the vertical (0) is selected, the processing advances to the branch b5. At the branch b5, the BT (1) or the TT (0) is selected.

In a case where the BT (1) is selected, the CTU is split into BTs. In a case where the TT (1) is selected, the CTU is split into TTs. Not only in the case where the CTU is split into BTs but also in the case where the CTU is split into TTs, the processing returns as indicated by arrow marks and the CTU is split recursively.

The selection here is performed on the basis of a technology called RD optimization (Rate-Distortion Optimization). In the RD optimization, an RD cost is calculated, and a decision is made such that the value of the RD cost becomes small, and accordingly, decision of a high encoding efficiency can be performed. The RD cost J is represented by the following expression (1).

[Math. 1]

$$J = D + \lambda R \quad \ldots \quad (1)$$

D is a difference (distortion) between an original image and a decoded image, R is a generated code amount including up to coefficients of orthogonal transform, and $\lambda$ is a Lagrange undetermined multiplier given as a function of a quantization parameter QP.

In particular, the control section 11 controls the encoding section 13 to calculate the RD cost for the QT, BT, TT, and No split at each branch and determines a CU split structure on the basis of the RD costs.

However, in a case where, after splitting of a QT, the size of each of CUs for Y is 8 × 8, the control section 11 returns the processing and selects the no splitting (0) without calculating the RD cost. In a case where, after splitting of a BT, the size of each of CUs for Y is 8 × 8, the control section 11 returns the processing and selects the no split (0) without calculating the RD cost. In a case where, after splitting of a TT, the size of each of CUs for Y is 8 × 8, the control section 11 returns the processing and selects the no split (0) without calculating the RD cost.

By determining the CU split structure in such a manner as described above, the size of each of CUs for Qr/Qb does not become 2 × 2. Accordingly, it is possible to avoid great delay in an encoding process and a decoding process of intra prediction.

(Example of Configuration of Encoding Section)

FIG. 7 is a block diagram depicting an example of a configuration of the encoding section of FIG. 5.

The encoding section 13 of FIG. 7 includes an A/D conversion section 31, a screen image sorting buffer 32, a computing section 33, an orthogonal transform section 34, a quantization section 35, a lossless encoding section 36, an accumulation buffer 37, a dequantization section 38, an inverse orthogonal transform section 39, and an addition section 40. The encoding section 13 also includes a deblock filter 41, an adaptive offset filter 42, an adaptive loop filter 43, a frame memory 44, a switch 45, an intra prediction section 46, a motion prediction and compensation section 47, a predicted image selection section 48, and a rate controlling section 49.

In the encoding section 13, a CU of the split structure determined by the control section 11 is used. Further, a split flag determined by a CU split structure determination process is outputted to the lossless encoding section 36.

The A/D conversion section 31 of the encoding section 13 A/D converts images in a unit of a frame of an encoding target. The A/D conversion section 31 outputs an image in the form of a digital signal after conversion to the screen image sorting buffer 32 so as to be stored.

The screen image sorting buffer 32 sorts images in a unit of a frame in a displaying order into those in an encoding order, according to the GOP structure. The screen image sorting buffer 32 outputs the images after the sorting to the computing section 33, intra prediction section 46, and motion prediction and compensation section 47.

The computing section 33 performs encoding by subtracting a predicted image supplied from the predicted image selection section 48 from an image supplied from the screen image sorting buffer 32. The computing section 33 outputs an image after the subtraction as residual information (difference) to the orthogonal transform section 34. It is to be noted that, in a case where a predicted image is not supplied from the predicted image selection section 48, the computing section 33 outputs an image read out from the screen image sorting buffer 32 as it is as residual information to the orthogonal transform section 34.

The orthogonal transform section 34 performs an orthogonal transform process for the residual information from the computing section 33 in a unit of a CU. The orthogonal transform section 34 outputs the image after the orthogonal transform process to the quantization section 35.

The quantization section 35 quantizes an image after the orthogonal transform process supplied from the orthogonal transform section 34. The quantization section 35 outputs a quantized value after the quantization to the lossless encoding section 36.

The lossless encoding section 36 acquires intra prediction mode information that is information indicating an optimum intra prediction mode from the intra prediction section 46. Further, the lossless encoding section 36 acquires inter prediction mode information that is information indicating an optimum inter prediction mode, a motion vector, information that specifies a reference image, and so forth, from the motion prediction and compensation section 47.

Further, the lossless encoding section 36 acquires offset filter information relating to an offset filter from the adaptive offset filter 42 and acquires a filter coefficient from the adaptive loop filter 43.

The lossless encoding section 36 performs lossless encoding such as variable length encoding (for example, CAVLC (Context-Adaptive Variable Length Coding)), arithmetic encoding (for example, CABAC (Context-Adaptive Binary Arithmetic Coding)), and so forth, on the quantized value supplied from the quantization section 35.

Further, the lossless encoding section 36 performs lossless encoding on intra prediction mode information or inter prediction mode information, a motion vector, information that specifies a reference image, offset filter information, and a filter coefficient, as encoding information relating to encoding. The split flag is subjected to lossless encoding as encoded information for each CTU. The lossless encoding section 36 outputs the encoding information and quantized value which have been subjected to lossless encoding, as encoded data, to the accumulation buffer 37 so as to be accumulated.

The accumulation buffer 37 temporarily stores the encoded data supplied from the lossless encoding section 36. Further, the accumulation buffer 37 outputs encoded data stored therein as an encoded bit stream to the transmission section 14 together with a parameter set supplied from the setting section 12 of FIG. 5.

Further, the quantized value outputted from the quantization section 35 is inputted also to the dequantization section 38. The dequantization section 38 dequantizes the quantized value. The dequantization section 38 outputs an orthogonal transform process result after dequantization to the inverse orthogonal transform section 39.

The inverse orthogonal transform section 39 performs an inverse orthogonal transform process for the orthogonal transform process result supplied from the dequantization section 38 in a unit of a CU. As a method for inverse orthogonal transform, IDCT (inverse discrete cosine transform) and IDST (inverse discrete sine transform) are available, for example. The inverse orthogonal transform section 39 outputs residual information obtained as a result of the inverse orthogonal transform process to the addition section 40.

The addition section 40 adds the residual information supplied from the inverse orthogonal transform section 39 and the predicted image supplied from the predicted image selection section 48 to perform decoding. The addition section 40 outputs the decoded image to the deblock filter 41 and the frame memory 44.

The deblock filter 41 performs a deblock filter process for removing block distortion for the decoded image supplied from the addition section 40. The deblock filter 41 outputs the image after the deblock filter process to the adaptive offset filter 42.

The adaptive offset filter 42 performs an adaptive offset filter (SAO (Sample adaptive offset)) process principally for removing ringing for the image after the deblock filter process by the deblock filter 41.

The adaptive offset filter 42 outputs the image after the adaptive offset filter process to the adaptive loop filter 43. Further, the adaptive offset filter 42 outputs information indicating a type of the adaptive offset filter process and an offset as offset filter information to the lossless encoding section 36.

The adaptive loop filter 43 includes, for example, a two-dimensional Wiener filter. The adaptive loop filter 43 performs an adaptive loop filter (ALF) process for the image after the adaptive offset filter process.

The adaptive loop filter 43 outputs the image after the adaptive loop filter process to the frame memory 44. Further, the adaptive loop filter 43 outputs the filter coefficient used in the adaptive loop filter process to the lossless encoding section 36.

The frame memory 44 accumulates an image supplied from the adaptive loop filter 43 and an image supplied from the addition section 40. Images adjacent to a CU from among the images that are accumulated in the frame memory 44 and have not undergone any filter process are outputted as surrounding images to the intra prediction section 46 through the switch 45. On the other hand, images that are accumulated in the frame memory 44 and have undergone the filter processes are outputted as reference images to the motion prediction and compensation section 47 through the switch 45.

The intra prediction section 46 performs an intra prediction process of all intra prediction modes that are considered candidates using the surrounding images read out from the frame memory 44 through the switch 45 in a unit of a CU.

Further, the intra prediction section 46 calculates RD costs for all intra prediction modes that are considered candidates on the basis of an image read out from the screen image sorting buffer 32 and a predicted image predicted by the intra prediction process. The calculated RD costs are outputted to the control section 11. The control section 11 determines the intra prediction mode in which the lowest RD cost becomes a minimum, as an optimum intra prediction mode.

The intra prediction section 46 outputs the predicted image generated in the optimum intra prediction mode to the predicted image selection section 48, according to an instruction of the control section 11. In a case where the intra prediction section 46 is notified of the selection of a predicted image generated in the optimum intra prediction mode from the control section 11, the intra prediction section 46 outputs the intra prediction mode information to the lossless encoding section 36. It is to be noted that the intra prediction mode is a mode indicating a size, a prediction direction, and so forth of a CU.

The motion prediction and compensation section 47 performs a motion prediction and compensation process in all inter prediction modes that are considered candidates in a unit of a CU. In particular, the motion prediction and compensation section 47 detects a motion vector in all inter prediction modes that are considered candidates in a unit of a CU on the basis of an image supplied from the screen image sorting buffer 32 and a reference image read out from the frame memory 44 through the switch 45. Then, the motion prediction and compensation section 47 performs a compensation process for the reference image in a unit of a CU on the basis of the motion vectors to generate a predicted image.

At this time, the motion prediction and compensation section 47 calculates RD costs for all inter prediction modes that are considered candidates on the basis of the image supplied from the screen image sorting buffer 32 and the predicted image. The calculated RD costs are outputted to the control section 11. The control section 11 determines the inter prediction mode in which the RD cost becomes lowest as an optimum inter prediction mode.

The motion prediction and compensation section 47 outputs a predicted image of the optimum inter prediction mode to the predicted image selection section 48, according to an instruction of the control section 11. Further, in a case where the motion prediction and compensation section 47 is notified of selection of an optimum inter prediction mode predicted image from the control section 11, the motion prediction and compensation section 47 outputs the inter prediction mode information, corresponding motion vector, information that specifies a reference image, and so forth to the lossless encoding section 36. It is to be noted that the inter prediction mode is a mode indicating a size and so forth of the CU.

Further, the control section 11 determines one of the optimum intra prediction mode and the optimum inter prediction mode whose corresponding RD cost is lower as an optimum prediction mode. Then, the predicted image selection section 48 outputs the predicted image of the optimum prediction mode to the computing section 33 and the addition section 40 according to an instruction of the control section 11.

The rate controlling section 49 controls the rate of the quantization operation of the quantization section 35 on the basis of the encoded data accumulated in the accumulation buffer 37 such that an overflow or an underflow may not occur.

(Operation of Encoding Apparatus)

FIG. 8 is a flow chart illustrating a stream generation process of the encoding apparatus of FIG. 5.

In step S11 of FIG. 8, the setting section 12 of the encoding apparatus 10 sets a parameter set. The setting section 12 outputs the set parameter set to the encoding section 13.

In step S12, the encoding section 13 performs an encoding process of encoding an image in a unit of a frame. Details of this encoding process are described with reference to FIGS. 9 and 10 described later. Encoded data is generated by the encoding process. The encoded data is accumulated into the accumulation buffer 37.

It is to be noted that a split structure, a prediction mode, and so forth for a CU are determined on the basis of an RD cost calculated by the encoding process in step S12. The split structure and the prediction mode for a CU based on the RD cost are used in the encoding process in step S12.

In step S13, an encoded stream is generated from the parameter set supplied from the setting section 12 and the accumulated encoded data and is outputted to the transmission section 14.

In step S14, the transmission section 14 transmits the encoded stream supplied from the encoding section 13 to a decoding apparatus 110 described later, and the processing ends.

FIGS. 9 and 10 are flow charts illustrating details of the encoding process in step S12 of FIG. 8.

In step S31 of FIG. 9, the A/D conversion section 31 of the encoding section 13 A/D converts an image in a unit of a frame inputted as an encoding target. The A/D conversion section 31 outputs an image in the form of a digital signal after the conversion to the screen image sorting buffer 32 so as to be stored.

In step S32, the screen image sorting buffer 32 sorts images of frames in a displaying order into those in an encoding order according to a GOP structure. The screen image sorting buffer 32 outputs the images in a unit of a frame after sorted to the computing section 33, intra prediction section 46, and motion prediction and compensation section 47.

In step S33, the control section 11 performs a CU split structure determination process. Details of the CU split structure determination process are described with reference to FIG. 11 described later. A CU of a split structure determined by the CU split structure determination process is used in a later encoding process. The split structure information regarding the CUs is outputted to the associated blocks. Further, a split flag determined by the CU split structure determination process is outputted to the lossless encoding section 36.

In step S34, the intra prediction section 46 performs an intra prediction process in all intra prediction modes that become candidates in a unit of a CU. Further, the intra prediction section 46 calculates RD costs for all intra prediction modes that are considered candidates on the basis of an image read out from the screen image sorting buffer 32 and a predicted image predicted by the intra prediction process. The control section 11 determines an intra prediction mode in which the RD cost becomes lowest as an optimum intra prediction mode. The intra prediction section 46 outputs a predicted image generated by the optimum intra prediction mode to the predicted image selection section 48.

Further, the motion prediction and compensation section 47 performs a motion prediction and compensation process for all inter prediction modes that are considered candidates in a unit of a CU. Further, the motion prediction and compensation section 47 calculates the RD costs for all inter prediction modes that are considered candidates on the basis of an image supplied from the screen image sorting buffer 32 and a predicted image. The control section 11 determines an inter prediction mode in which the RD cost becomes lowest as an optimum inter prediction mode. The motion prediction and compensation section 47 outputs a predicted image of the optimum inter prediction mode to the predicted image selection section 48.

In step S35, the control section 11 determines, on the basis of the RD costs of the optimum intra prediction mode and the optimum inter prediction mode, one of the modes in which the RD cost becomes lowest as an optimum prediction mode. Then, the predicted image selection section 48 outputs the predicted image of the optimum prediction mode to the computing section 33 and the addition section 40.

In step S36, the control section 11 decides whether or not the optimum prediction mode is the optimum inter prediction mode. In a case where it is decided in step S36 that the optimum prediction mode is the optimum inter prediction mode, the control section 11 notifies the motion prediction and compensation section 47 of the selection of the predicted image generated in the optimum inter prediction mode.

Then, in step S37, the motion prediction and compensation section 47 outputs the inter prediction mode information, motion vector, and information that specifies the reference image to the lossless encoding section 36. Thereafter, the processing advances to step S39.

In contrast, in a case where the optimum prediction mode is the optimum intra prediction mode in step S36, the control section 11 notifies the intra prediction section 46 of the selection of the predicted image generated by the optimum intra prediction mode. Then, in step S38, the intra prediction section 46 outputs the intra prediction mode information to the lossless encoding section 36. Thereafter, the processing advances to step S39.

In step S39, the computing section 33 performs encoding by subtracting the predicted image supplied from the predicted image selection section 48 from the image supplied from the screen image sorting buffer 32.

The computing section 33 outputs the image after the subtraction as residual information to the orthogonal transform section 34.

In step S40, the orthogonal transform section 34 performs an orthogonal transform process for the residual information in a unit of a CU. The orthogonal transform section 34 outputs an orthogonal transform process result after the orthogonal transform process to the quantization section 35.

In stet S41, the quantization section 35 quantizes the orthogonal transform process result supplied from the orthogonal transform section 34. The quantization section 35 outputs a quantized value after the quantization to the lossless encoding section 36 and the dequantization section 38.

In step S42 of FIG. 10, the dequantization section 38 performs dequantization for the quantized value from the quantization section 35. The dequantization section 38 outputs the orthogonal transform process result after the dequantization to the inverse orthogonal transform section 39.

In step S43, the inverse orthogonal transform section 39 performs an inverse orthogonal transform process for the orthogonal transform process result in a unit of a CU. The inverse orthogonal transform section 39 outputs the residual information after the inverse orthogonal transform process to the addition section 40.

In step S44, the addition section 40 adds the residual information supplied from the inverse orthogonal transform section 39 and the predicted image supplied from the predicted image selection section 48 to perform decoding. The addition section 40 outputs the decoded image to the deblock filter 41 and the frame memory 44.

In step S45, the deblock filter 41 performs a deblock filter process for the image supplied from the addition section 40. The deblock filter 41 outputs the image after the deblock filter process to the adaptive offset filter 42.

In step S46, the adaptive offset filter 42 performs an adaptive offset filter process for the image after the deblock filter process. The adaptive offset filter 42 outputs the image after the adaptive offset filter process to the adaptive loop filter 43. Further, the adaptive offset filter 42 outputs the offset filter information to the lossless encoding section 36.

In step S47, the adaptive loop filter 43 performs an adaptive loop filter process for the image after the adaptive offset filter process. The adaptive loop filter 43 outputs the image after the adaptive loop filter process to the frame memory 44. Further, the adaptive loop filter 43 outputs the filter coefficient used in the adaptive loop filter process to the lossless encoding section 36.

In step S48, the frame memory 44 accumulates the image supplied from the adaptive loop filter 43 and the image supplied from the addition section 40. Images adjacent to the CU among images that are accumulated in the frame memory 44 and have not undergone a filter process are outputted as surrounding images to the intra prediction section 46 through the switch 45. In contrast, images accumulated in the frame memory 44 and having undergone the filter processes are outputted as reference images to the motion prediction and compensation section 47 through the switch 45.

In step S49, the lossless encoding section 36 performs lossless encoding on the intra prediction mode information or the inter prediction mode information, motion vector, information that specifies a reference image, offset filter information and filter coefficients as encoding information. The split flag is subjected to lossless encoding as encoding information for each CTU.

In step S50, the lossless encoding section 36 performs lossless encoding on the quantized value supplied from the quantization section 35. Then, the lossless encoding section 36 generates encoded data from the encoding information which has been subjected to lossless encoding by the process in step S49 and the quantized value which has been subjected to lossless encoding, and outputs the encoded data to the accumulation buffer 37.

In step S51, the accumulation buffer 37 temporarily accumulates the encoded data supplied from the lossless encoding section 36.

In step S52, the rate controlling section 49 controls the rate of the quantization operation of the quantization section 35 on the basis of the encoded data accumulated in the accumulation buffer 37 such that overflow or underflow may not occur. Then, the processing returns to step S12 of FIG. 8 and then advances to step S13.

It is to be noted that, although, for simplicity of description, in the encoding process of FIGS. 9 and 10, an intra prediction process and a motion prediction and compensation process are normally performed, in actual use, only either of them may be performed, depending upon a picture type or the like, in some cases.

FIG. 11 is a flow chart illustrating details of the CU split structure determination process in step S33 of FIG. 9.

In step S121 of FIG. 11, the control section 11 decides whether or not the CTU is split by the QT.

In a case where it is decided in step S121 that the CTU is split by the QT, the processing advances to step S122.

In step S122, the control section 11 decides whether or not the size of each of CUs for Y after the QT splitting is other than $8 \times 8$.

In a case where it is decided in step S122 that the size of each of CUs for Y after the QT splitting is other than $8 \times 8$, the processing advances to step S123.

In step S123, the encoding section 13 calculates the RD costs of the CUs by the QT.

Conversely, in a case where it is decided in step S121 that the CTU is not split by the QT, or in a case where it is decided in step S122 that the size of each of CUs for Y after the QT splitting is $8 \times 8$, the processing advances to step S124.

In step S124, the encoding section 13 performs a calculation process of the RD costs of the CUs by Non split.

In step S125, the encoding section 13 performs a calculation process of the RD costs of the CUs by the BT. Details of the calculation process of the RD costs of the CUs by the BT are described with reference to FIG. 12 described later. By performing step S125, the RD costs of the CUs by the BT are calculated.

In step S126, the encoding section 13 performs a calculation process of the RD costs of the CUs by the TT. Details of the calculation process of the RD costs of the CUs by the TT are described with reference to FIG. 13 described later. By performing step S126, the RD costs of the CUs by the TT are calculated.

In step S127, the control section 11 controls the encoding section 13 to encode the CTU using a split structure in which the RD cost is lowest from among the RD costs calculated as above.

FIG. 12 is a flow chart illustrating details of the RD cost calculation process by the BT in step S125 of FIG. 11.

In step S141 of FIG. 12, the control section 11 decides whether or not the size of each of CUs for Y after Horizontal BT splitting is other than $8 \times 8$.

In a case where it is decided in step S141 that the size of each of CUs for Y after Horizontal BT splitting is other than $8 \times 8$, the processing advances to step S142.

In step S142, the encoding section 13 performs splitting by Horizontal to calculate an RD cost.

In a case where it is decided in step S141 that the size of each of CUs for Y after Horizontal BT splitting is $8 \times 8$, the processing skips step S142 and advances to step S143.

In step S143, the control section 11 decides whether or not the size of each of CUs for Y after Vertical BT splitting is other than $8 \times 8$.

In a case where it is decided in step S143 that the size of each of CUs for Y after Vertical BT splitting is other than $8 \times 8$, the processing advances to step S144.

In step S144, the encoding section 13 splits by Vertical and calculates an RD cost.

In a case where it is decided in step S143 that the size of each of CUs for Y after Vertical BT splitting is $8 \times 8$, the processing skips step S144 and advances to step S145.

In step S145, the control section 11 adopts a split structure in which the RD cost is lowest from among the calculated RD costs and uses the adopted split structure to the RD cost of the CU by the BT.

FIG. 13 is a flow chart illustrating details of the RD cost calculation process by the TT in step S126 of FIG. 11.

In step S161 of FIG. 13, the control section 11 decides whether or not the size of each of CUs for Y after Horizontal TT splitting is $8 \times 8$.

In a case where it is decided in step S161 that the size of each of CUs for Y after Horizontal TT splitting is other than 8 × 8, the processing advances to step S162.

In step S162, the encoding section 13 splits by Horizontal to calculate an RD cost.

In a case where it is decided in step S161 that the size of each of CUs for Y after Horizontal TT splitting is 8 × 8, the processing skips step S162 and advances to step S163.

In step S163, the control section 11 decides whether or not the size of each of CUs for Y after Vertical TT splitting is other than 8 × 8.

In a case where it is decided in step S163 that the size of each of CUs for Y after Vertical TT splitting is other than 8 × 8, the processing advances to step S164.

In step S164, the encoding section 13 splits by Vertical and calculates an RD cost.

In a case where it is decided in step S163 that the size of each of CUs for Y after Vertical TT splitting is other than 8 × 8, the processing skips step S164 and advances to step S165.

In step S165, the control section 11 adopts a split structure in which the RD cost is lowest from among the calculated RD costs and uses the adopted split structure to the RD cost of the CU by the TT.

In the split structure determination process for a CU, a case in which the size of each of CUs for Y becomes smaller than 8 × 8 is excluded in such a manner as described above. In particular, a split structure of a CU in a case where the size of each of CUs for Cb/Cr becomes 2 × 2 can be removed from choices for the determination of a CU split structure. Consequently, delay in intra prediction can be reduced.

It is to be noted that the description given above is directed to a case in which a case in which the size of each of CUs for Cb/Cr becomes 2 × 2 is excluded from choices for determining a CU split structure. As a different method, a method is available which does not use a case in which the size of each of CUs for Cb/Cr when intra prediction is performed becomes 2 × 2.

FIG. 14 is a flow chart illustrating another example of the CU split structure determination process in step S33 of FIG. 9.

It is to be noted that processes in FIG. 14 are same processes as those of the ordinary CU split structure determination process except the decision process of a prediction mode for a CU in step S186.

In step S181 of FIG. 14, the control section 11 decides whether or not the CTU is split by the QT.

In a case where it is decided in step S181 that the CTU is split by the QT, the processing advances to step S182.

In step S182, the encoding section 13 calculates the RD cost of each of the CUs by the QT.

Conversely, in a case where it is decided in step S181 that the CTU is not split by QT, the processing advances to step S183.

In step S183, the encoding section 13 performs a calculation process of the RD cost of each of the CUs by the Non split.

In step S184, the encoding section 13 performs a calculation process of the RD cost of each of the CUs by the BT. Details of the calculation process of the RD cost of each of the CUs by the BT are described with reference to FIG. 15 described later. By step S184, RD costs of the CUs by the BT are calculated.

In step S185, the encoding section 13 performs a calculation process of the RD cost of each of the CUs by the TT. Details of the calculation process of the RD cost of each of the CUs by the TT are described with reference to FIG. 16 described later. By step S185, RD costs of the CUs by the TT are calculated.

In step S186, the control section 11 performs a prediction mode decision process for the CU. Details of the prediction mode decision process for the CU are described with reference to FIG. 17 described later. By step S186, RD costs of the CUs for Cr/Cb other than the intra prediction mode of the CU having a size of 2 × 2 are obtained.

In step S187, the control section 11 controls the encoding section 13 to encode the CTU using a split structure in which the RD cost is lowest among the calculated RD costs.

FIG. 15 is a flow chart illustrating details the calculation process of the RD cost by the BT in step S184 of FIG. 14.

In step S201 of FIG. 15, the encoding section 13 splits by Horizontal and calculates an RD cost.

In step S202, the encoding section 13 splits by Vertical and calculates an RD cost.

In step S203, the control section 11 adopts a split structure in which the RD cost is lowest from among the calculated RD costs and uses the adopted split structure to the RD cost of the CU by the BT.

FIG. 16 is a flow chart illustrating details of the RD cost calculation process by the TT in step S185 of FIG. 14.

In step S221 of FIG. 16, the encoding section 13 splits by Horizontal and calculates an RD cost.

In step S322, the encoding section 13 splits by Vertical and calculates an RD cost.

In step S223, the control section 11 adopts a split structure in which the RD cost is lowest from among the calculated RD costs and uses the adopted split structure to the RD cost of the CU by the TT.

FIG. 17 is a flow chart illustrating details of the CU prediction mode decision process in step S186 of FIG. 14.

In step S241 of FIG. 17, the control section 11 decides whether or not the size of each of CUs for Cb/Cr is 4 × 4 or more.

In a case where it is decided in step S241 that the size of each of CUs for Cb/Cr is 4 × 4 or more, the processing advances to step S242.

In step S242, the encoding section 13 calculates an RD cost using intra prediction. Thereafter, the processing advances to step S243.

Conversely, in a case where it is decided in step S241 that the size of each of CUs for Cb/Cr is not $4 \times 4$ or more, the processing skips step S242 and advances to step S243.

In step S243, the encoding section 13 calculates an RD cost using inter prediction.

In step S244, the control section 11 adopts a split structure in which the RD cost is lowest from among the calculated RD costs and uses the adopted split structure to the RD cost of the CU.

In the split structure determination process for a CU, intra prediction calculates the RD cost only in a case where the size of each of CUs for Cb/Cr is $4 \times 4$ or more. In other words, also in the case of this process, a split structure for a CU in a case where the size of each of CUs for Cb/Cr is $2 \times 2$ can be excluded from choices for determining a CU split structure. This can reduce the delay in intra prediction.

(Example of Configuration of Embodiment of Decoding Apparatus)

FIG. 18 is a block diagram depicting an example of a configuration of an embodiment of a decoding apparatus that decodes an encoded stream transmitted from the encoding apparatus of FIG. 5 and to which the present disclosure is applied.

The decoding apparatus 110 of FIG. 18 includes a control section 111, a reception section 112, an extraction section 113, and a decoding section 114.

The control section 111 of the decoding apparatus 110 includes, for example, a CPU, a microprocessor, or the like. The control section 111 executes a predetermined program by the CPU to perform various kinds of computing processes or operation control of the associated components and operates as a central processing device in the decoding apparatus 110.

The control section 111 extracts information included in a parameter set. The control section 111 controls the decoding section 114 on the basis of the information included in the parameter set. In particular, the control section 111 outputs the information included in the parameter set (hereinafter described with reference to FIG. 27) to the decoding section 114 and causes the decoding section 114 to perform a CU split structure determination process.

The reception section 112 receives an encoded stream transmitted from the encoding apparatus 10 of FIG. 8 and outputs the encoded stream to the extraction section 113.

The extraction section 113 extracts a parameter set and encoded data from the encoded stream supplied from the reception section 112. The extraction section 113 outputs the parameter set to the control section 111. The extraction section 113 outputs the encoded data to the decoding section 114.

The decoding section 114 decodes the encoded data supplied from the extraction section 113 by a method conforming to the VVC method, according to an instruction of the control section 111. At this time, the decoding section 114 performs a split structure determination process for a CU, according to the instruction of the control section 111 and decodes the encoded data using the CU of the determined split structure. The decoding section 114 outputs the image after decoding.

(Example of Configuration of Decoding Section)

FIG. 19 is a block diagram depicting an example of a configuration of the decoding section of FIG. 18.

The decoding section 114 of FIG. 19 includes an accumulation buffer 131, a lossless decoding section 132, a dequantization section 133, an inverse orthogonal transform section 134, an addition section 135, a deblock filter 136, an adaptive offset filter 137, an adaptive loop filter 138, and a screen image sorting buffer 139. The decoding section 114 further includes a D/A conversion section 140, a frame memory 141, a switch 142, an intra prediction section 143, a motion compensation section 144, and a switch 145.

The accumulation buffer 131 of the decoding section 114 receives and accumulates encoded data from the extraction section 113 of FIG. 18. The accumulation buffer 131 outputs the encoded data accumulated therein to the lossless decoding section 132.

The lossless decoding section 132 performs lossless decoding such as variable length decoding or arithmetic decoding for the encoded data from the accumulation buffer 131 to obtain a quantized value and encoding information. The lossless decoding section 132 outputs the quantized value to the dequantization section 133. The encoding information is configured from a split flag, intra prediction mode information, inter prediction mode information, a motion vector, information for specifying a reference image, offset filter information, a filter coefficient and so forth.

The lossless decoding section 132 performs a CU split structure determination process using the split flag, according to an instruction of the control section 111. The CU split structure can be found by reading out flags corresponding to branches of a tree from the split flag.

In the decoding section 114, a CU of a split structure determined by the encoding apparatus 10 and found by the lossless decoding section 132 is used.

Further, the lossless decoding section 132 outputs intra prediction mode information and so forth to the intra prediction section 143. The lossless decoding section 132 outputs a motion vector, inter prediction mode information, information for specifying a reference image, and so forth to the motion compensation section 144.

The lossless decoding section 132 outputs intra prediction mode information or inter prediction mode information to the switch 145. The lossless decoding section 132 outputs offset filter information to the adaptive offset filter 137. The lossless decoding section 132 outputs the filter coefficient to the adaptive loop filter 138.

The dequantization section 133, inverse orthogonal transform section 134, addition section 135, deblock filter 136, adaptive offset filter 137, adaptive loop filter 138, frame memory 141, switch 142, intra prediction section 143 and motion compensation section 144 perform processes similar to those of the dequantization section 38, inverse orthogonal transform section 39, addition section 40, deblock filter 41, adaptive offset filter 42, adaptive loop filter 43, frame memory 44, switch 45, intra prediction section 46, and motion prediction and compensation section 47 of FIG. 7, respectively. Accordingly, an image is decoded.

In particular, the dequantization section 133 is configured similarly to the dequantization section 38 of FIG. 7. The dequantization section 133 dequantizes a quantized value from the lossless decoding section 132 in a unit of a CU. The dequantization section 133 outputs an orthogonal transform process result after the dequantization to the inverse orthogonal transform section 134.

The inverse orthogonal transform section 134 is configured similarly to the inverse orthogonal transform section 39 of FIG. 7. The inverse orthogonal transform section 134 performs an inverse orthogonal transform process for the orthogonal transform process result supplied from the dequantization section 133. The inverse orthogonal transform section 134 outputs residual information after the inverse orthogonal transform process to the addition section 135.

The addition section 135 adds the residual information supplied from the inverse orthogonal transform section 134 and a predicted image supplied from the switch 145 to perform decoding. The addition section 135 outputs the decoded image to the deblock filter 136 and the frame memory 141.

The deblock filter 136 performs a deblock filter process for the image supplied from the addition section 135 and outputs the image after the deblock filter process to the adaptive offset filter 137.

The adaptive offset filter 137 uses an offset represented by offset filter information from the lossless decoding section 132 to perform an adaptive offset filter process of a type represented by the offset filter information for the image after the deblock filter process. The adaptive offset filter 137 outputs the image after the adaptive offset filter process to the adaptive loop filter 138.

The adaptive loop filter 138 performs an adaptive loop filter process for the image supplied from the adaptive offset filter 137 using the filter coefficient supplied from the lossless decoding section 132. The adaptive loop filter 138 outputs the image after the adaptive loop filter process to the frame memory 141 and the screen image sorting buffer 139.

The screen image sorting buffer 139 stores images after the adaptive loop filter process in a unit of a frame. The screen image sorting buffer 139 sorts the images in a unit of a frame in an encoding order to those in an original displaying order and outputs the sorted images to the D/A conversion section 140.

The D/A conversion section 140 D/A converts the images in a unit of a frame supplied from the screen image sorting buffer 139 and outputs resulting images.

The frame memory 141 accumulates images after the adaptive loop filter process and images supplied from the addition section 135. Images adjacent to the CU from among images that are stored in the frame memory 141 and have not undergone any filter process are supplied as surrounding images to the intra prediction section 143 through the switch 142. Meanwhile, images stored in the frame memory 141 and having undergone the filter processes are outputted as reference images to the motion compensation section 144 through the switch 142.

The intra prediction section 143 uses surrounding images read out from the frame memory 141 through the switch 142 to perform an intra prediction process of an optimum intra prediction mode indicated by intra prediction mode information supplied from the lossless decoding section 132. The intra prediction section 143 outputs a predicted image generated as a result of the intra prediction process to the switch 145.

The motion compensation section 144 reads out a reference image specified by information supplied from the lossless decoding section 132 and specifying a reference image from the frame memory 141 through the switch 142. The motion compensation section 144 performs a motion compensation process of an optimum inter prediction mode indicated by inter prediction mode information supplied from the lossless decoding section 132, using a motion vector supplied from the lossless decoding section 132 and the reference image. The motion compensation section 144 outputs a predicted image generated as a result of the motion compensation process to the switch 145.

The switch 145 outputs, in a case where intra prediction mode information is supplied from the lossless decoding section 132, a predicted image supplied from the intra prediction section 143 to the addition section 135. In contrast, in a case where inter prediction mode information is supplied from the lossless decoding section 132, the switch 145 outputs a predicted image supplied from the motion compensation section 144 to the addition section 135.

(Description of Processing of Decoding Apparatus)

FIG. 20 is a flow chart illustrating an image generation process of the decoding apparatus of FIG. 18.

In step S301 of FIG. 20, the reception section 112 of the decoding apparatus 110 receives an encoded stream transmitted from the encoding apparatus 10 of FIG. 8 and outputs the encoded stream to the extraction section 113.

In step S302, the extraction section 113 extracts encoded data and a parameter set from the encoded stream supplied from the reception section 112. The extraction section 113 outputs the encoded data to the decoding section 114. The extraction section 113 outputs the parameter set to the control section 111.

The control section 111 controls the decoding section 114 on the basis of information included in the parameter set.

In step S303, the decoding section 114 decodes encoded data supplied from the extraction section 113 according to an instruction of the control section 111. Details of the decoding process are described with reference to FIG. 21 described later. Thereafter, the image generation process is ended.

FIG. 21 is a flow chart illustrating details of the decoding process in step S303 of FIG. 20.

In step S331 of FIG. 20, the accumulation buffer 131 of the decoding section 114 receives and accumulates encoded data in a unit of a frame from the extraction section 113. The accumulation buffer 131 outputs the encoded data accumulated therein to the lossless decoding section 132.

In step S332, the lossless decoding section 132 performs lossless decoding on the encoded data from the accumulation buffer 131 to obtain a quantized value and encoding information. The lossless decoding section 132 outputs the quantized value to the dequantization section 133.

The lossless decoding section 132 outputs the intra prediction mode information and so forth to the intra prediction section 143. The lossless decoding section 132 outputs a motion vector, inter prediction mode information, information for specifying a reference image, and so forth to the motion compensation section 144.

Further, the lossless decoding section 132 outputs intra prediction mode information or inter prediction mode information to the switch 145. The lossless decoding section 132 supplies offset filter information to the adaptive offset filter 137 and outputs the filter coefficient to the adaptive loop filter 138.

In step S333, the lossless decoding section 132 performs a split structure determination process for a CU on the basis of information and a split flag included in the parameter set according to an instruction of the control section 111. By step S333, a CU split structure is determined. The components of the decoding section 114 use the CU of the split structure determined by the lossless decoding section 132 to perform individual processes.

In step S334, the dequantization section 133 dequantizes the quantized value supplied from the lossless decoding section 132. The dequantization section 133 outputs an orthogonal transform process result after the dequantization to the inverse orthogonal transform section 134.

In step S335, the inverse orthogonal transform section 134 performs an orthogonal transform process for the orthogonal transform process result supplied from the dequantization section 133.

In step S336, the motion compensation section 144 decides whether or not inter prediction mode information has been supplied from the lossless decoding section 132. In a case where it is decided in step S335 that inter prediction mode information has been supplied, the processing advances to step S336.

In step S337, the motion compensation section 144 reads out a reference image on the basis of reference image specification information supplied from the lossless decoding section 132 and performs a motion compensation process of an optimum inter prediction mode indicated by the inter prediction mode information, using the motion vector and the reference image. The motion compensation section 144 outputs a predicted image after the motion compensation to the addition section 135 through the switch 145. Thereafter, the processing advances to step S339.

Conversely, in a case where it is decided in step S336 that inter prediction mode information has not been supplied, namely, in a case where intra prediction mode information has been supplied to the intra prediction section 143, the processing advances to step S338.

In step S338, the intra prediction section 143 uses surrounding images read out from the frame memory 141 through the switch 142 to perform an intra prediction process of an intra prediction mode indicated by the intra prediction mode information. The intra prediction section 143 outputs a predicted image generated as a result of the intra prediction process to the addition section 135 through the switch 145. Thereafter, the processing advances to step S339.

In step S339, the addition section 135 adds residual information supplied from the inverse orthogonal transform section 134 and the predicted image supplied from the switch 145 to perform decoding. The addition section 135 outputs a decoded image to the deblock filter 136 and the frame memory 141.

In step S340, the deblock filter 136 performs a deblock filter process for the image supplied from the addition section 135 to remove block distortion. The deblock filter 136 outputs an image after the deblock filter process to the adaptive offset filter 137.

In step S341, the adaptive offset filter 137 performs an adaptive offset filter process for the image after the deblock filter process on the basis of the offset filter information supplied from the lossless decoding section 132. The adaptive offset filter 137 outputs the image after the adaptive offset filter process to the adaptive loop filter 138.

In step S342, the adaptive loop filter 138 performs an adaptive loop filter process for each LCU using a filter coefficient supplied from the lossless decoding section 132 for the image supplied from the adaptive offset filter 137. The adaptive loop filter 138 supplies the image after the adaptive loop filter process to the frame memory 141 and the screen image sorting buffer 139.

In step S343, the frame memory 141 accumulates the image supplied from the addition section 135 and the image supplied from the adaptive loop filter 138.

Images adjacent to the CU among the images that are accumulated in the frame memory 141 and have not undergone a filter process are supplied as surrounding images to the intra prediction section 143 through the switch 142. Meanwhile, images that are accumulated in the frame memory 141 and have undergone the filter processes are supplied as reference images to the motion compensation section 144 through the switch 142.

In step S344, the screen image sorting buffer 139 stores images supplied from the adaptive loop filter 138 in a unit of a frame, sorts the images in a unit of a frame in an encoding order into those in an original displaying order and outputs resulting images to the D/A conversion section 140.

In step S345, the D/A conversion section 140 D/A converts the image after the adaptive loop filter process and outputs the resulting image. Then, the processing returns to step S303 of FIG. 20 and is ended.

The encoding side excludes, in a CU split structure determination process, a case in which the size of each of CUs for Y is smaller than $8 \times 8$ in such a manner as described above. In other words, a split structure of a CU in a case where the size of each of CUs for Cb/Cr is $2 \times 2$ can be excluded from choices for determining a CU split structure. Accordingly, it is possible to reduce delay due to the intra prediction prediction.

It is to be noted that the first embodiment described above is directed to a case in which a CU for Y and a CU for Cb/Cr have a same split structure.

According to the technology of the first embodiment, the splitting of a CU is not made small, and processing is made to be ended to avoid great delay. However, since the CUs for Cb/Cr are not made small, CUs for Y cannot be made small as well.

Actually, if a size of $4 \times 4$ cannot be used for a CU for Y, deterioration of the encoding efficiency is concerned.

Therefore, in a second embodiment described next, a separate tree is applied.

<2. Second Embodiment (Separate Tree)

(Description of Separate Tree)

FIG. 22 is a view depicting an example of a separate tree.

In FIG. 22, a tree for determining a split structure of a CU for Y and a tree for determining a split structure of a CU for Cb/Cr are depicted.

As depicted in FIG. 22, a technology for causing a CU for Y and a CU for Cb/Cr to have split structures different from each other is available, and this technology is called a separate tree. In particular, in regard to a separate tree, a CU split structure determination process for Y and a split structure determination process for Cb/Cr are performed.

In view of this, in the second embodiment, application of the separate tree enables CUs for Y to have a size of $4 \times 4$, thereby reducing deterioration of the encoding efficiency.

It is to be noted that the example of the first embodiment and the example of the second embodiment are different from each other only in that a separate tree is used and in the CU split structure determination process. Accordingly, since the configuration and the other processes of the encoding apparatus 10 and the other processes of the decoding apparatus 110 are basically same with each other, only the CU split structure determination process is described below with use of the encoding apparatus 10.

(Operation of Encoding Apparatus)

FIGS. 23 and 24 are flow charts illustrating another example of the CU split structure determination process in step S33 of FIG. 9.

In step S401 of FIG. 23, the control section 11 decides whether or not the CTU for Y has been split by the QT.

In a case where it is decided in step S401 that the CTU for Y has been split by the QT, the processing advances to step S402.

In step S402, the encoding section 13 calculates RD costs of CUs by the QT.

Conversely, in a case where it is decided in step S401 that the CTU for Y has not been split by the QT, the processing advances to step S403.

In step S403, the encoding section 13 performs a calculation process of the RD cost of each of CUs by the Non split.

In step S404, the encoding section 13 performs a calculation process of the RD cost of each of CUs by the BT. Details of the calculation process of the RD cost of each of CUs by the BT are processes basically same as the calculation process of the RD cost by the BT of FIG. 15 described hereinabove. By performing step S404, RD costs of the CUs by the BT are calculated without any limitation to the CUs.

In step S405, the encoding section 13 performs a calculation process of the RD cost of each of the CUs by the TT. Details of the calculation process of the RD cost of each of the CUs by the TT are a process basically same as the calculation process of the RD cost by the TT of FIG. 16 described hereinabove. By performing step S405, RD costs of the CUs by the TT are calculated without any limitation to the CUs.

In step S406, the control section 11 controls the encoding section 13 to encode the CTU using a split structure in which the RD cost is lowest from among the calculated RD costs.

In step S407 of FIG. 24, the control section 11 decides whether or not the CTU of Cb/Cr has been split by the QT.

In a case where it is decided in step S407 that the CTU of Cb/Cr has been split by the QT, the processing advances to step S408.

In step S408, the control section 11 decides whether or not the size of each of CUs for Cb/Cr after QT splitting is other than 2 × 2.

In a case where it is decided in step S408 that the size of each of CUs for Cb/Cr after QT splitting is other than 2 × 2, the processing advances to step S409.

In step S409, the encoding section 13 calculates the RD cost of each of CUs by the QT.

Conversely, in a case where it is decided in step S407 that the CTU of Cb/Cr has not been split by the QT or in a case where it is decided in step S408 that the size of each of CUs for Cb/Cr after QT splitting is 2 × 2, the processing advances to step S410.

In step S410, the encoding section 13 performs a calculation process of the RD cost of each of CUs by the Non split.

In step S411, the encoding section 13 performs a calculation process of the RD cost of each of CUs by the BT. Details of the calculation process of the RD cost of each of CUs by the BT are described with reference to FIG. 28 described later. By performing step S411, RD costs of the CUs by the BT are calculated.

In step S412, the encoding section 13 performs a calculation process of the RD cost of each of CUs by the TT. Details of the calculation process of the RD cost of each of CUs by the TT are described with reference to FIG. 26 described later. By performing step S412, RD costs of the CUs by the TT are calculated.

In step S413, the control section 11 controls the encoding section 13 to encode the CTU using a split structure in which the RD cost is lowest from among the calculated RD costs.

It is to be noted that the steps S401 to S406 described above correspond to the CU split structure determination process for Y. Steps S407 to S413 correspond to the CU split structure determination process for Cr/Cb.

FIG. 25 is a flow chart illustrating details of the calculation process of the RD cost by the BT in step S411 of FIG. 24.

In step S431 of FIG. 25, the control section 11 decides whether or not the size of each of CUs for Cb/Cr after Horizontal BT splitting is other than 2 × 2.

In a case where it is decided in S431 that the size of each of CUs for Cb/Cr after Horizontal BT splitting is other than 2 × 2, the processing advances to step S432.

In step S432, the encoding section 13 splits by the Horizontal and calculates the RD cost.

In case where it is decided in step S431 that the size of each of CUs for Cb/Cr after Horizontal BT splitting is 2 × 2, then the processing skips step S432 and advances to step S433.

In step S433, the control section 11 decides whether or not the size of each of CUs for Cb/Cr after vertical BT splitting is other than 2 × 2.

If it is decided in step S433 that the size of each of CUs for Cb/Cr after Vertical BT splitting is other than 2 × 2, the processing advances to step S434.

In step S434, the encoding section 13 splits by the Vertical and calculates the RD cost.

In a case where it is decided in step S433 that the size of each of CUs for Cb/Cr after Vertical BT splitting is 2 × 2, the processing skips step S434 and advances to step S435.

In step S435, the control section 11 adopts a split structure in which the RD cost is lowest from among the calculated RD costs and uses the split structure to the RD cost of the CU by the BT.

FIG. 26 is a flow chart illustrating details of the calculation process of the RD cost by the TT in step S412 of FIG. 24.

In step S451 of FIG. 26, the control section 11 decides whether or not the size of each of CUs for Cb/Cr after Horizontal TT splitting is other than 2 × 2.

In a case where it is decided in step S451 that the size of each of CUs for Cb/Cr after Horizontal TT splitting is other than 2 × 2, the processing advances to step S452.

In step S452, the encoding section 13 splits by the Horizontal and calculates the RD cost.

In a case where it is decided in step S451 that the size of each of CUs for Cb/Cr after Horizontal TT splitting is 2 × 2, the processing skips S452 and advances to step S453.

In step S453, the control section 11 decides whether or not the size of each of CUs for Cb/Cr after Vertical TT splitting is other than 2 × 2.

In a case where it is decided in step S453 that the size of each of CUs for Cb/Cr after Vertical TT splitting is other than 2 × 2, the processing advances to step S454.

In step S454, the encoding section 13 splits by the Vertical and calculates the RD cost.

In a case where it is decided in step S453 that the size of each of CUs for Cb/Cr after Vertical TT splitting is 2 × 2, the processing skips step S454 and advances to step S455.

In step S455, the control section 11 adopts a split structure in which the RD cost is lowest from among the calculated RD costs and uses the split structure to the RD cost of the CU by the TT.

The case in which the size of each of CUs for Cb/Cr is smaller than 2 × 2 is excluded in the CU split structure determination process as described above. Accordingly, a split structure of a CU in a case where the size of each of CUs for Cb/Cr is 2 × 2 can be excluded from choices for determining a split structure for a CU. Accordingly, delay in intra prediction can be reduced.

Further, since the separate tree is used, as the size of each of CUs for Y, 4 × 4 can be used. Accordingly, deterioration of the encoding efficiency can be reduced.

It is to be noted that, although the foregoing description is directed to an example in which the encoding side avoids the case in which the size of each of CUs for Cb/Cr becomes 2 × 2, in an embodiment described in the following, the split structure for a CU is restricted by high level syntax.

<3. Third Embodiment (Minimum CU Is Added to Syntax)

(Description of Syntax)

FIG. 27 is a view depicting an example of semantics regarding a separate tree.

In FIG. 27, semantics that defines information necessary for decoding an SPS relating to a separate tree is excerpted and indicated.

The semantics defines information regarding a resolution, a 4:2:0 chroma format, and so forth. Especially, since the SPS or the like are used through overall encoding of a moving image, it is called high level syntax.

It is to be noted that, in FIG. 27, a numeral is added to the left side for the convenience of description.

In the first to third lines, there is indicated "qtbtt_dual_tree_intra_flag equal to 1 specifies that for I slices, each CTU is spilit into coding units with 64×64 luma samples using an implicit quadtree split and that these coding units are the root of two separate coding_quadtree syntax structure for luma and chroma." The description, dual_tree, is an alias of the separate tree. The separate tree is called also dual_tree. The first to third lines describe information that specifies whether or not the separate tree is to be used.

In the fourth line, there is indicated "log2_ctu_size_minus2 plus2 specifies the luma coding tree block size of each CTU." In the fourth line, information that specifies a size of the coding tree block of luminance in each CTU is indicated.

In the sixth to eighth lines, there is indicated "log2_min_qt_size_intra_slices_minus2 plus2 specifies the minimum luma size of a leaf block resulting from quadtree splitting of a CTU in slices with slice_type equal to 2(1). The value of log2_min_qt_size_intra_slices_minus2 shall be in the range of 0 to Ctblog2SizeY-2, inclusive."

In the ninth line, "MinQtLog2SizeIntraY = log2_min_qt_size_intra_slices_minus2+2(7-22)" is indicated.

In the tenth line, "[Ed.(BB):the leaf of a quadtree can either be a coding unit or the root a nested multi-type tree.]" is indicated.

In the eleventh to thirteenth lines, there is indicated "log2_min_qt_size_inter_slices_minus2 plus 2 specifies the minimum luma size of a leaf block resulting from quadtree slitting of a CTU in slices with slice_type equal to 0(B) or 1(P). The value of log2_min qt_size_inter_slices_minus2 shall be in the range of 0 to CtbLog2SizeY - 2, inclusive."

In the fourteenth line, "MinQtLog2SizeInter = log_min_qt_size_inter_slices_minus2 + 2 (7-23)" is indicated.

In the fifteenth to seventeenth lines, there is indicated "max_mtt_hierarchy_depth_inter_slices specifies the maxmum hierarchy depth for coding units resulting from multi-type tree splitting of a quadtree leaf in slices with slice_type equal to 0(B) or 1(P). The value of max_mtt_hierarchy_depth_inter_slices shall be in the range of 0 to CtbLog2SizeY - MinTbLog2SizeY, inclusive." The description, mtt, is an alias of BT/TT. BT/TT is called also mtt.

In the eighteenth to twentieth lines, there is indicated "max_mtt_hierarchy_depth_intra_slices specifies the maxmum hierarchy depth for coding units resulting from multi-type tree splitting of a quadtree leaf in slices with slice_type equal to 2(1). The value of max_mtt_hierarchy_depth_intra_slices shall be in the range of 0 to CtbLog2SizeY - MinTbLog2SizeY, inclusive."

FIG. 28 is a view depicting a split structure of a CU that can be controlled using the information described in FIG. 27.

Referring to FIG. 28, a circle with hatch represents QT splitting. A dark circle represents BT/TT splitting.

The description

"log2_min_qt_size _intra _slices_minus2" (eleventh line of FIG. 27) is information that designates a minimum size of QT splitting in the case of an I slice.

In FIG. 28, an example in which the minimum size of QT splitting is 1 is indicated as "log2_min_qt_size_intra_slices minus2" : 1. The expression "log2_min_qt_size_intra_slices_minus2" : 1 represents the cube of 2 and is interpreted as 8. In other words, 8 × 8 is the minimum of QT splitting.

If a CTU is split by the QT from the top until 8 × 8 is reached, further QT splitting cannot be performed by "log2_min_qt_size_intra_slices_minus2" : 1. In the case of FIG. 8, after second top QT splitting at which 8 × 8 is reached, only BT/TT splitting can be performed.

Further, "max_mtt_hierarchy_depth_intra_slices" (eighteenth line of FIG. 27) is information that designates a depth down to which BT/TT splitting after QT splitting in the case of an I slice is possible.

In FIG. 28, an example in which the depth with which BT/TT splitting is possible is 3 is indicated as "max_mtt_hierarchy_depth_intra_slices" : 3. In the case of FIG. 28, after second top QT splitting at which 8 × 8 is reached, BT/TT splitting can be performed up to the third stage.

In actual use, since splitting is permitted to 4 × 4, if BT splitting is performed vertically and BT splitting is performed horizontally, 4 × 4 is reached, so that splitting cannot be performed any more.

FIG. 29 is a view depicting an example in which, assuming the separate tree, it is made possible to perform the control of FIG. 28 separately for Y and Cb/Cr.

In FIG. 29, "log2_min_qt_size _intra_slices_luma minus2" and "log2_min_qt_size_intra_slices_chroma_minus2" are indicated. The description "log2_min_qt_size_intra_slices_luma_minus2" is information that designates a minimum size of QT splitting of Y. The description "log2_min_qt_size_intra_slices_chroma minus2" is information that designates a minimum size of QT splitting of Cb/Cr.

Further, in FIG. 29, "max_mtt_hierarchy_depth_intra_luma_slices" and "max_mtt_hierarchy_depth_intra_chroma_slices" are indicated. The description "max_mtt_hierarchy_depth_intra_luma_slices" is information that designates a depth with which BT/TT splitting of Y is possible. The description "max_mtt_hierarchy_depth_intra_chroma_slices" is information that designates a depth with which BT/TT splitting of Cb/Cr is possible.

It is to be noted that, although the split structure of a CU depicted in FIG. 29 is a split structure similar to that of FIG. 28, in FIG. 29, only one example of Y or Cb/Cr is depicted. Further, though not described in the semantics, in software of WC, Y and Cb/Cr can be designated separately only for an I slice.

FIG. 30 is a view depicting an example in which the information described in FIG. 27 is used such that only each of CUs for Cb/Cr has a size of 4 × 4 as a minimum.

In FIG. 30, an example in which the depth with which the minimum size of QT splitting of Y is 0 is indicated as "log2_min_qt_size_intra_slices_luma minus2" : 0. The description "log2_min_qt_size_intra_slices_luma_minus2" represents the square of 2 and is interpreted as 4. In other words, 4 × 4 is the minimum of QT splitting of Y.

Further, FIG. 30 depicts an example in which the depth with which BT/TT splitting is possible is 3 is indicated as "max_mtt_hierarchy_depth_intra_luma_slices" : 3.

It is to be noted that, in FIG. 30, an example of a split structure of a CU for Y is not depicted but only one example of a split structure of a CU for Cb/Cr is depicted.

In FIG. 30, an example in which the minimum size of QT splitting of Cb/Cr is 0 is indicated as "log2_min_qt_sizeè_intra_slices_chroma_minus2" : 0. The expression "log2_min_qt_size_intra_slices_chroma_minus2" : 0 represents the square of 2 and is interpreted as 4. In other words, 4 × 4 is the minimum of QT splitting of Cb/Cr.

Further, in FIG. 30, an example in which the depth with which BT/TT splitting is possible is 0 is depicted as "max_mtt_hierarchy_depth_intra_chroma_slices" : 0. In the case of FIG. 30, after second top QT splitting at which 4 × 4 is reached, BT/TT splitting cannot be performed anymore.

By determining a CU split structure in such a manner as described above, the minimum size of each of CUs for Cb/Cr can be made 4 × 4.

However, since the method of the description of FIG. 30 disables use of BT/TT splitting, the encoding efficiency decreases. Therefore, new information is set as depicted in FIG. 31.

FIG. 31 is a view depicting an example of a split structure of a CU for Cb/Cr set by the new information.

In FIG. 31, there are indicated "log2_min_qt_size_intra_slices_luma_minus2" and "log2_min_qt_size_intra_slices_chroma_minus2" described hereinabove with reference to FIG. 29. There are indicated "max_mtt_hierarchy_depth_intra_luma_slices" and "max_mtt_hierarchy_depth_intra_chroma_slices."

Further, in FIG. 31, "min_cu_size_idc_intra_slice_luma," "min_cu_size_idc_intra_slice_chroma," "min_cu_size_idc_inter_slice_luma," and "min_cu_size_idc_inter_slice_choma" are newly indicated.

The description "min_cu_size_idc_intra_slice_luma" is information that designates a minimum size of a CU for Y in an I slice (intra prediction).

The description "min_cu_size_idc_intra_slice_chroma" is information that designates a minimum size of a CU for Cb/Cr in an I slice.

The description "min_cu_size_idc_inter_slice_luma" is information that designates a minimum size of a CU for Y in a P/B slice (inter prediction).

The description "min_cu_size_idc_inter_slice_choma" is information that designates a minimum size of a CU of a Cb/Cr in a P/B slice.

Further, for a CU of Cb/C, 0 to 2 are defined as described below. In particular, in a case where the information that designates a minimum size of a CU of a Cb/Cr is 0, sizes down to 2 × 2 can be used. In a case where the information that designates a minimum size of a CU of a Cb/Cr is 1, sizes down to 2 × 4 and 4 × 2 can be used. In a case where the information that designates a minimum size of a CU of a Cb/Cr is 2, sizes down to 4 × 4 can be used.

Regarding a CU for Y, 0 to 2 are defined as given below. In particular, in a case where the information that designates a minimum size of a CU for Y is 0, sizes down to 4 × 4 can be used. In a case where the information that designates a minimum size of a CU for Y is 1, sizes down to 4 × 8 and 8 × 4 can be used. In a case where the information that designates a minimum size of a CU for Y is 2, sizes down to 8 × 8 can be used.

The new information described above is sent together with the SPS in such a manner as to be included in the SPS by the encoding side.

(Example of Configuration of Embodiment of Encoding Apparatus)

FIG. 32 is a block diagram depicting an example of a configuration of an embodiment of an encoding apparatus to which the present disclosure is applied.

The encoding apparatus 210 of FIG. 32 includes a control section 211, a setting section 212, an encoding section 13, and a transmission section 14 and encodes an image by a method conforming to the VVC method.

Among the components depicted in FIG. 32, components same as those described hereinabove with reference to FIG. 5 are denoted by like reference numerals. Overlapping description is suitably omitted.

In particular, the control section 211 of the encoding apparatus 210 is configured similarly to the control section 11 of FIG. 5 and operates as a central processing device in the encoding apparatus 210.

For example, the control section 211 controls the setting section 212 to set "min_cu_size_idc_intra_slice_chroma" and "min_cu_size_idc_inter_slice_choma" of the SPS.

Further, the control section 211 controls the encoding section 13 to calculate the RD cost and determine a split structure for a CU on the basis of RD costs supplied from the encoding section 13.

At this time, in a case where "min_cu_size_idc_intra (or inter)_slice_luma" is 2, the control section 211 controls the encoding section 13 to calculate the RD cost except when the size of each of CUs for Cr/Cb after splitting is $2 \times 2$, $2 \times 4$, or $4 \times 2$. In this case, when the size of each of CUs for Cr/Cb is $2 \times 2$, $2 \times 4$, or $4 \times 2$, the RD cost is not calculated, and when the size of each of CUs for Cr/Cb is $2 \times 2$, $2 \times 4$, or $4 \times 2$, the flag is not sent.

Meanwhile, in a case where "min_cu_size_idc_intra (or inter)_slice_luma" is 1, the control section 211 controls the encoding section 13 to calculate the RD cost except when the size of each of CUs for Cr/Cb is $2 \times 2$. In this case, the RD cost when the size of each of CUs for Cr/Cb is $2 \times 2$ is not calculated, and the flag when the size of each of CUs for Cr/Cb is $2 \times 2$ is not sent.

Further, the control section 211 determines a prediction mode on the basis of RD costs similarly to the control section 11. The control section 211 controls the setting section 212 to set a parameter set on the basis of the determined split structure for a CU and prediction mode and controls the encoding section 13 to perform an encoding process.

The setting section 212 sets the SPS, PPS, VUI, SEI, and so forth according to an instruction of the control section 211. At this time, the setting section 212 sets "min_cu_size_idc_intra_slice_chroma" and "min_cu_size_idc_inter_slice_choma" of the SPS. The setting section 212 outputs the parameter set of the set SPS, PPS, VUI, SEI, and so forth to the encoding section 13.

To the encoding section 13, images in a unit of a frame are inputted. The encoding section 13 encodes the inputted images by a method conforming to the VVC method according to an instruction of the control section 211. The encoding section 13 generates an encoded stream from encoded data obtained as a result of encoding and the parameter set and outputs the encoded stream to the transmission section 14.

The transmission section 14 transmits the encoded stream supplied from the encoding section 13 to a decoding apparatus 410 described later.

(Operation of Encoding Apparatus)

FIG. 33 is a flow chart illustrating a stream generation process of the encoding apparatus of FIG. 32.

In step S511 of FIG. 33, the setting section 212 of the encoding apparatus 210 sets a parameter set. At this time, the setting section 212 sets "min_cu_size_idc_intra_slice_chroma" and "min_cu_size_idc_inter_slice_choma" of the SPS. The setting section 212 outputs the set parameter set to the encoding section 13.

In step S512, the encoding section 13 performs an encoding process for encoding images in a unit of a frame. This encoding process is a process basically same as that of FIGS. 9 and 10 described hereinabove except the CU split structure determination process (S33), and therefore, description of the encoding process is omitted. Encoded data is generated by the encoding process. The encoded data is accumulated into the accumulation buffer 37.

It is to be noted that a split structure for a CU, a prediction mode, and so forth are determined on the basis of RD costs calculated by the encoding process in step S512. The split structure for a CU and the prediction mode based on the RD costs are used in the encoding process in step S512.

In step S513, an encoded stream is generated from the parameter set supplied from the setting section 212 and the accumulated encode data and is outputted to the transmission section 14.

In step S514, the transmission section 14 transmits the encoded stream supplied from the encoding section 13 to the decoding apparatus 410 described later, and then the processing is ended.

FIGS. 34 to 36 are flow charts illustrating another example of the CU split structure determination process in step S33 of FIG. 9.

It is to be noted that FIG. 34 depicts a process in the case of an I slice.

In step S601 of FIG. 34, the control section 211 decides whether or not the CTU for Y has been split by the QT.

In a case where it is decided in step S601 that the CTU has been split by the QT, the processing advances to step S602.

In step S602, the encoding section 13 calculates the RD cost of each of the CUs by the QT.

Conversely, in a case where it is decided in step S601 that the CTU has not been split by the QT, the processing advances to step S603.

In step S603, the encoding section 13 performs a calculation process of the RD cost of each of the CUs by the Non split.

In step S604, the encoding section 13 performs a calculation process of the RD cost of each of the CUs by the BT. Since the calculation process of the RD cost of each of the CUs by the BT is a process basically same to the process of FIG. 15 described hereinabove, description of the same is omitted. By step S604, the RD cost of each of the CUs by the BT is calculated.

In step S605, the encoding section 13 performs a calculation process of the RD cost of each of the CUs by the TT. The calculation process of the RD cost of each of the CUs by the TT is a process basically same as the process of FIG. 16 described hereinabove, and therefore, description of the same is omitted. By step S605, the RD cost of each of the CUs by the TT is calculated.

In step S606, the control section 211 controls the encoding section 13 to encode the CTU using a split structure in which the RD cost is lowest from among the calculated RD costs.

In step S607 of FIG. 35, the control section 211 decides whether or not the CTU of Cb/Cr has been split by the QT.

In a case where it is decided in step S607 that the CTU has been split by the QT, the processing advances to step S608.

In step S608, the control section 211 decides whether or not, if "min_cu_size_idc_intra_slice_chorma" == 2, the size of each of CUs for Cb/Cr after splitting is other than $2 \times 2$, $2 \times 4$, or $4 \times 2$.

In a case where it is decided in step S608 that the size of each of CUs for Cb/Cr after splitting is other than $2 \times 2$, $2 \times 4$, or $4 \times 2$, the processing advances to step S609.

In step S609, the control section 211 decides whether or not, if "min_cu_size_idc_intra_slice_chroma" == 1, the size of each of CUs for Cb/Cr after splitting is other than $2 \times 2$.

In a case where it is decided in step S609 that the size of each of CUs for Cb/Cr after splitting is other than $2 \times 2$, the processing advances to step S610.

In step S610, the encoding section 13 calculates the RD cost of each of the CUs by the QT.

Conversely, in a case where it is decided in step S607 that the CTU of Cb/Cr has not been split by the QT, or in a case where it is decided in step S608 that the size of each of CUs for Cb/Cr after QT splitting is $2 \times 2$, $2 \times 4$, or $4 \times 2$, the processing advances to step S611. Also in a case where it is decided in step S609 that the size of each of CUs for Cb/Cr after QT splitting is $2 \times 2$, the processing advances to step S611. In those cases, the RD cost is not calculated, and the split flag is not sent either.

In step S611, the encoding section 13 performs a calculation process of the RD cost of each of CUs by the Non split.

In step S612, the control section 211 decides whether or not, if "min_cu_size_idc_intra_slice_chorma" == 2, the size of each of CUs for Cb/Cr after splitting is other than $2 \times 2$, $2 \times 4$, or $4 \times 2$.

In a case where it is decided in step S612 that the size of each of CUs for Cb/Cr after splitting is other than $2 \times 2$, $2 \times 4$, or $4 \times 2$, the processing advances to step S613.

In step S613, the control section 211 decides whether or not, if "min_cu_size_idc_intra_slice_chroma" == 1, the size of each of CUs for Cb/Cr is other than $2 \times 2$.

In a case where it is decided in step S613 that the size of each of CUs for Cb/Cr after splitting is other than $2 \times 2$, the processing advances to step S614.

In step S614, the encoding section 13 performs a calculation process of the RD cost of each of CUs by the BT. The calculation process of the RD cost of each of CUs by the BT is a process basically same as the calculation process of the RD cost by the BT of FIG. 15 described hereinabove. By step S614, the RD cost of each of the CUs by the BT is calculated.

Conversely, in a case where it is decided in step S613 that the size of each of CUs for Cb/Cr after QT splitting is $2 \times 2$, $2 \times 4$, or $4 \times 2$, the processing advances to step S615 of FIG. 36. Also in a case where it is decided in step S614 that the size of each of CUs for Cb/Cr after QT splitting is $2 \times 2$, the processing advances to step S615 of FIG. 36. In those cases, the RD cost is not calculated, and the split flag is not set either.

In step S615 of FIG. 36, the control section 211 decides whether or not, if "min_cu_size_idc_intra_slice_chorma == 2, the size of each of CUs for Cb/Cr after splitting is other than $2 \times 2$, $2 \times 4$ or $4 \times 2$.

In a case where it is decided in step S615 that the size of each of CUs for Cb/Cr after splitting is other than $2 \times 2$, $2 \times 4$, or $4 \times 2$, the processing advances to step S616.

In step S616, the control section 211 decides whether or not, if "min_cu_size_idc_intra_slice_chroma" == 1, the size of each of CUs for Cb/Cr after splitting is other than $2 \times 2$.

In a case where it is decided in step S616 that the size of each of CUs for Cb/Cr after splitting is other than $2 \times 2$, the processing advances to step S617.

In step S617, the encoding section 13 performs a calculation process of the RD cost of each of CUs by the TT. The calculation process of the RD cost of each of CUs by the TT is a process basically same as the calculation process of the RD cost by the TT of FIG. 16 described hereinabove. By step S617, the RD cost of each of the CUs by the TT is calculated.

Conversely, in a case where it is decided in step S615 that the size of each of CUs for Cb/Cr after QT splitting is $2 \times 2$, $2 \times 4$, or $4 \times 2$, the processing advances to step S618. Also in a case where it is decided in step S616 that the size of each of CUs for Cb/Cr after QT splitting is 2 × 2, the processing advances to step S618. In those cases, the RD cost is not calculated, and the split flag is not set either.

In step S618, the control section 11 controls the encoding section 13 to encode the CTU using a split structure in which the RD cost is lowest from among the calculated RD costs.

It is to be noted that, in FIGS. 34 to 36 described hereinabove, steps S601 to S606 are directed to the CU split structure determination process for Y. Steps S607 to S618 are directed to the CU split structure determination process for Cr/Cb.

FIGS. 37 to 39 are flow charts illustrating another example of the CU split structure determination process in step S33 of FIG. 9.

It is to be noted that, in FIG. 37, a process regarding a case of a P/B slice is depicted.

In step S651 of FIG. 37, the control section 211 decides whether or not the CTU for Y has been split by the QT.

In a case where it is decided in step S651 that the CTU for Y has been split by the QT, the processing advances to step S652.

In step S652, the encoding section 13 calculates the RD cost of each of CUs by the QT.

Conversely, in a case where it is decided in step S651 that the CTU for Y has not been split by the QT, the processing advances to step S653.

In step S653, the encoding section 13 performs a calculation process of the RD cost of each of CUs by the Non split.

In step S654, the encoding section 13 performs a calculation process of the RD cost of each of CUs by the BT. Since the calculation process of the RD cost of each of CUs by the BT is a process basically same as the process in FIG. 15 described hereinabove, description of the same is omitted. By step S654, the RD cost of each of the CUs by the BT is calculated.

In step S655, the encoding section 13 performs a calculation process of the RD cost of each of CUs by the TT. Since the calculation process of the RD cost of each of CUs by the TT is a process basically same as the process in FIG. 16 described hereinabove, description of the same is omitted. By step S655, the RD cost of each of the CUs by the TT is calculated.

In step S656, the control section 211 controls the encoding section 13 to encode the CTU using a split structure in which the RD cost is lowest from among the calculated RD costs.

In step S657 of FIG. 38, the control section 211 decides whether or not the CTU of Cb/Cr has been split by the QT.

In a case where it is decided in step S657 that the CTU has been split by the QT, the processing advances to step S658.

In step S658, the control section 211 decides whether or not, if min_cu_size_idc_inter_slice_chorma == 2, the size of each of CUs for Cb/Cr after splitting is other than 2 × 2, 2 × 4, or 4 × 2.

In a case where it is decided in step S658 that the size of each of CUs for Cb/Cr after splitting is other than 2 × 2, 2 × 4, or 4 × 2, the processing advances to step S659.

In step S659, the control section 211 decides whether or not, if min_cu_size_idc_inter_slice_chroma == 1, the size of each of CUs for Cb/Cr after splitting is other than 2 × 2.

In a case where it is decided in step S659 that the size of each of CUs for Cb/Cr is other than 2 × 2, the processing advances to step S660.

In step S660, the encoding section 13 calculates the RD cost of each of CUs by the QT.

Meanwhile, in a case where it is decided in step S657 that the CTU of Cb/Cr has not been split by the QT, or in a case where it is decided in step S658 that the size of each of CUs for Cb/Cr after QT splitting is 2 × 2, 2 × 4, or 4 × 2, the processing advances to step S661. Also in a case where it is decided in step S659 that the size of each of CUs for Cb/Cr after QT splitting is 2 × 2, the processing advances to step S661. In those cases, the RD cost is not calculated, and the split flag is not sent either.

In step S661, the encoding section 13 performs a calculation process of the RD cost of each of CUs by the Non split.

In step S662, the control section 211 decides whether or not, if min_cu_size_idc_inter_slice_chorma == 2, the size of each of CUs for Cb/Cr after splitting is other than 2 × 2, 2 × 4, or 4 × 2.

In a case where it is decided in step S662 that the size of each of CUs for Cb/Cr after splitting is other than 2 × 2, 2 × 4, or 4 × 2, the processing advances to step S663.

In step S663, the control section 211 decides whether or not, if min_cu_size_idc_inter_slice_chroma == 1, the size of each of CUs for Cb/Cr after splitting is other than 2 × 2.

In a case where it is decided in step S663 that the size of each of CUs for Cb/Cr after splitting is other than 2 × 2, the processing advances to step S664.

In step S664, the encoding section 13 performs a calculation process of the RD cost of each of CUs by the BT. The calculation process of the RD cost of each of CUs by the BT is a process basically same as the calculation process of the RD cost by the BT in FIG. 15 described hereinabove. By step S664, the RD cost of each of CUs by the BT is calculated.

Further, in a case where it is decided in step S663 that the size of each of CUs for Cb/Cr after QT splitting is 2 × 2, 2 × 4, or 4 × 2, the processing advances to step S665 of FIG. 39. Also in a case where it is decided in step S664 that the size of each of CUs for Cb/Cr after QT splitting is 2 × 2, the processing advances to step S665 of FIG. 39. In those cases, the RD cost is not calculated, and the split flag is not sent either.

In step S665 of FIG. 39, the control section 211 decides whether or not, if min_cu_size_idc_inter_slice_chorma == 2, the size of each of CUs for Cb/Cr after splitting is other than 2 × 2, 2 × 4, or 4 × 2.

In a case where it is decided in step S665 that the size of each of CUs for Cb/Cr after splitting is other than 2 × 2, 2 × 4, or 4 × 2, the processing advances to step S666.

In step S666, the control section 211 decides whether or not, if min_cu_size_idc_inter_slice_chroma == 1, the size of each of CUs for Cb/Cr after splitting is other than 2 × 2.

In a case where it is decided in step S666 that the size of each of CUs for Cb/Cr after splitting is other than 2 × 2, the processing advances to step S667.

In step S667, the encoding section 13 performs a calculation process of the RD cost of each of CUs by the TT. The calculation process of the RD cost of each of CUs by the TT is a process basically same as the calculation process of the RD cost by the TT of FIG. 16 described hereinabove. By step S667, the RD cost of each of the CUs by the TT is calculated.

Conversely, in a case where it is decided in step S665 that the size of each of CUs for Cb/Cr after QT splitting is 2 × 2, 2 × 4, or 4 × 2, the processing advances to step S668. Also in a case where it is decided in step S666 that the size of each of CUs for Cb/Cr after QT splitting is 2 × 2, the processing advances to step S668. In those cases, the RD cost is not calculated, and the split flag is not sent either.

In step S668, the control section 211 controls the encoding section 13 to encode the CTU using a split structure in which the RD cost is lowest from among the calculated RD costs.

It is to be noted that, in FIGS. 37 to 39 described above, steps S651 to S656 are directed to the CU split structure determination process for Y. Steps S657 to S668 are directed to the CU split structure determination process for Cr/Cb.

As described above, a CU of a minimum size is included in and sent together with the SPS. Since a CU of the minimum size is not used on the decoding side, the delay in intra prediction can be reduced.

At this time, since it is unnecessary in the CU split structure determination process to calculate the RD cost of a CU of an unnecessary size, the processing time can be reduced. In addition, since there is no necessity to send a split flag (CU split structure information) of a CU of an unnecessary size, the encoding efficiency can be improved.

(Example of Configuration of Embodiment of Decoding Apparatus)

FIG. 40 is a block diagram depicting an example of a configuration of an embodiment of a decoding apparatus that decodes an encoded stream transmitted from the encoding apparatus 210 of FIG. 32 and to which the present disclosure is applied.

The decoding apparatus 410 of FIG. 40 includes a control section 411, a reception section 112, an extraction section 113, and a decoding section 114.

Of the components depicted in FIG. 40, those that are same as the components described hereinabove with reference to FIG. 18 are denoted by like reference numerals. Overlapping description is omitted suitably.

The control section 411 of the decoding apparatus 410 is configured similarly to the control section 111 of FIG. 18 and operates as a central processing device of the decoding apparatus 410.

The control section 411 extracts information included in a parameter set. The control section 411 controls the decoding section 114 on the basis of the information included in the parameter set. In particular, the control section 411 outputs the information included in the parameter set of FIG. 28 and information that is set newly in the SPS and designates a minimum size of a CU to the decoding section 114 so as to perform a CU split structure determination process.

The reception section 112 receives an encoded stream transmitted from the encoding apparatus 210 of FIG. 32 and outputs the encoded stream to the extraction section 113.

The extraction section 113 extracts a parameter set and encoded data from the encoded stream supplied from the reception section 112. The extraction section 113 outputs the parameter set to the control section 411. The extraction section 113 outputs the encoded data to the decoding section 114.

The decoding section 114 decodes the encoded data supplied from the extraction section 113 by a method conforming to the VVC method according to an instruction of the control section 411. At this time, the decoding section 114 performs a CU split structure determination process according to an instruction of the control section 411, and a CU of the determined split structure is used by the decoding section 114. The decoding section 114 outputs an image after decoding.

(Operation of Decoding Apparatus)

FIG. 41 is a flow chart illustrating an image generation process of the decoding apparatus of FIG. 40.

In step S701 of FIG. 41, the reception section 112 of the decoding apparatus 410 receives an encoded stream transmitted from the encoding apparatus 210 of FIG. 32 and outputs the encoded stream to the extraction section 113.

In step S702, the extraction section 113 extracts encoded data and a parameter set from the encoded stream supplied from the reception section 112. The extraction section 113 outputs the encoded data to the decoding section 114. The extraction section 113 outputs the parameter set to the control section 411.

In step S703, the control section 411 extracts "min_cu_si_ze_idc_intra_slice_chroma" and "min_cu_size_idc_inter_slice_choma" that are information that designates a minimum size of the CU from the SPS.

The control section 411 controls the decoding section 114 on the basis of information included in the parameter set and the information that designates a minimum size of the CU.

In step S704, the decoding section 114 decodes encoded data supplied from the extraction section 113 according to an instruction of the control section 411. This decoding process is a process basically same as that of FIG. 21 described hereinabove except the CU split structure determination process (S333), and therefore, description of the same is omitted.

FIG. 42 is a flow chart illustrating an example of the CU split structure determination process in step S333 of FIG. 21.

It is to be noted that, in the description of FIG. 42, a tree depicted in FIG. 43 is referred to suitably.

FIG. 43 is a view depicting an example of a tree that is used in the CU split structure determination process.

On the tree of FIG. 43, a branch F1 to a branch F3 are depicted. Flags corresponding to the branch F1 to the branch F3 are included as split flags in and sent together with a bit stream from the encoding side.

In step S711 of FIG. 42, the lossless decoding section 132 of the decoding section 114 decides whether or not the CTU has been split by the QT.

In a case where it is decided in step S711 that the CTU has been split by the QT, the processing advances to step S712.

In step S712, the lossless decoding section 132 decides whether or not, if min_cu_size_idc_inter_slice_chorma == 2, the size of each of CUs for Cb/Cr after splitting is other than $2 \times 2$, $2 \times 4$, or $4 \times 2$.

In a case where it is decided in step S712 that the size of each of CUs for Cb/Cr after splitting is other than $2 \times 2$, $2 \times 4$, or $4 \times 2$, the processing advances to step S713.

In step S713, the lossless decoding section 132 decides whether or not, if min_cu_size_idc_inter_slice_chroma == 1, the size of each of CUs for Cb/Cr after splitting is other than $2 \times 2$.

In a case where it is decided in step S713 that the size of each of CUs for Cb/Cr after splitting is other than $2 \times 2$, the processing advances to step S714.

In step S714, the lossless decoding section 132 reads out the flag of the branch F1 depicted in FIG. 43 among the split flags.

In a case where it is decided in step S713 that the size of each of CUs for Cb/Cr after QT splitting is $2 \times 2$, $2 \times 4$ or $4 \times 2$, the processing advances to step S715. In a case where it is decided in step S714 that the size of each of CUs for Cb/Cr after QT splitting is $2 \times 2$, the processing advances to step S715.

In step S715, the lossless decoding section 132 does not read out the flag of the branch F1 and interprets the flag as 0. Thereafter, the processing advances to step S716.

Conversely, in a case where it is decided in step S711 that the CTU has not been split by the QT, the processing advances to step S716.

In step S716, the lossless decoding section 132 decides whether or not the flag of the branch F1 is 0.

In a case where it is decided in step S716 that the flag of the branch F1 is 0, the processing advances to step S717.

In step S717, the lossless decoding section 132 decides whether or not, if min_cu_size_idc_inter_slice_chorma == 2, the size of each of CUs for Cb/Cr after splitting is other than $2 \times 2$, $2 \times 4$, or $4 \times 2$.

In a case where it is decided in step S717 that the size of each of CUs for Cb/Cr after splitting is other than $2 \times 2$, $2 \times 4$, or $4 \times 2$, the processing advances to step S718.

In step S718, the lossless decoding section 132 decides whether or not, if min_cu_size_idc_intra_slice_chroma == 1, the size of each of CUs for Cb/Cr after splitting is other than $2 \times 2$.

In a case where it is decided in step S718 that the size of each of CUs for Cb/Cr after splitting is other than $2 \times 2$, the processing advances to step S719.

In step S719, the lossless decoding section 132 reads out a flag of the branch F2 depicted in FIG. 43 among the split flags. Thereafter, the processing advances to step S721.

Conversely, in a case where it is decided in step S717 that the size of each of CUs for Cb/Cr after QT splitting is $2 \times 2$, $2 \times 4$, or $4 \times 2$, the processing advances to step S720. Also in a case where it is decided in step S718 that the size of each of CUs for Cb/Cr after QT splitting is $2 \times 2$, the processing advances to step S720.

In step S720, the lossless decoding section 132 does not read out the flag of the branch F2 and interprets the flag as 0. Thereafter, the processing advances to step S721.

In step S721, the lossless decoding section 132 decides whether or not the flag of the branch F2 is 1.

In a case where it is decided in step S721 that the flag of the branch F2 is 1, the processing advances to step S722.

In step S722, the lossless decoding section 132 reads out the flag of the branch F3 depicted in FIG. 43 from within the CU split structure information, and the CU split structure determination process is ended.

In a case where it is decided in step S716 that the flag of the branch F1 is 1 or in a case where it is decided in step S721 that the flag of the branch F2 is 0, the CU split structure determination process is ended.

Since a CU of a minimum size is included in and sent together with the SPS and a CU of the minimum size is not used on the decoding side as described above, the delay in intra prediction can be reduced.

It is to be noted that, although FIG. 42 is directed to a case of an I slice, the process in the case of a P/B slice is different only in type of the slice, and a similar process to that in the case of an I slice is performed, and therefore, description of the process is omitted.

Further, although, in the foregoing description, a CU of the minimum size is included in the SPS, the CU of the minimum size of may be included in some other syntax such as the PPS.

<4. Fourth Embodiment (Determination of Minimum CU by Standard)>

In a fourth embodiment, a CU of a minimum size is not added to the high level syntax, and a size of $2 \times 2$ cannot be used for a CU for Cr/Cb by a standard.

In particular, it is determined by a standard such that min_cu_size_idc_intra_slice_chroma == 2 is used, and decoding is performed according to the standard.

It is to be noted that the method of determining a minimum size of the CU is not restrictive, and any other contrivances may be applied as long as a size of $2 \times 2$ of Cb/Cr cannot be used.

By determining the CU of the minimum size by a standard as described above, large delay that may possibly occur in the case of $2 \times 2$ of Cb/Cr can be avoided.

In the foregoing description, a method conforming to VVC is used as the encoding method. However, the present technology is not restricted to this and can apply other encoding methods/decoding methods.

It is to be noted that, although the third embodiment described above is directed also to an example in which not only $2 \times 2$ but also $2 \times 4$ or $4 \times 2$ are excluded, also in the first, second, and fourth embodiments, it is possible to exclude not only $2 \times 2$ but also $2 \times 4$ or $4 \times 2$.

Also, although a case of a chroma format of 4:2:0 is described in the foregoing description, also application to other chroma formats is possible.

It is to be noted that the present disclosure can be applied to an image encoding apparatus and an image decoding apparatus that are used when image information (bit stream) compressed by orthogonal transform such as discrete cosine transform and motion compensation is received through a network medium such as a satellite broadcast, a cable television, the Internet, or a mobile phone, for example, like the VVC method. Moreover, the present disclosure can be applied to an image encoding apparatus and an image decoding apparatus that are used when image information is processed on a storage medium such as an optical or magnetic disk or a flash memory.

<5. Fifth Embodiment>

(Description of Computer to Which Present Disclosure Is Applied)

While the series of processes described above can be executed by hardware, it can otherwise be executed also by software. In a case where the series of processes is executed by software, a program that constructs the software is installed into a computer. The computer here includes a computer that is incorporated in hardware for exclusive use, a personal computer, for example, for universal use that can execute various kinds of functions by installing various kinds of programs into the personal computer and so forth.

FIG. 44 is a block diagram depicting an example of a hardware configuration of a computer that executes the series of processes described hereinabove according to a program.

In the computer, a CPU (Central Processing Unit) 501, a ROM (Read Only Memory) 502, and a RAM (Random Access Memory) 503 are connected to one another by a bus 504.

Further, an input/output interface 505 is connected to the bus 504. An inputting section 506, an outputting section 507, a storage section 508, a communication section 509, and a drive 510 are connected to the input/output interface 505.

The inputting section 506 includes, for example, a keyboard, a mouse, a microphone, and so forth. The outputting section 507 includes a display, a speaker, and so forth. The storage section 508 includes, for example, a hard disk, a nonvolatile memory, or the like. The communication section 509 includes a network interface or the like. The drive 510 drives a removable medium 511 such as a magnetic disk, an optical disk, a magnetooptical disk, or a semiconductor memory.

In the computer configured in such a manner as described above, the CPU 501 loads a program stored, for example, in the storage section 508 into the RAM 503 through the input/output interface 505 and the bus 504 and executes the program to perform the series of processes described above.

The program to be executed by the computer (CPU 501) can be recorded on and provided as the removable medium 511, for example, as a package medium or the like. Also, it is possible to provide the program through a wired or wireless transmission medium such as a local area network, the Internet, or a digital satellite broadcast.

In the computer, the program can be installed into the storage section 508 through the input/output interface 505 by mounting the removable medium 511 on the drive 510. Moreover, the program can be received by the communication section 509 through a wired or wireless transmission medium and installed into the storage section 508. Further, the program can be installed in advance in the ROM 502 or the storage section 508.

It is to be noted that the program to be executed by the computer may be a program by which processes are performed in a time series in the order as described in the present specification or processes are performed in parallel or performed at necessary timings such as when the process is called.

It is to be noted that, in the present specification, an example is described in which various kinds of information are multiplexed in encoded data and transmitted from the encoding side to the decoding side. However, the technique for transmitting such information is not limited to this example. For example, such information may be transmitted or recorded as separate data associated with encoded data without being multiplexed with the encoded data. Here, the term "to associate" signifies making it possible to link, upon decoding, an image included in a bit stream (which may be part of an image such as a slice or a block) and information corresponding to the image. In particular, the information may be transmitted on a transmission line different from that for the encoded data. Further, the information may be recorded on a recording medium that is different from that for the encoded data (or is another recording area of a same recording medium). Furthermore, the information and the encoded data may be associated with each other in a freely selected unit such as, for example, a plurality of frames, one frame, or part of a frame.

Further, in the present specification, the term system is used to signify an aggregation of a plurality of components (devices, modules (parts), and so forth) and it does not matter whether or not all components are accommodated in the same housing. Accordingly, a plurality of apparatuses accommodated in separate housings and connected to each other through a network is a system, and also one apparatus in which a plurality of modules is accommodated in a single housing is a system.

The advantageous effects described in the present specification are illustrative only and are not restrictive. There may also be other advantageous effects.

The embodiment of the present disclosure is not restricted to the embodiments described hereinabove, but various alterations are possible without departing the subject matter of the present disclosure.

It is to be noted that the present disclosure can be applied to an image encoding apparatus and an image decoding apparatus that are used when an encoded stream is received through a network medium such as a satellite broadcast, a cable TV, the Internet, or a mobile phone or when an encoded stream is processed on a storage medium such as an optical or magnetic disk or a flash memory.

Further, the present disclosure can take a configuration for cloud computing by which one function is shared and processed cooperatively by a plurality of apparatuses through a network.

Further, each of the steps of the flow charts described hereinabove can be executed by a single apparatus or can be shared and executed by a plurality of apparatuses.

Further, in a case where a plurality of processes is included in one step, the plurality of processes included in the one step can be executed by one apparatus or can be shared and executed by a plurality of apparatuses.

Although the preferred embodiments of the present disclosure have been described in detail with reference to the accompanying drawings, the present disclosure is not limited to such examples. It is apparent that persons who have common knowledge in the technical field to which the present disclosure pertains could have achieved various alterations or modifications within the scope of the technical idea described in the claims, and it is recognized that also they fall within the technical scope of the present disclosure as a matter of course.

It is to be noted that the present technology can also take in the following configurations.

(1) An image processing apparatus including:

a control section configured to exclude, when a CU split structure for luminance and a CU split structure for chroma are to be determined, for the chroma, a CU split structure that is a minimum size in at least one of a vertical direction or a horizontal direction to determine a CU split structure for the chroma; and
an encoding section configured to encode an image with the CU split structure for luminance and the CU split structure for chroma to generate an encoded stream.

(2) The image processing apparatus according to (1) above, in which
the CU split structure that is a minimum size in at least one of the vertical direction or the horizontal direction has a size of $2 \times 2$, $4 \times 2$, or $2 \times 4$.
(3) The image processing apparatus according to (1) or (2) above, further including:

a cost calculation section configured to calculate a cost for the CU split structure for luminance and a cost for the CU split structure for chroma, in which
the control section determines, for the luminance, a CU split structure for luminance on the basis of the cost for the CU split structure for luminance, and
inhibits, for the chroma, calculation of the CU split structure cost for chroma for the minimum CU split structure and determines the CU split structure for chroma on the basis of the cost for the CU split structure for chroma.

(4) The image processing apparatus according to any one of (1) to (3) above, further including:

a setting section configured to set syntax in which the minimum CU split structure is described, wherein
the control section determines, for the chroma, the CU split structure for chroma by excluding the minimum CU split structure on the basis of the syntax.

(5) The image processing apparatus according to (4) above, further including:

a transmission section configured to transmit the syntax and the encoded stream.

(6) The image processing apparatus according to (4) above, in which
the syntax includes the SPS.

(7) The image processing apparatus according to any one of (1) to (3) above, in which
the minimum CU split structure is defined by a standard.

(8) An image processing method performed by an image processing apparatus, including:

excluding, when a CU split structure for luminance and a CU split structure for chroma are to be determined, for the chroma, a CU split structure that is a minimum size in at least one of a vertical direction or a horizontal direction to determine a CU split structure for the chroma; and
encoding an image with the CU split structure for luminance and the CU split structure for chroma to generate an encoded stream.

(9) A program for causing a computer to function as:

a control section configured to exclude, when a CU split structure for luminance and a CU split structure for chroma are to be determined, for the chroma, a CU split structure that is a minimum size in at least one of a vertical direction or a horizontal direction to determine a CU split structure for the chroma; and
an encoding section configured to encode an image with the CU split structure for luminance and the CU split structure for chroma to generate an encoded stream.

(10) An image processing apparatus including:

a control section configured to exclude, when a CU split structure for luminance and a CU split structure for chroma are to be determined, for the chroma, a CU split structure that is a minimum size in at least one of a vertical direction or a horizontal direction to determine a CU split structure for the chroma and determine a CU split structure for the luminance and a CU split structure for the chroma on the basis of an encoded stream generated by encoding an image with the CU split structure for luminance and the CU split structure for chroma; and
a decoding section configured to decode the encoded stream to generate the image on the basis of the CU split structure for luminance and the CU split structure for chroma.

(11) An image processing method performed by an image processing apparatus, including:

excluding, when a CU split structure for luminance and a CU split structure for chroma are to be determined, for the chroma, a CU split structure that is a minimum size in at least one of a vertical direction or a horizontal direction to determine a CU split structure for the chroma and determine a CU split structure for the luminance and a CU split structure for the chroma on the basis of an encoded stream generated by encoding an image with the CU split structure for luminance and the CU split structure for chroma; and
decoding the encoded stream to generate the image on the basis of the CU split structure for luminance and the CU split structure for chroma.

(12) A program for causing a computer to function as:

a control section configured to exclude, when a CU split structure for luminance and a CU split structure for chroma are to be determined, for the chroma, a CU split structure that is a minimum size in at least one of a vertical direction or a horizontal direction to determine a CU split structure for the chroma and determine a CU split structure for the luminance and a CU split structure for the chroma on the basis of an encoded stream generated by encoding an image with the CU split structure for luminance and the CU split structure for chroma; and
a decoding section configured to decode the encoded stream to generate the image on the basis of the CU split structure for luminance and the CU split structure for chroma.

[Reference Signs List]

10:    Encoding apparatus
11:    Control section
12:    Setting section
13:    Encoding section
14:    Transmission section
46:    Intra prediction section
47:    Motion prediction and compensation section

36: Encoding section
110: Decoding apparatus
111: Control section
112: Reception section
113: Extraction section
114: Decoding section
132: Lossless decoding section
143: Intra prediction section
144: Motion compensation section
210: Encoding apparatus
211: Control section
212: Setting section
410: Decoding apparatus
411: Control section

**Claims**

1. An image processing apparatus comprising:

   a control section configured to exclude, when a CU split structure for luminance and a CU split structure for chroma are to be determined, for the chroma, a CU split structure that is a minimum size in at least one of a vertical direction or a horizontal direction to determine a CU split structure for the chroma; and
   an encoding section configured to encode an image with the CU split structure for luminance and the CU split structure for chroma to generate an encoded stream.

2. The image processing apparatus according to claim 1, wherein
   the CU split structure that is a minimum size in at least one of the vertical direction or the horizontal direction has a size of $2 \times 2$, $4 \times 2$, or $2 \times 4$.

3. The image processing apparatus according to claim 1, further comprising:

   a cost calculation section configured to calculate a cost for the CU split structure for luminance and a cost for the CU split structure for chroma, wherein
   the control section determines, for the luminance, a CU split structure for luminance on a basis of the cost for the CU split structure for luminance, and
   inhibits, for the chroma, calculation of the CU split structure cost for chroma for the minimum CU split structure and determines the CU split structure for chroma on a basis of the cost for the CU split structure for chroma.

4. The image processing apparatus according to claim 1, further comprising:

a setting section configured to set syntax in which the minimum CU split structure is described, wherein
the control section determines, for the chroma, the CU split structure for chroma by excluding the minimum CU split structure on a basis of the syntax.

5. The image processing apparatus according to claim 4, further comprising:

   a transmission section configured to transmit the syntax and the encoded stream.

6. The image processing apparatus according to claim 4, wherein
   the syntax includes the SPS.

7. The image processing apparatus according to claim 1, wherein
   the minimum CU split structure is defined by a standard.

8. An image processing method performed by an image processing apparatus, comprising:

   excluding, when a CU split structure for luminance and a CU split structure for chroma are to be determined, for the chroma, a CU split structure that is a minimum size in at least one of a vertical direction or a horizontal direction to determine a CU split structure for the chroma; and
   encoding an image with the CU split structure for luminance and the CU split structure for chroma to generate an encoded stream.

9. A program for causing a computer to function as:

   a control section configured to exclude, when a CU split structure for luminance and a CU split structure for chroma are to be determined, for the chroma, a CU split structure that is a minimum size in at least one of a vertical direction or a horizontal direction to determine a CU split structure for the chroma; and
   an encoding section configured to encode an image with the CU split structure for luminance and the CU split structure for chroma to generate an encoded stream.

10. An image processing apparatus comprising:

   a control section configured to exclude, when a CU split structure for luminance and a CU split structure for chroma are to be determined, for the chroma, a CU split structure that is a minimum size in at least one of a vertical direction or a horizontal direction to determine a CU split structure for the chroma and determine a CU split structure for the luminance and a CU split structure for the chroma on a basis of an encoded stream generated by encoding an image with the CU split structure for luminance and the CU split structure for chroma; and

a decoding section configured to decode the encoded stream to generate the image on a basis of the CU split structure for luminance and the CU split structure for chroma.

11. An image processing method performed by an image processing apparatus, comprising:

excluding, when a CU split structure for luminance and a CU split structure for chroma are to be determined, for the chroma, a CU split structure that is a minimum size in at least one of a vertical direction or a horizontal direction to determine a CU split structure for the chroma and determine a CU split structure for the luminance and a CU split structure for the chroma on a basis of an encoded stream generated by encoding an image with the CU split structure for luminance and the CU split structure for chroma; and

decoding the encoded stream to generate the image on a basis of the CU split structure for luminance and the CU split structure for chroma.

12. A program for causing a computer to function as:

a control section configured to exclude, when a CU split structure for luminance and a CU split structure for chroma are to be determined, for the chroma, a CU split structure that is a minimum size in at least one of a vertical direction or a horizontal direction to determine a CU split structure for the chroma and determine a CU split structure for the luminance and a CU split structure for the chroma on a basis of an encoded stream generated by encoding an image with the CU split structure for luminance and the CU split structure for chroma; and

a decoding section configured to decode the encoded stream to generate the image on a basis of the CU split structure for luminance and the CU split structure for chroma.

FIG. 1

# FIG.2

FIG.3

INTRA PREDICTION USING
SURROUNDING PIXEL VALUES

4

4

Y

2

2

Cb/Cr

EP 3 863 286 A1

# FIG.4

INTRA PREDICTION USING
SURROUNDING PIXEL VALUES

LUMINANCE CHROMA
PREDICTION

4

4

Y

2

2

Cb/Cr

EP 3 863 286 A1

FIG.5

# FIG.6

EP 3 863 286 A1

# FIG.7

# FIG.8

```
START OF STREAM GENERATION PROCESS

         SET PARAMETER SET          S11

         ENCODING PROCESS           S12

      GENERATE ENCODED STREAM       S13

      TRANSMIT ENCODED STREAM       S14

              END
```

# FIG.9

START OF ENCODING PROCESS

A/D CONVERT — S31

PERFORM SORTING — S32

CU SPLIT STRUCTURE
DETERMINATION PROCESS — S33

PERFORM INTRA PREDICTION
PROCESS, PERFORM MOTION
PREDICTION AND COMPENSATION
PROCESS — S34

DETERMINE OPTIMUM PREDICTION
MODE BASED ON RD COST — S35

S36
IS OPTIMUM PREDICTION
MODE OPTIMUM INTER PREDICTION
MODE? — NO

YES

OUTPUT INFORMATION THAT
SPECIFIES INTER PREDICTION
MODE INFORMATION, MOTION
VECTOR, AND REFERENCE
IMAGE TO LOSSLESS ENCODING
SECTION — S37

OUTPUT INTRA PREDICTION
MODE INFORMATION TO
LOSSLESS ENCODING SECTION — S38

SUBTRACT PREDICTED IMAGE FROM IMAGE — S39

PERFORM ORTHOGONAL TRANSFORM PROCESS — S40

QUANTIZE — S41

①

# FIG.10

```
        ①
        │
        ▼
┌─────────────────────────────────────────────┐
│        DEQUANTIZE QUANTIZED VALUE            │ S42
└─────────────────────────────────────────────┘
        │
        ▼
┌─────────────────────────────────────────────┐
│     PERFORM INVERSE ORTHOGONAL TRANSFORM     │ S43
└─────────────────────────────────────────────┘
        │
        ▼
┌─────────────────────────────────────────────┐
│   ADD RESIDUAL INFORMATION AND PREDICTED IMAGE│ S44
└─────────────────────────────────────────────┘
        │
        ▼
┌─────────────────────────────────────────────┐
│       PERFORM DEBLOCK FILTER PROCESS         │ S45
└─────────────────────────────────────────────┘
        │
        ▼
┌─────────────────────────────────────────────┐
│     PERFORM ADAPTIVE OFFSET FILTER PROCESS   │ S46
└─────────────────────────────────────────────┘
        │
        ▼
┌─────────────────────────────────────────────┐
│     PERFORM ADAPTIVE LOOP FILTER PROCESS     │ S47
└─────────────────────────────────────────────┘
        │
        ▼
┌─────────────────────────────────────────────┐
│             ACCUMULATE IMAGE                 │ S48
└─────────────────────────────────────────────┘
        │
        ▼
┌─────────────────────────────────────────────┐
│ PERFORM LOSSLESS ENCODING ON ENCODING INFORMATION│ S49
└─────────────────────────────────────────────┘
        │
        ▼
┌─────────────────────────────────────────────┐
│ PERFORM LOSSLESS ENCODING ON QUANTIZED VALUE │ S50
└─────────────────────────────────────────────┘
        │
        ▼
┌─────────────────────────────────────────────┐
│          ACCUMULATE ENCODED DATA             │ S51
└─────────────────────────────────────────────┘
        │
        ▼
┌─────────────────────────────────────────────┐
│     CONTROL RATE OF QUANTIZATION OPERATION   │ S52
└─────────────────────────────────────────────┘
        │
        ▼
   ( RETURN )
```

# FIG.11

```
START OF CU SPLIT STRUCTURE DETERMINATION PROCESS
```

S121
SPLIT BY QT?
NO
YES

S122
IS CU FOR Y AFTER QT
SPLITTING OTHER THAN 8 × 8?
NO
YES

CALCULATE RD COST OF CU BY QT — S123

PERFORM CALCULATION PROCESS
OF RD COST OF CU BY NON SPLIT — S124

PERFORM CALCULATION PROCESS OF RD COST OF CU BY BT — S125

PERFORM CALCULATION PROCESS OF RD COST OF CU BY TT — S126

ENCODE USING SPLIT STRUCTURE WITH LOWEST RD COST — S127

RETURN

# FIG.12

```
( START OF CALCULATION PROCESS OF RD COST BY BT )
```

S141

IS CU FOR Y AFTER
HORIZONTAL BT SPLITTING OTHER
THAN 8 × 8?

NO

YES

SPLIT BY HORIZONTAL AND CALCULATE RD COST   S142

S143

IS CU FOR Y AFTER
VERTICAL BT SPLITTING
OTHER THAN 8 × 8?

NO

YES

SPLIT BY VERTICAL AND CALCULATE RD COST   S144

ADOPT AND USE SPLIT STRUCTURE WITH
LOWEST RD COST TO RD COST OF CU BY BT   S145

( RETURN )

# FIG.13

```
( START OF CALCULATION PROCESS OF RD COST BY TT )
                    |
                    v
         IS CU FOR Y AFTER              S161
   NO    HORIZONTAL TT SPLITTING
  <------ OTHER THAN 8 × 8?
   |                |
   |               YES
   |                v
   |    SPLIT BY HORIZONTAL AND CALCULATE RD COST    S162
   |                |
   |------------>   v
         IS CU FOR Y AFTER              S163
   NO    VERTICAL TT SPLITTING
  <------ OTHER THAN 8 × 8?
   |                |
   |               YES
   |                v
   |    SPLIT BY VERTICAL AND CALCULATE RD COST    S164
   |                |
   |------------>   v
       ADOPT AND USE SPLIT STRUCTURE WITH    S165
       LOWEST RD COST TO RD COST OF CU BY TT
                    |
                    v
              (  RETURN  )
```

# FIG.14

START OF CU SPLIT STRUCTURE DETERMINATION PROCESS

S181
SPLIT BY QT?

NO

YES

CALCULATE RD COST OF CU BY QT — S182

PERFORM CALCULATION PROCESS
OF RD COST OF CU BY NON SPLIT — S183

PERFORM CALCULATION PROCESS OF RD COST OF CU BY BT — S184

PERFORM CALCULATION PROCESS OF RD COST OF CU BY TT — S185

PERFORM PREDICTION MODE DECISION PROCESS OF CU — S186

ENCODE USING SPLIT STRUCTURE OF LOWEST RD COST — S187

RETURN



EP 3 863 286 A1

# FIG.15

```
┌──────────────────────────────────────────────────────┐
( START OF CALCULATION PROCESS OF RD COST BY BT )
└──────────────────────────────────────────────────────┘
```

| | |
|---|---|
| SPLIT BY HORIZONTAL AND CALCULATE RD COST | S201 |

| | |
|---|---|
| SPLIT BY VERTICAL AND CALCULATE RD COST | S202 |

| | |
|---|---|
| ADOPT AND USE SPLIT STRUCTURE WITH LOWEST RD COST TO RD COST OF CU BY BT | S203 |

( RETURN )

# FIG.16

( START OF CALCULATION PROCESS OF RD COST BY TT )

| | |
|---|---|
| SPLIT BY HORIZONTAL AND CALCULATE RD COST | S221 |

| | |
|---|---|
| SPLIT BY VERTICAL AND CALCULATE RD COST | S222 |

| | |
|---|---|
| ADOPT AND USE SPLIT STRUCTURE WITH LOWEST RD COST TO RD COST OF CU BY TT | S223 |

( RETURN )

43

# F I G . 1 7

```
( START OF PREDICTION MODE DECISION PROCESS OF CU )
                          │
                          ▼                      S241
        NO    ◇ IS CU EQUAL TO OR MORE ◇
       ←──────  THAN 4 × 4 FOR Cb/Cr?
      │                   │
      │                   │ YES
      │                   ▼
      │     ┌──────────────────────────────────────┐ S242
      │     │ CALCULATE RD COST USING INTRA PREDICTION │
      │     └──────────────────────────────────────┘
      └─────────────────→ │
                          ▼
            ┌──────────────────────────────────────┐ S243
            │ CALCULATE RD COST USING INTER PREDICTION │
            └──────────────────────────────────────┘
                          │
                          ▼
            ┌──────────────────────────────────────┐ S244
            │ ADOPT AND USE PREDICTION MODE WITH     │
            │ LOWEST RD COST TO RD COST OF CU        │
            └──────────────────────────────────────┘
                          │
                          ▼
                     ( RETURN )
```

# F I G . 1 8

```
                                        111
                                   ┌──────────┐
                                   │ CONTROL  │
                                   │ SECTION  │
                                   └──────────┘
                                        ▲
                                        │
                                        ▼
   112              113                      114
┌──────────┐    ┌──────────┐         ┌──────────┐
│RECEPTION │ →  │EXTRACTION│ →       │ DECODING │ →
│ SECTION  │    │ SECTION  │         │ SECTION  │
└──────────┘    └──────────┘         └──────────┘

                      110
```

EP 3 863 286 A1

# FIG.20

```
          ╭──────────────────────────────────────────╮
          │  START OF IMAGE GENERATION PROCESS  │
          ╰──────────────────────────────────────────╯
                             │
                             ▼
          ┌──────────────────────────────────────────┐
          │         ACCEPT ENCODED STREAM            │ S301
          └──────────────────────────────────────────┘
                             │
                             ▼
          ┌──────────────────────────────────────────┐
          │         EXTRACT ENCODED DATA             │ S302
          │         AND PARAMETER SET                │
          └──────────────────────────────────────────┘
                             │
                             ▼
          ┌┃─────────────────────────────────────────┐
          │┃         DECODING PROCESS                 │ S303
          └┃─────────────────────────────────────────┘
                             │
                             ▼
                     ╭───────────────╮
                     │      END      │
                     ╰───────────────╯
```

# FIG.21

```
           ( START OF DECODING PROCESS )
                          │
                          ▼
┌──────────────────────────────────────────┐
│         ACCUMULATE ENCODED DATA           │ S331
└──────────────────────────────────────────┘
                          │
                          ▼
┌──────────────────────────────────────────┐
│  PEFORM LOSSLESS DECODING ON ENCODED DATA │ S332
└──────────────────────────────────────────┘
                          │
                          ▼
┌──────────────────────────────────────────┐
│ PERFORM CU SPLIT STRUCTURE DETERMINATION  │ S333
│                PROCESS                    │
└──────────────────────────────────────────┘
                          │
                          ▼
┌──────────────────────────────────────────┐
│        DEQUANTIZE QUANTIZED VALUE         │ S334
└──────────────────────────────────────────┘
                          │
                          ▼
┌──────────────────────────────────────────┐
│    PERFORM REVERSE ORTHOGONAL TRANSFORM   │ S335
│                PROCESS                    │
└──────────────────────────────────────────┘
                          │
                          ▼
                                    S336
              ◇ IS INTER PREDICTION ◇
              MODE INFORMATION SUPPLIED?      NO
                          │ YES              │
                          ▼                  ▼
        ┌─────────────────────┐   ┌──────────────────────┐
        │  PERFORM MOTION     │S337│   PERFORM INTRA      │ S338
        │ COMPENSATION PROCESS│   │  PREDICTION PROCESS  │
        └─────────────────────┘   └──────────────────────┘
                          │                  │
                          ▼◄─────────────────┘
┌──────────────────────────────────────────┐
│       ADD RESIDUAL INFORMATION AND        │ S339
│            PREDICTED IMAGE                 │
└──────────────────────────────────────────┘
                          │
                          ▼
┌──────────────────────────────────────────┐
│      PERFORM DEBLOCK FILTER PROCESS       │ S340
└──────────────────────────────────────────┘
                          │
                          ▼
┌──────────────────────────────────────────┐
│   PERFORM ADAPTIVE OFFSET FILTER PROCESS  │ S341
└──────────────────────────────────────────┘
                          │
                          ▼
┌──────────────────────────────────────────┐
│    PERFORM ADAPTIVE LOOP FILTER PROCESS   │ S342
└──────────────────────────────────────────┘
                          │
                          ▼
┌──────────────────────────────────────────┐
│             ACCUMULATE IMAGE              │ S343
└──────────────────────────────────────────┘
                          │
                          ▼
┌──────────────────────────────────────────┐
│             PERFORM SORTING               │ S344
└──────────────────────────────────────────┘
                          │
                          ▼
┌──────────────────────────────────────────┐
│              D/A CONVERT                  │ S345
└──────────────────────────────────────────┘
                          │
                          ▼
                   (   RETURN   )
```

FIG.22

EP 3 863 286 A1

# FIG.23

START OF CU SPLIT STRUCTURE DETERMINATION PROCESS

S401
SPLIT BY QT?
NO
YES

CALCULATE RD COST OF CU BY QT — S402

PERFORM CALCULATION PROCESS
OF RD COST OF CU BY NON SPLIT — S403

PERFORM CALCULATION PROCESS OF RD COST OF CU BY BT — S404

PERFORM CALCULATION PROCESS OF RD COST OF CU BY TT — S405

ENCODE USING SPLIT STRUCTURE WITH LOWEST RD COST — S406

①

# FIG.24

①

↓

S407

NO ◁ SPLIT BY QT? ▷

│YES

↓

S408

NO ◁ IS CU FOR Cb/Cr AFTER QT SPLITTING OTHER THAN 2 × 2? ▷

│YES

↓

| CALCULATE RD COST OF CU BY QT | S409 |

↓

| PERFORM CALCULATION PROCESS OF RD COST OF CU BY NON SPLIT | S410 |

↓

| PERFORM CALCULATION PROCESS OF RD COST OF CU BY BT | S411 |

↓

| PERFORM CALCULATION PROCESS OF RD COST OF CU BY TT | S412 |

↓

| ENCODE USING SPLIT STRUCTURE WITH LOWEST RD COST | S413 |

↓

( RETURN )

# FIG.25

START OF CALCULATION PROCESS OF RD COST BY BT

S431
IS CU FOR Cb/Cr AFTER HORIZONTAL BT SPLITTING OTHER THAN 2 × 2?

NO

YES

SPLIT BY HORIZONTAL AND CALCULATE RD COST   S432

S433
IS CU FOR Cb/Cr AFTER VERTICAL BT SPLITTING OTHER THAN 2 × 2?

NO

YES

SPLIT BY VERTICAL AND CALCULATE RD COST   S434

ADOPT AND USE SPLIT STRUCTURE WITH LOWEST RD COST TO RD COST OF CU BY BT   S435

RETURN

# FIG.26

START OF CALCULATION PROCESS OF RD COST BY TT

S451
IS CU FOR Cb/Cr AFTER HORIZONTAL TT SPLITTING OTHER THAN 2 ×2?

NO

YES

SPLIT BY HORIZONTAL AND CALCULATE RD COST S452

S453
IS CU FOR Cb/Cr AFTER VERTICAL TT SPLITTING OTHER THAN 2 × 2?

NO

YES

SPLIT BY VERTICAL AND CALCULATE RD COST S454

ADOPT AND USE SPLIT STRUCTURE WITH LOWEST RD COST TO RD COST OF CU BY TT S455

RETURN

# FIG.27

qtbtt_dual_tree_intra_flag equal to 1 specifies that for I slices, each CTU is split into coding units with 64x64 luma samples using an implicit quadtree split and that these coding units are the root of two separate coding_quadtree syntax structure for luma and chroma.

log2_ctu_size_minus2 plus 2 specifies the luma coding tree block size of each CTU.

log2_min_qt_size_intra_slices_minus2 plus 2 specifies the minimum luma size of a leaf block resulting from quadtree splitting of a CTU in slices with slice_type equal to 2(I).The value of log2_min_qt_size_intra_slices_minus2 shall be in the range of 0 to CtbLog2SizeY-2, inclusive.

$$\text{MinQtLog2SizeIntraY} = \text{log2\_min\_qt\_size\_intra\_slices\_minus2} + 2 \qquad (7\text{-}22)$$

[Ed. (BB):The leaf of a quadtree can either be a coding unit or the root of a nested multi-type tree.]

log2_min_qt_size_inter_slices_minus2 plus 2 specifies the minimum luma size of a leaf block resulting from quadtree splitting of a CTU in slices with slice_type equal to 0(B) or 1(P).The value of log2_min_qt_size_inter_slices_minus2 shall be in the range of 0 to CtbLog2SizeY − 2, inclusive.

$$\text{MinQtLog2SizeInterY} = \text{log2\_min\_qt\_size\_inter\_slices\_minus2} + 2 \qquad (7\text{-}23)$$

max_mtt_hierarchy_depth_inter_slices specifies the maximum hierarchy depth for coding units resulting from multi-type tree splitting of a quadtree leaf in slices with slice_type equal to 0(B) or 1(P).The value of max_mtt_hierarchy_depth_inter_slices shall be in the range of 0 to CtbLog2SizeY − MinTbLog2SizeY, inclusive.

max_mtt_hierarchy_depth_intra_slices specifies the maximum hierarchy depth for coding units resulting from multi-type tree splitting of a quadtree leaf in slices with slice_type equal to 2(I).The value of max_mtt_hierarchy_depth_intra_slices shall be in the range of 0 to CtbLog2SizeY − MinTbLog2SizeY, inclusive.

# FIG.28

log2_min_qt_size_intra_slices_minus2:1

>= 8x8

max_mtt_hierarchy_depth_intra_slices:3

QT

BT/TT

# FIG.29

EP 3 863 286 A1

QT

BT/TT

log2_min_qt_size_intra_slices_luma_minus2
log2_min_qt_size_intra_slices_chroma_minus2

max_mtt_hierarchy_depth_intra_luma_slices
max_mtt_hierarchy_depth_intra_chroma_slices

# FIG.30

log2_min_qt_size_intra_slices_luma_minus2:0

log2_min_qt_size_intra_slices_chroma_minus2:0

>= 4x4

QT

BT/TT

max_mtt_hierarchy_depth_intra_luma_slices:3
max_mtt_hierarchy_depth_intra_chroma_slices:0

# FIG.31

log2_min_qt_size_intra_slices_luma_minus2
log2_min_qt_size_intra_slices_chroma_minus2

>= 8x8

QT

BT/TT

max_mtt_hierarchy_depth_intra_slices_luma
max_mtt_hierarchy_depth_intra_slices_chroma

min_cu_size_idc_intra_slice_luma
min_cu_size_idc_intra_slice_chroma

min_cu_size_idc_inter_slice_luma
min_cu_size_idc_inter_slice_chroma

| FOR CU FOR Cb/Cr, |
| --- |
| 0: SIZES TO 2 × 2 ARE USABLE |
| 1: SIZES TO 2 × 4 AND 4 × 2 ARE USABLE |
| 2: SIZES TO 4 × 4 ARE USABLE |

| FOR CU FOR Y, |
| --- |
| 0: SIZES TO 4 × 4 ARE USABLE |
| 1: SIZES TO 4 × 8 AND 8 × 4 ARE USABLE |
| 2: SIZES TO 8 × 8 ARE USABLE |

# FIG.32

211

CONTROL
SECTION

SETTING
SECTION

ENCODING
SECTION

TRANSMISSION
SECTION

212

13

14

210

# FIG.33

START OF STREAM GENERATION PROCESS

SET PARAMETER SET, SET
$\left( \begin{array}{c} \text{min\_cu\_size\_idc\_intra\_slice\_chroma,} \\ \text{min\_cu\_size\_idc\_inter\_slice\_chroma} \end{array} \right)$
TO SPS

S511

ENCODING PROCESS

S512

GENERATE ENCODED STREAM

S513

TRANSMIT ENCODED STREAM

S514

END

# FIG.34

START OF CU SPLIT STRUCTURE DETERMINATION PROCESS

S601

NO  SPLIT BY QT?

YES

CALCULATE RD COST OF CU BY QT   S602

PERFORM CALCULATION PROCESS
OF RD COST OF CU BY NON SPLIT   S603

PERFORM CALCULATION PROCESS OF RD COST OF CU BY BT   S604

PERFORM CALCULATION PROCESS OF RD COST OF CU BY TT   S605

ENCODE USING SPLIT STRUCTURE WITH LOWEST RD COST   S606

①

59

# FIG.35

①

S607
◇ SPLIT BY QT? ◇
NO ────────┐
│YES

S608
◇ IS CU FOR Cb/Cr AFTER SPLITTING OTHER THAN 2 × 2, 2 × 4, OR 4 × 2 IF min_cu_size_idc_intra_slice_chroma == 2? ◇
NO ←──────┤
│YES

S609
◇ IS CU FOR Cb/Cr AFTER SPLITTING OTHER THAN 2 × 2 IF min_cu_size_idc_intra_slice_chroma == 1? ◇
NO ←──────┤
│YES

| CALCULATE RD COST OF CU BY QT | S610 |

| PERFORM CALCULATION PROCESS OF RD COST OF CU BY NON SPLIT | S611 |

S612
◇ IS CU FOR Cb/Cr AFTER SPLITTING OTHER THAN 2 × 2, 2 × 4, OR 4 × 2 IF min_cu_size_idc_intra_slice_chroma == 2? ◇
NO ←──────┤
│YES

S613
◇ IS CU FOR Cb/Cr AFTER SPLITTING OTHER THAN 2 × 2 IF min_cu_size_idc_intra_slice_chroma == 1? ◇
NO ←──────┤
│YES

| PERFORM CALCULATION PROCESS OF RD COST OF CU BY BT | S614 |

②

# FIG.36

②

IS CU FOR Cb/Cr AFTER
SPLITTING OTHER THAN 2 × 2, 2 × 4,
OR 4 × 2 IF
min_cu_size_idc_intra_slice_
chroma == 2?    S615

NO

YES

IS CU FOR Cb/Cr AFTER
SPLITTING OTHER THAN 2 × 2
IF min_cu_size_idc_intra_slice_
chroma == 1?    S616

NO

YES

PERFORM CALCULATION PROCESS
OF RD COST OF CU BY TT    S617

ENCODE USING SPLIT
STRUCTURE WITH LOWEST RD COST    S618

RETURN

# FIG.37

START OF CU SPLIT STRUCTURE DETERMINATION PROCESS

S651

NO — SPLIT BY QT?

YES

CALCULATE RD COST OF CU BY QT — S652

PERFORM CALCULATION PROCESS OF RD COST OF CU BY NON SPLIT — S653

PERFORM CALCULATION PROCESS OF RD COST OF CU BY BT — S654

PERFORM CALCULATION PROCESS OF RD COST OF CU BY TT — S655

ENCODE USING SPLIT STRUCTURE OF LOWEST RD COST — S656

①

# FIG.38

①

S657

**SPLIT BY QT?**

NO ← │YES

S658

**IS CU FOR Cb/Cr AFTER SPLITTING OTHER THAN 2 × 2, 2 × 4, OR 4 × 2 IF min_cu_size_idc_inter_slice_chroma == 2?**

NO ← │YES

S659

**IS CU FOR Cb/Cr AFTER SPLITTING OTHER THAN 2 × 2 IF min_cu_size_idc_inter_slice_chroma == 1?**

NO ← │YES

CALCULATE RD COST OF CU BY QT │ S660

PERFORM CALCULATION PROCESS OF RD COST OF CU BY NON SPLIT │ S661

S662

**IS CU FOR Cb/Cr AFTER SPLITTING OTHER THAN 2 × 2, 2 × 4, OR 4 × 2 IF min_cu_size_idc_inter_slice_chroma == 2?**

NO ← │YES

S663

**IS CU FOR Cb/Cr AFTER SPLITTING OTHER THAN 2 × 2 IF min_cu_size_idc_inter_slice_chroma == 1?**

NO ← │YES

PERFORM CALCULATION PROCESS OF RD COST OF CU BY BT │ S664

②

# FIG.39

(2)
↓

S665

IS CU FOR Cb/Cr AFTER SPLITTING OTHER THAN 2 × 2, 2 × 4, OR 4 × 2 IF min_cu_size_idc_inter_slice_chroma == 2?

NO

↓YES

S666

IS CU FOR Cb/Cr AFTER SPLITTING OTHER THAN 2 × 2 IF min_cu_size_idc_inter_slice_chroma == 1?

NO

↓YES

| PERFORM CALCULATION PROCESS OF RD COST OF CU BY TT | S667 |

↓

| ENCODE USING SPLIT STRUCTURE WITH LOWEST RD COST | S668 |

↓

( RETURN )

# FIG.40

411

CONTROL
SECTION

112
RECEPTION
SECTION

113
EXTRACTION
SECTION

114
DECODING
SECTION

410

# FIG.41

( START OF IMAGE GENERATION PROCESS )

| RECEIVE ENCODED STREAM | S701 |

| EXTRACT ENCODED DATA AND PARAMETER SET | S702 |

| EXTRACT min_cu_size_idc_intra_slice_chroma, min_cu_size_idc_inter_slice_chroma FROM SPS | S703 |

| DECODING PROCESS | S704 |

( END )

# FIG.42

START OF CU SPLIT STRUCTURE DETERMINATION PROCESS

NO ← **SPLIT BY QT?** S711

↓ YES

NO ← **IS CU FOR Cb/Cr AFTER SPLITTING OTHER THAN 2 × 2, 2 × 4, OR 4 × 2 IF min_cu_size_idc_intra_slice _chroma == 2?** S712

↓ YES

NO ← **IS CU FOR Cb/Cr AFTER SPLITTING OTHER THAN 2 × 2 IF min_cu_size_idc_intra_slice _chroma == 1?** S713

↓ YES

INTERPRET FLAG OF F1 AS 0 WITHOUT READING OUT S715

READ OUT FLAG OF F1 S714

NO ← **flag(F1)==0?** S716

↓ YES

NO ← **IS CU FOR Cb/Cr AFTER SPLITTING OTHER THAN 2 × 2, 2 × 4, OR 4 × 2 IF min_cu_size_idc_intra_ slice _chroma == 2?** S717

↓ YES

NO ← **IS CU FOR Cb/Cr AFTER SPLITTING OTHER THAN 2 × 2 IF min_cu_size_idc_intra_slice_ chroma == 1?** S718

↓ YES

INTERPRET FLAG OF F2 AS 0 WITHOUT READING OUT S720

READ OUT FLAG OF F2 S719

NO ← **flag(F2)==1?** S721

↓ YES

READ OUT FLAG OF F3 S722

RETURN

F I G . 4 3

# FIG.44

CPU 501　ROM 502　RAM 503

504

INPUT/OUTPUT INTERFACE ~505

| INPUTTING SECTION | OUTPUTTING SECTION | STORAGE SECTION | COMMUNICATION SECTION | DRIVE ~510 |

506　507　508　509

REMOVABLE MEDIUM ~511

EP 3 863 286 A1

**EP 3 863 286 A1**

| INTERNATIONAL SEARCH REPORT | International application No. |
|---|---|
| | PCT/JP2019/036467 |

**A. CLASSIFICATION OF SUBJECT MATTER**
Int.Cl. H04N19/119(2014.01)i, H04N19/157(2014.01)i, H04N19/186(2014.01)i, H04N19/70(2014.01)i

According to International Patent Classification (IPC) or to both national classification and IPC

**B. FIELDS SEARCHED**

Minimum documentation searched (classification system followed by classification symbols)
Int.Cl. H04N19/00-19/98

Documentation searched other than minimum documentation to the extent that such documents are included in the fields searched
Published examined utility model applications of Japan 1922-1996
Published unexamined utility model applications of Japan 1971-2019
Registered utility model specifications of Japan 1996-2019
Published registered utility model applications of Japan 1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | ROSEWARNE, C., DORRELL, A., "CE1-related: Chroma block coding and size restriction", Joint Video Experts Team (JVET) of ITU-T SG 16 WP 3 and ISO/IEC JTC 1/SC 29/WG 11, JVET-L0129-v1 (version 1), 12th Meeting: Macao, CN, September 2018, pp. 1-3 | 1-2, 7-12 |
| Y | | 3 |
| X | CHOI, Jangwon et al., "CE1-related: Minimum block size restriction", Joint Video Experts Team (JVET) of ITU-T SG 16 WP 3 and ISO/IEC JTC 1/SC 29/WG 11, JVET-L0137-v1 (version 3), 12th Meeting: Macao, CN, September 2018, pp. 1-6 | 1, 4-12 |
| Y | | 3 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 November 2019 (15.11.2019) | 03 December 2019 (03.12.2019) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

69

**INTERNATIONAL SEARCH REPORT**

| International application No. |
| --- |
| PCT/JP2019/036467 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | CHEN, Jianle et al., "Algorithm Description of Joint Exploration Test Model 7 (JEM 7)", Joint Video Exploration Team (JVET) of ITU-T SG 16 WP 3 and ISO/IEC JTC 1/SC 29/WG 11, JVET-G1001-v1 (version 1), 7th Meeting: Torino, IT, August 2017, pp. i-iv, 1-6 | 3 |
| A | | 1-2, 4-12 |
| A | WO 2018/110600 A1 (SHARP CORP.) 21 June 2018, abstract & AU 2017377490 A1 & CN 110178372 A | 1-12 |
| A | BROSS, Benjamin, CHEN, Jianle and LIU, Shan, "Versatile Video Coding (Draft 2)", Joint Video Experts Team (JVET) of ITU-T SG 16 WP 3 and ISO/IEC JTC 1/SC 29/WG 11, JVET-K1001-v6 (version 6), 11th Meeting: Ljubljana, SI, September 2018, pp. i-ii, 28-31, 45-49 | 1-12 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BENJAMIN BROSS ; JIANLE CHEN ; SHAN LIU.** Versatile Video Coding (Draft 2). *JVET-K1001-v5, joint Video Experts Team (JVET) of ITU-T SG16 WP3 and ISO/IEC JTC1/SC29/WG11 11th Meeting,* 10 July 2018